# FASCICULE DE BREVET EUROPEEN

(11) **EP 4 267 366 B1**
(45) Date de publication et mention de la délivrance du brevet: **04.12.2024**
(21) Numéro de dépôt: 21810661.5
(22) Date de dépôt: 22.10.2021
(51) Int. Cl.: B29C 48/07, B29C 48/12, B29C 48/21, B29C 48/35, B29C 48/49, B29C 48/25, B29C 48/265

(54) **PROCÉDÉ DE FERMETURE EN DEUX TEMPS D'UNE INSTALLATION D'EXTRUSION À ROULEAU PERMETTANT UN AJUSTEMENT PRÉCIS DE L'ENTREFER DE GÉNÉRATION D'UN PROFILÉ**
VERFAHREN ZUM ZWEISTUFIGEN SCHLIESSEN EINER WALZENEXTRUSIONSANLAGE ZUR GENAUEN EINSTELLUNG DES LUFTSPALTS ZUR ERZEUGUNG EINES PROFILS
METHOD FOR TWO-STAGE CLOSURE OF A ROLLER EXTRUSION FACILITY FOR PRECISE ADJUSTMENT OF THE AIR GAP FOR GENERATING A PROFILED SECTION

(30) Priorité: 23.12.2020 FR 2014010
(43) Date de publication de la demande: 01.11.2023
(73) Titulaire: Compagnie Générale des Etablissements Michelin, 63000 Clermont-Ferrand (FR)
(72) Inventeur: TORRES-CASTELLANO, Miguel, 63040 Clermont-Ferrand CEDEX 9 (FR)
(74) Mandataire: M.F.P. Michelin
(86) Numéro de dépôt international: PCT/FR2021/051854
(87) Numéro de publication internationale: WO 2022/136745

(56) Documents cités:
- WO-A1-2020/058625
- US-B1- 6 695 606

## Description

La présente invention concerne le domaine général des machines d'extrusion destinées à fabriquer un profilé à partir d'un ou plusieurs matériaux, tels que des mélanges à base de caoutchouc, qui sont extrudés puis conformés à travers une filière.

L'invention concerne plus particulièrement une installation et un procédé d'extrusion permettant de générer un profilé dont la section est définie par un entrefer qui est délimité d'une part par la surface externe d'un rouleau monté en rotation sur un palier et d'autre part par une filière de forme sensiblement conjuguée à celle du rouleau.

L'invention trouve notamment à s'appliquer à la fabrication de profilés destinés à former des éléments constitutifs de bandages pneumatiques, tels que des bandes de roulement ou des flancs.

Comme divulgué dans WO 2020/058625 A1 et US 6 695 606 B1, il existe déjà de nombreuses architectures d'installations d'extrusion, et notamment des architectures au sein desquelles un module d'outillage, alimenté par une ou plusieurs extrudeuses et portant une filière, est amené à proximité de la surface externe d'un rouleau monté en rotation, de sorte à définir, entre ladite filière et ladite surface externe du rouleau, un entrefer dont la hauteur correspond à l'épaisseur du profilé que l'on souhaite produire. Au fur et à mesure que le profilé est généré dans l'entrefer, ledit profilé est avantageusement entraîné par le rouleau, sur lequel ledit profilé refroidit progressivement et se stabilise dimensionnellement.

Toutefois, en raison notamment des pressions élevées nécessaires à l'acheminement et à la mise en forme des matériaux constitutifs du profilé à travers la filière et l'entrefer, il est parfois difficile de garantir une parfaite étanchéité de l'installation d'extrusion, ainsi que la précision et la régularité dans le temps de la hauteur de l'entrefer, et donc de l'épaisseur du profilé qui en résulte, et ce en particulier lorsque l'on souhaite réaliser un profilé de faible épaisseur à travers un entrefer particulièrement fin.

En outre, les installations d'extrusion connues sont souvent encombrantes, et parfois difficiles à reconfigurer et à nettoyer lors des changements de production, qui nécessitent de remplacer l'outillage pour l'adapter à l'agencement et aux dimensions du nouveau profilé à produire.

Les objets assignés à l'invention visent par conséquent à remédier aux inconvénients susmentionnés et proposer un nouveau procédé ainsi qu'une nouvelle installation d'extrusion qui permettent un ajustement précis et robuste de l'entrefer d'extrusion, peu sensible aux déformations sous pression.

Les objets assignés à l'invention visent également à proposer une installation d'extrusion qui offre un accès facile à ses organes constitutifs en vue des opérations de reconfiguration ou de remplacement requises par des changements de production.

Les objets assignés à l'invention sont atteints au moyen d'un procédé de mise en oeuvre d'une installation d'extrusion destinée à réaliser un profilé, ladite installation d'extrusion comprenant un rouleau qui est soutenu en rotation par au moins un premier palier, un module d'outillage qui comprend une filière destinée à venir coopérer avec le rouleau pour former un entrefer permettant de conformer le profilé, et au moins un premier module de tête pourvu d'une première extrudeuse qui est destinée à fournir au module d'outillage un premier matériau constitutif du profilé, ledit procédé étant caractérisé en ce qu'il comporte :
- une étape (s1) d'engagement, au cours de laquelle on déplace le module d'outillage par rapport au premier module de tête et au premier palier selon une première direction dite « direction d'engagement », de sorte à amener ledit module d'outillage en appui contre le premier palier et à soumettre ledit module d'outillage à un effort de précharge qui est orienté selon la direction d'engagement et à l'encontre du premier palier, de manière à placer ledit module d'outillage par rapport au rouleau dans une configuration dite « configuration d'engagement » qui définit l'entrefer souhaité pour réaliser le profilé,
- puis une étape (s2) de serrage, au cours de laquelle, tandis que ledit module d'outillage se trouve dans sa configuration d'engagement, précontraint contre le premier palier par l'effort de précharge, on vient pincer ledit module d'outillage entre le premier module de tête pourvu de la première extrudeuse et un second module de tête distinct du premier module de tête, en rapprochant l'un de l'autre ledit premier module de tête et le second module de tête, de part et d'autre du module d'outillage, selon une seconde direction dite « direction d'accouplement » qui est transverse à la direction d'engagement, de préférence perpendiculaire à ladite direction d'engagement, de sorte à mettre en communication la première extrudeuse avec le module d'outillage, et en soumettant lesdits premier et second modules de tête à un effort de serrage qui est orienté selon ladite direction d'accouplement, de sorte à maintenir le module d'outillage par compression entre le premier et le second module de tête.

Les objets assignés à l'invention sont également atteints au moyen d'une installation correspondante, ladite installation comprenant :
- un rouleau qui est soutenu en rotation par au moins un premier palier,
- un module d'outillage qui comprend une filière destinée à venir coopérer avec le rouleau pour former un entrefer permettant de conformer le profilé,
- un premier module de tête qui porte au moins une première extrudeuse destinée à fournir un premier matériau constitutif du profilé, ladite installation étant caractérisée en ce qu'elle comprend :
- un dispositif d'engagement, qui permet de déplacer le module d'outillage par rapport au premier palier et par rapport au premier module de tête selon une première direction, de préférence verticale, dite « direction d'engagement », de sorte à pouvoir alternativement soit rapprocher le module d'outillage du rouleau jusqu'à amener ledit module d'outillage en appui contre une butée d'accostage qui est solidaire du premier palier, et soumettre ledit module d'outillage à un effort de précharge qui est orienté selon la direction d'engagement et à l'encontre de ladite butée d'accostage et du premier palier, de manière à placer ledit module d'outillage par rapport au rouleau dans une configuration dite « configuration d'engagement » qui définit l'entrefer souhaité pour réaliser le profilé, de préférence un entrefer dont la hauteur considérée radialement par rapport au rouleau est comprise entre 0,1 mm et 150 mm, soit au contraire éloigner ledit module d'outillage du rouleau et de la butée d'accostage afin de placer ledit module d'outillage dans une configuration de dégagement, distincte de la configuration d'engagement,
- un second module de tête,
- un dispositif d' accouplement qui confère au premier module de tête et/ou au second module de tête une mobilité propre par rapport au premier palier et par rapport au module d'outillage selon une seconde direction dite « direction d'accouplement » qui est orientée transversalement à la direction d'engagement, de préférence perpendiculairement à ladite direction d'engagement, si bien que ledit dispositif d'accouplement permet alternativement soit de rapprocher le premier module de tête et le second module de tête l'un de l'autre selon ladite direction d'accouplement, de part et d'autre du module d'outillage, lorsque ledit module d'outillage se trouve en configuration d'engagement, de sorte à mettre en communication la première extrudeuse avec le module d'outillage et à serrer ledit module d'outillage entre le premier module de tête et le second module de tête, dans une configuration dite « configuration de fermeture », soit au contraire d'éloigner le premier module de tête du second module de tête selon la direction d'accouplement, de sorte à dégager la première extrudeuse du module d'outillage et à libérer le module d'outillage pour autoriser un déplacement dudit module d'outillage par rapport au palier et par rapport aux premier et second modules de tête selon la direction d'engagement.

Avantageusement, la séquence de fermeture proposée par l'invention, qui inclut une mise en butée et en précharge du module d'outillage contre le premier palier, permet de supprimer d'éventuels jeux d'assemblage et de positionner très précisément et de façon reproductible la filière par rapport au rouleau, et ainsi de définir précisément l'entrefer.

En outre, l'effort de précharge qui précontraint la filière à l'encontre du rouleau selon la direction d'engagement permet de compenser en partie, voire en totalité, les effets de la pression du matériau qui se manifestent lorsque l'installation est en service et que la ou les extrudeuses débitent le matériau à travers le module d'outillage et l'entrefer. En effet, la pression qui règne dans l'entrefer lorsque le matériau est extrudé à travers ledit entrefer tend à repousser la filière par rapport au rouleau, c'est-à-dire tend à forcer le recul du module d'outillage selon la direction d'engagement par rapport au rouleau, ainsi qu'un certain tassement dudit module d'outillage par compression selon ladite direction d'engagement, et par conséquent tend à augmenter la hauteur de l'entrefer qui définit l'épaisseur du profilé. Ici, grâce à l'invention qui prévoit une précharge qui tend à forcer un rapprochement du module d'outillage vers le rouleau, et plus particulièrement de la filière vers la surface dudit rouleau, et qui produit donc un effet antagoniste aux effets de la pression du matériau extrudé, la hauteur de l'entrefer est conservée de façon précise et stable, sensiblement à la valeur nominale souhaitée, pendant toute la durée du processus d'extrusion, ce qui évite toute dérive dans l'épaisseur du profilé produit.

Avantageusement, le maintien du module d'outillage dans la position adéquate et préchargée qui correspond à la configuration d'engagement est renforcé par le pincement latéral qu'exercent le premier module de tête et le second module de tête sur le module d'outillage. En effet, en prenant ainsi le module d'outillage en étau, lesdits premier et second modules de tête contribuent à empêcher fermement, par friction, ledit module d'outillage, et donc la filière, de reculer par rapport au rouleau, selon la direction d'engagement, vers la configuration de dégagement.

Le maintien du module d'outillage en configuration de fermeture est donc particulièrement robuste et stable, et ce d'autant plus que le serrage du module d'outillage entre les premier et second modules de tête peut s'opérer dans une région dudit module d'outillage qui est particulièrement proche de l'entrefer, et proche du premier palier.

En effet, d'un point de vue mécanique, on peut représenter schématiquement la chaîne de transmission d'efforts qui assure le maintien en position de la filière par rapport au premier palier et au rouleau par une ligne virtuelle qui se referme sur elle-même en passant successivement à travers le premier palier, puis à travers le premier module de tête (respectivement à travers le second module de tête), et enfin à travers le module d'outillage qui porte la filière. Les appuis par lesquels ces différents éléments entrent respectivement au contact les uns des autres forment les points de passages de ladite chaîne de transmission d'efforts.

Or, du fait que le serrage du module d'outillage par les premier et second modules de tête s'opère à proximité de l'entrefer, ladite chaîne de transmission d'efforts est particulièrement courte, et ne s'applique donc qu'à des épaisseurs relativement faibles du ou des matériaux solides, typiquement des alliages d'aciers, qui sont constitutifs du premier palier, des modules de tête, et du module d'outillage.

De ce fait, l'installation, une fois placée en configuration de fermeture, est peu sensible aux déformations liées à l'élasticité intrinsèque, même minime, dudit ou desdits matériaux solides qui sont constitutifs du premier palier, des modules de tête, et du module d'outillage.

En effet, pour un matériau solide qui possède un module d'élasticité donné, notamment un module d'Young en compression donné, alors plus la longueur initiale de la portion dudit matériau solide à travers laquelle passe la chaîne de transmission d'efforts considérée est courte, plus la raideur apparente de ladite portion dudit matériau solide est élevée (on assimile le comportement en déformation élastique du bloc de matériaux solide traversé à un comportement de type ressort), et donc plus la rigidité globale de la liaison d'assemblage correspondante est élevée.

Ainsi, plus la zone d'application de l'effort de serrage exercé sur le module d'outillage sera proche de l'entrefer, plus le recul de la filière sous l'effet de la pression du matériau extrudé sera faible.

De surcroît, du fait que l'installation selon l'invention utilise une direction d'engagement et une direction d'accouplement qui sont croisées, ladite installation permet avantageusement de dissocier les mouvements du module d'outillage des mouvements propres des modules de tête et des extrudeuses portées par lesdits modules de tête, ce qui permet notamment de réduire l'encombrement global de l'installation, en répartissant efficacement les modules de tête et leurs extrudeuses par rapport au module d'outillage et par rapport au rouleau, tout en facilitant l'accès de l'opérateur aux extrudeuses pour les opérations de nettoyage et/ou pour les opérations de remplacement d'outillage.

On notera à ce titre que l'installation conforme à l'invention permet avantageusement de remplacer en un seul bloc le module d'outillage, en extrayant un premier module d'outillage complet, qui se trouvait initialement en place, et en lui substituant un autre module d'outillage complet, en fonction du changement de production requis.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

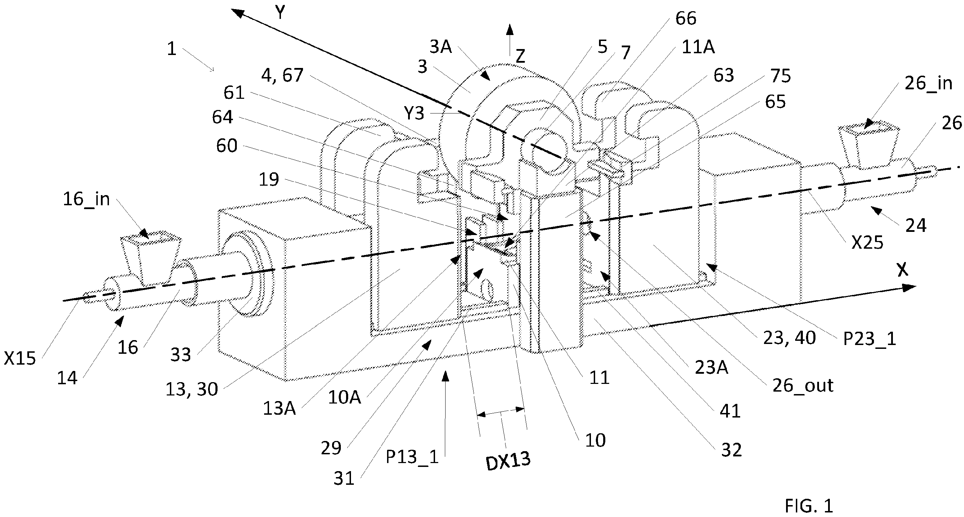

La figure 1 illustre, selon une vue en perspective, un exemple d'installation selon l'invention, dans une configuration d'ouverture dans laquelle les premier et second modules de tête, qui portent ici chacun une extrudeuse, sont reculés à distance du premier palier et de l'emplacement prévu pour le module d'outillage.

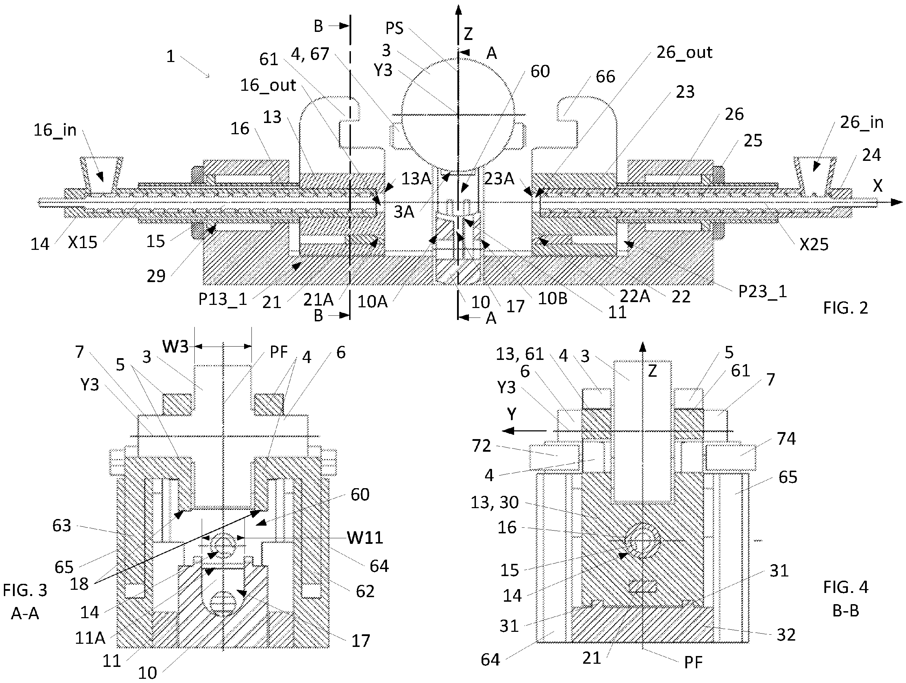

La figure 2 illustre l'installation de la figure 1, dans la configuration d'ouverture, selon une vue en coupe dans un plan dit « plan frontal » qui contient la direction d'engagement et la direction d'accouplement, et qui est ici normal à l'axe de rotation du rouleau.

La figure 3 illustre l'installation des figures 1 et 2 selon une vue en coupe dans un plan dit « plan sagittal », qui est ici normal à la direction d'accouplement et qui contient la direction d'engagement ainsi que l'axe de rotation du rouleau ; ledit plan sagittal divise l'installation en deux parties sensiblement voire exactement symétriques l'une de l'autre.

La figure 4 illustre l'installation des figures 1 et 2 selon une vue en coupe dans un plan de coupe secondaire qui est parallèle au plan sagittal et qui passe ici par la portion pleine de la branche supérieure d'un crochet de retenue qui est associé à la première tête et agencé pour venir engager le premier palier afin de retenir ledit premier palier à l'encontre de l'effort de précharge.

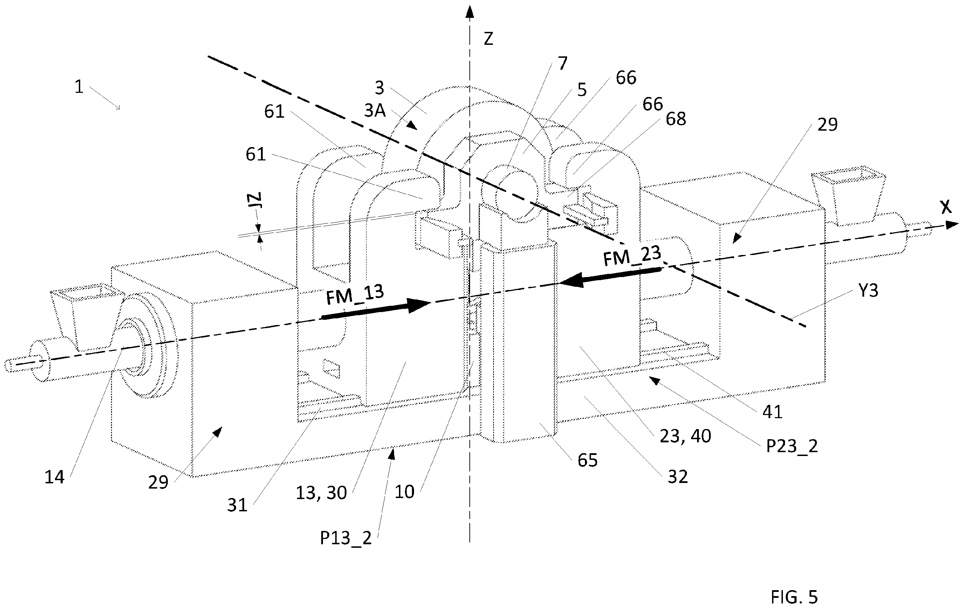

La figure 5 illustre, selon une vue en perspective, l'installation des figures 1 à 4 dans une configuration de pré-positionnement, selon laquelle les premier et second modules de tête ont été rapprochés l'un de l'autre, de part et d'autre de l'emplacement destiné au bloc d'outillage, de sorte à définir entre eux un passage pour le module d'outillage, et dans laquelle les crochets de retenue respectif desdits premier et second module de tête sont venus se placer en vis-à-vis du premier palier, ici au-dessus des extensions latérales de la semelle dudit premier palier, pour former des butées destinées à limiter le déplacement dudit premier palier dans la direction d'engagement.

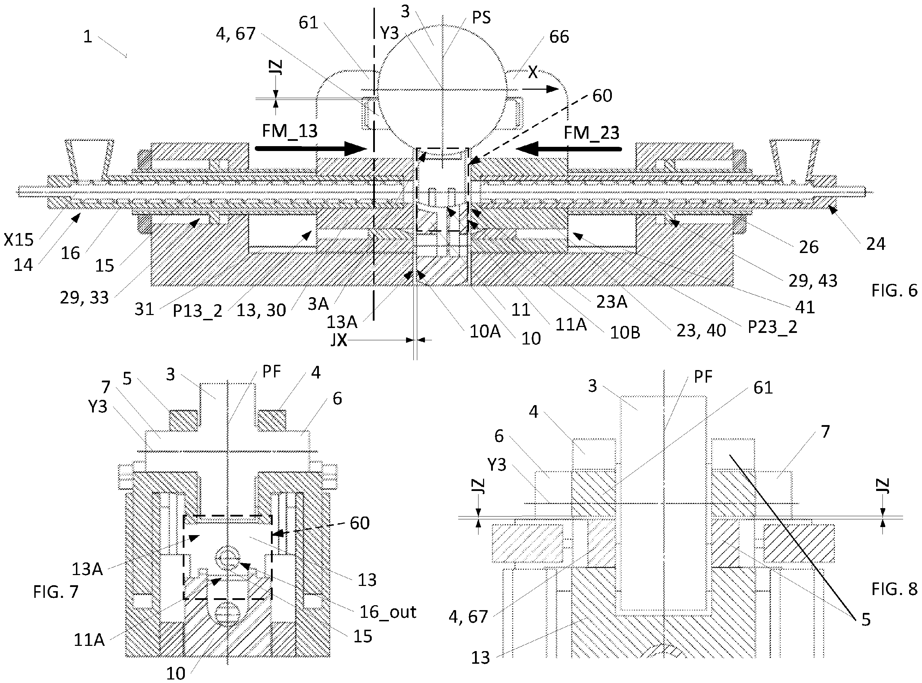

La figure 6 illustre, selon une vue en coupe dans le plan frontal, l'installation de la figure 5 en configuration de pré-positionnement.

La figure 7 illustre l'installation des figures 5 et 6 selon une vue en coupe dans le plan sagittal.

La figure 8 illustre l'installation des figures 5 et 6 selon une vue de détail en coupe dans le plan de coupe secondaire, faisant apparaître le jeu dit « jeu pour précharge » qui sépare initialement, selon la direction d'engagement, le premier palier des butées formées par les crochets de retenue qui équipent les premier et second modules de tête.

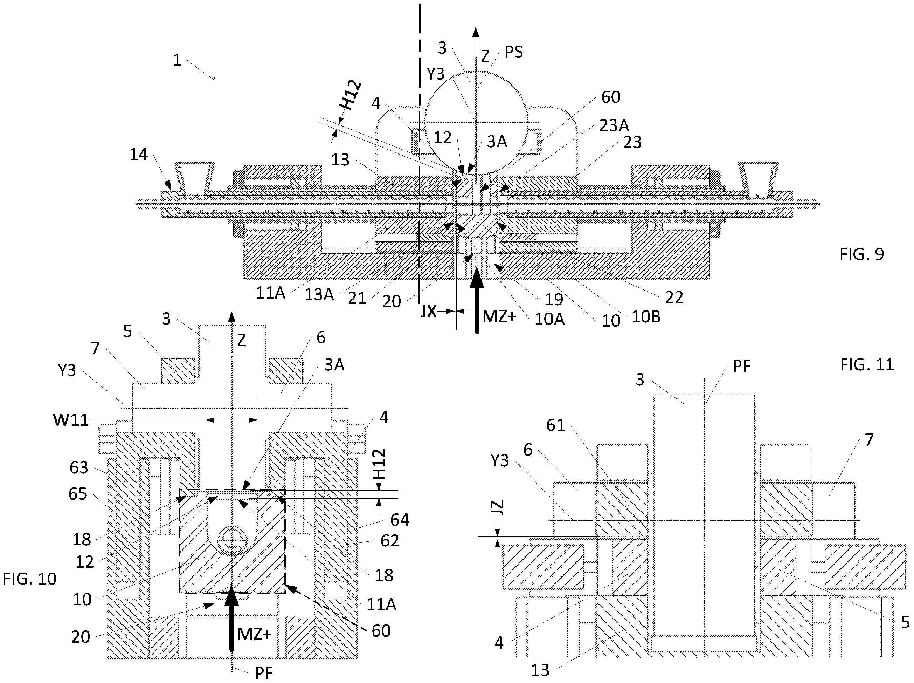

La figure 9 illustre, en coupe dans le plan frontal, l'installation des figures précédentes au terme d'une phase d'approche selon laquelle le module d'outillage a été amené, par déplacement selon la direction d'engagement, dans l'espace compris entre les premier et second modules de tête, au contact du premier palier, de sorte à placer la filière à une distance du rouleau qui est appropriée à la hauteur souhaitée pour l'entrefer.

La figure 10 illustre l'installation de la figure 9 selon une vue en coupe dans le plan sagittal.

La figure 11 illustre l'installation des figures 9 et 10 selon une vue de détail dans le plan de coupe secondaire, sur laquelle on constate d'une part que le bloc d'outillage est entré au contact d'une butée d'accostage qui est solidaire du premier palier, de sorte à prendre appui sur ledit premier palier, et d'autre part que le jeu pour précharge qui sépare la semelle du premier palier du crochet de retenue est encore présent, de sorte à former une réserve de course dans la direction d'engagement pour permettre un léger déplacement additionnel du module d'outillage et du premier palier dans leur ensemble, lors d'une phase ultérieure de précharge.

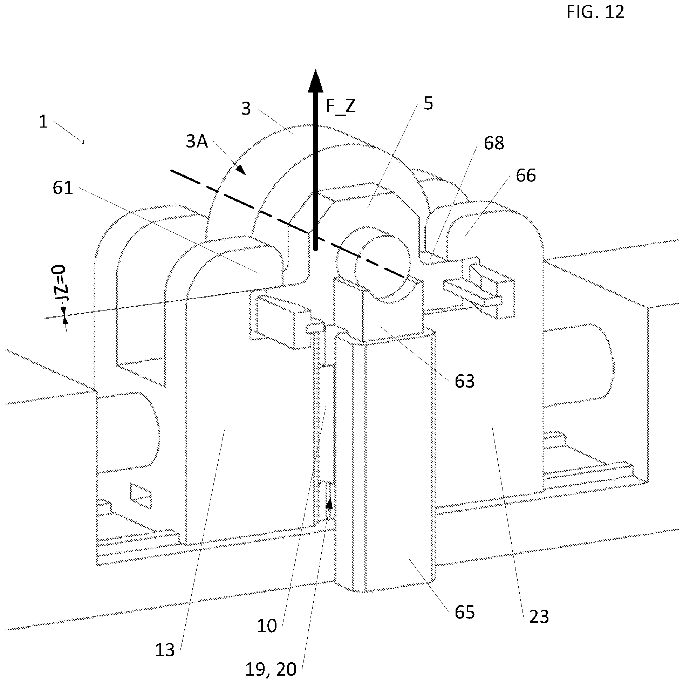

La figure 12 est une vue partielle en perspective de l'installation des figures précédentes, dans une configuration d'engagement, qui résulte d'une phase de précharge ayant suivi la phase d'approche, et selon laquelle le module d'outillage, positionné à une distance du rouleau qui correspond à l'entrefer souhaité, exerce un effort de précharge à l'encontre du premier palier, dans la direction d'engagement, plaquant ainsi la semelle dudit premier palier en butée contre les crochets de retenue qui équipent les premier et second module de tête, eux-mêmes toujours en configuration de pré-positionnement.

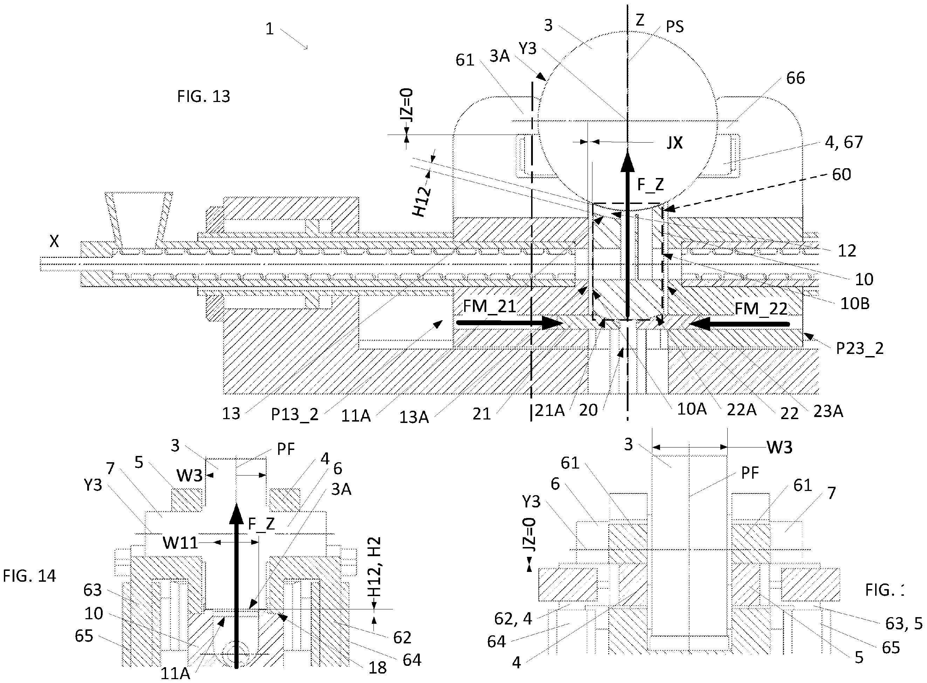

La figure 13 est une vue partielle de l'installation de la figure 12 en configuration d'engagement, selon une vue en coupe dans le plan frontal qui fait apparaître l'action d'actionneurs de précharge présentant des rampes qui viennent solliciter le module d'outillage, et, par l'intermédiaire dudit module d'outillage, le premier palier, pour amener le premier palier en butée contre les crochets de retenue et générer l'effort de précharge souhaité dans la direction d'engagement. Ici, lesdits actionneurs de précharge agissent dans des zones d'accroche qui sont situées à une extrémité dudit module d'outillage qui se trouve à l'opposé de l'extrémité qui porte la filière et qui coopère avec le rouleau pour former l'entrefer.

La figure 14 est une vue de détail de l'installation des figures 12 et 13, en coupe dans le plan sagittal, qui fait apparaître le soulèvement du premier palier sous l'effet de la poussée exercée par le module d'outillage mû par les actionneurs de précharge lors de la phase de précharge, ainsi que le guidage en translation selon la direction d'engagement, ici verticale, dudit premier palier le long de deux poteaux prévus à cet effet.

La figure 15 est une vue partielle de l'installation des figures 12 à 14, en coupe dans le plan de coupe secondaire, et qui fait apparaître le rattrapage du jeu pour précharge obtenu par l'action des actionneurs de précharge qui poussent et maintiennent le module d'outillage, et donc le premier palier entraîné par ledit module d'outillage, à l'encontre des crochets de retenue, dans la direction d'engagement.

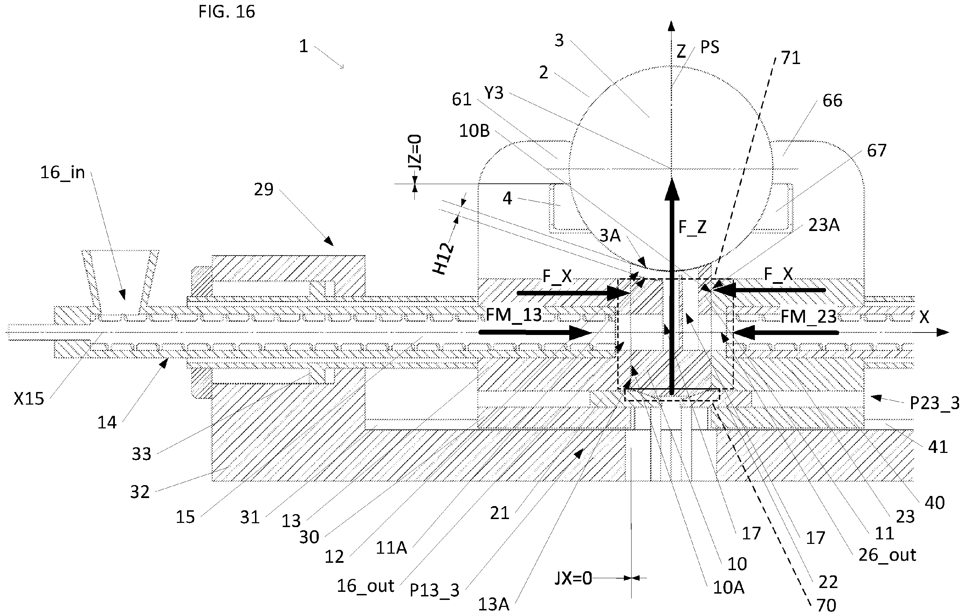

La figure 16 illustre, selon une vue partielle en coupe dans le plan frontal, l'installation des revendications précédentes dans une configuration de fermeture selon laquelle le premier module de tête et le second module de tête ont été amenés en appui contre le module d'outillage, en opposition l'un de l'autre de part et d'autre dudit module d'outillage, et exercent ainsi à l'encontre dudit module d'outillage un effort de serrage afin de maintenir par pincement ledit module d'outillage dans sa configuration d'engagement, et d'assurer une communication étanche entre les extrudeuses et ledit module d'outillage, de sorte à pouvoir acheminer les matériaux extrudés depuis les extrudeuses jusqu'à la filière et à l'entrefer, à travers ledit module d'outillage, pour produire le profilé souhaité.

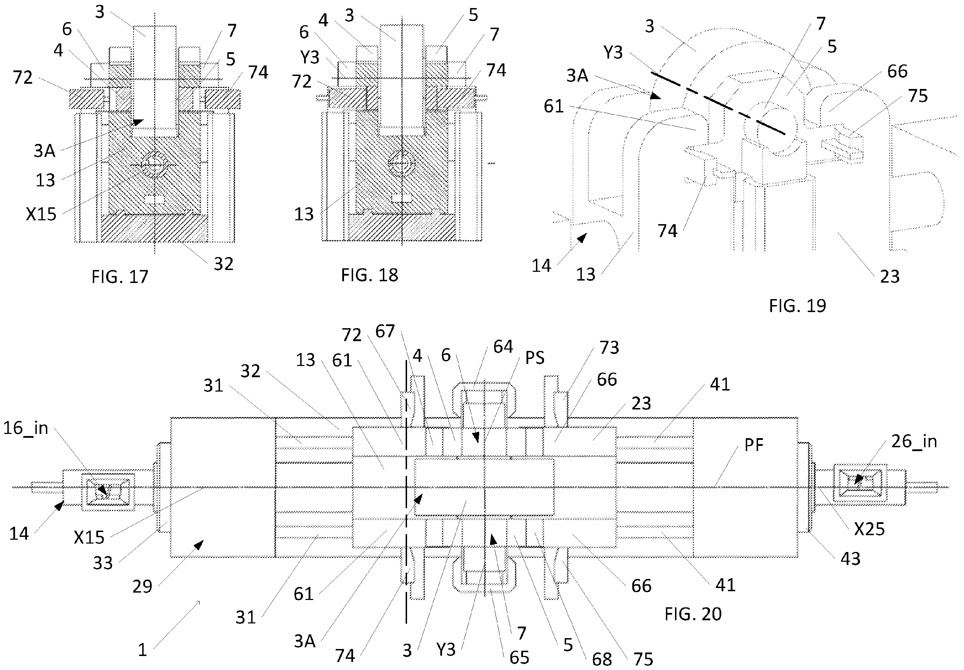

Les figures 17 et 18 illustrent, selon des vues en coupe dans le plan de coupe secondaire, l'installation des figures précédentes en configuration de fermeture, respectivement avant et après l'engagement de coins stabilisateurs qui s'insèrent chacun entre la semelle du premier palier et l'un des crochets de retenue afin de bloquer et contraindre le premier palier selon une direction transverse à l'axe de rotation du rouleau et parallèle à la direction d'accouplement, de manière à stabiliser latéralement ledit premier palier et ledit rouleau et à éviter tout débattement en flexion des poteaux, et ainsi de manière à empêcher toute déviation latérale du rouleau par rapport à la filière pendant l'opération de génération du profilé.

La figure 19 est une vue partielle en perspective de l'installation de la figure 18, avec les coins stabilisateurs engagés entre le premier palier et les crochets de retenue portés par les premier et second modules de tête.

La figure 20 illustre l'installation des figures 18 et 19 selon une vue de dessus.

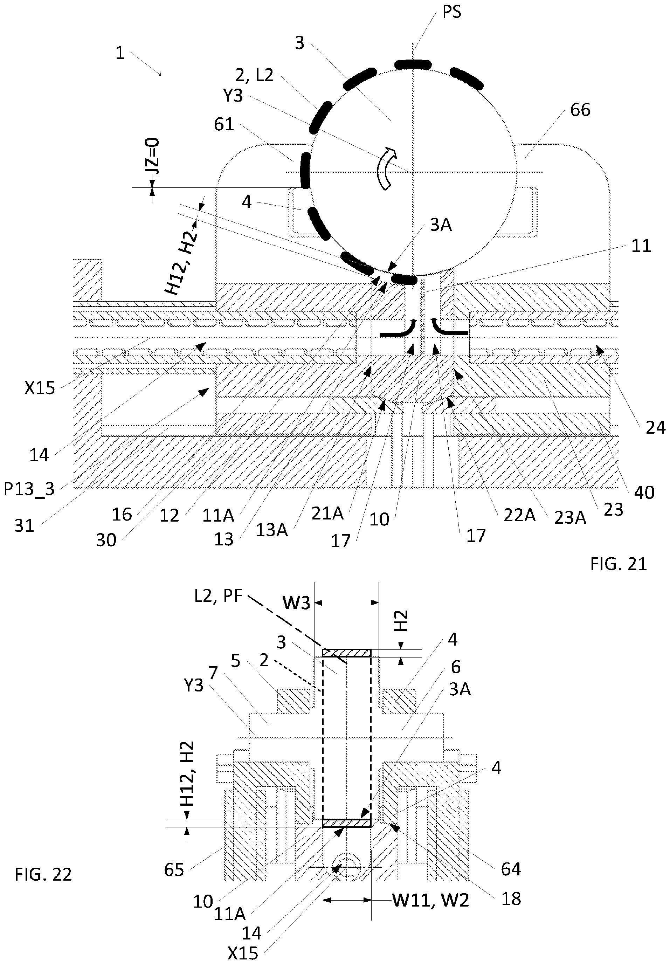

Les figures 21 et 22 illustrent, respectivement selon des vues partielles en coupe respectivement dans le plan frontal et dans le plan sagittal, l'installation des figures précédentes en configuration de fermeture, pendant l'extrusion d'un profilé.

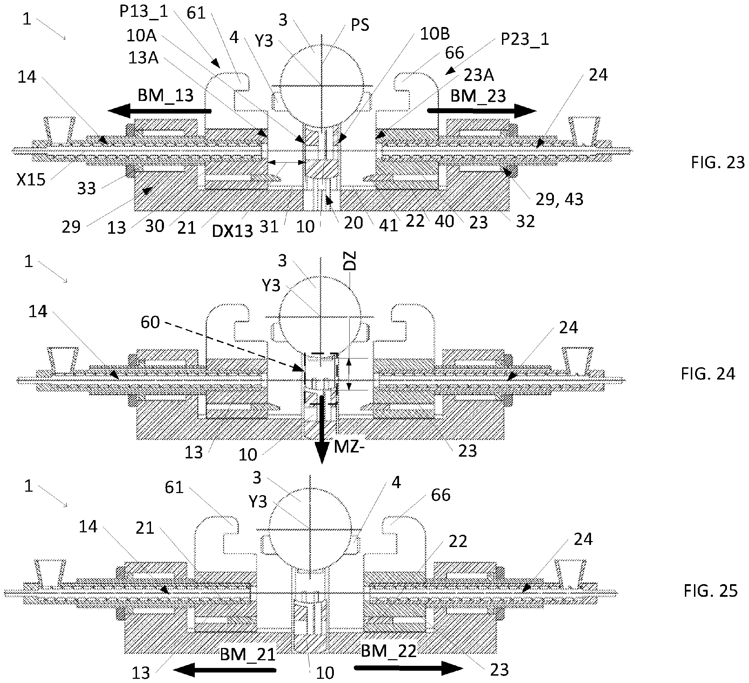

La figure 23 illustre, selon une vue en coupe dans le plan frontal, l'installation des figures précédentes dans une première phase de réouverture où l'on éloigne les premier et second modules de tête l'un de l'autre pour les dégager, avec leurs extrudeuses respectives, du module d'outillage.

La figure 24 illustre, selon une vue en coupe dans le plan frontal, l'installation des figures précédentes, dans une seconde phase de réouverture au cours de laquelle on éloigne le module d'outillage du rouleau, ici en descendant ledit module d'outillage, de sorte à faire passer ledit module d'outillage dans une configuration de dégagement.

La figure 25 illustre, selon une vue en coupe dans le plan frontal, l'installation des figures précédentes, dans une troisième et dernière phase de réouverture, au cours de laquelle on rétracte les actionneurs de précharge, ici à l'intérieur des premier et second modules de tête, pour retrouver la configuration d'ouverture présentée sur la figure 1.

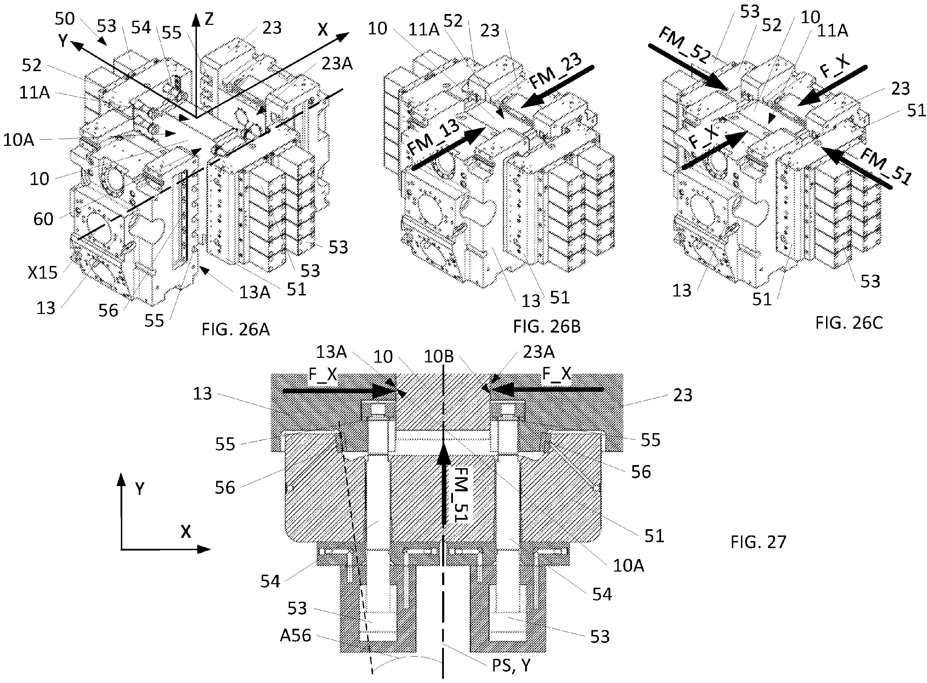

Les figures 26A, 26B, et 26C illustrent, selon des vues de détail en perspective, les étapes successives de mise en oeuvre d'un mécanisme de verrouillage, applicable notamment à l'installation selon les figures 1 à 25, ledit mécanisme de verrouillage comprenant un premier et un second mors qui viennent chacun en prise sur le premier module de tête et sur le second module de tête pour forcer le rapprochement desdits premier et second modules de tête et la génération de l'effort de serrage que lesdits modules de tête exercent sur le module d'outillage.

La figure 27 illustre, selon une vue de détail de dessus en coupe dans un plan, ici un plan normal à la direction d'engagement Z et qui contient la direction d'accouplement et la direction de déplacement des mors, dite « direction de verrouillage », l'engagement de rampes prévues sur les branches du premier mors le long de contre-rampes correspondantes prévues dans le premier et le second module de tête, l'inclinaison desdites rampes et contre-rampes permettant de convertir un effort de rapprochement des mors, porté par la direction de verrouillage, en un effort de serrage porté par la direction d'accouplement, transverse à la direction de verrouillage et permettant de forcer le rapprochement mutuel desdits premier et second modules de tête, en compression, à l'encontre du bloc d'outillage.

La présente invention concerne une installation 1 d'extrusion destinée à réaliser un profilé 2, schématisé en trait pointillé sur les figures 21 et 22, ainsi qu'un procédé de mise en oeuvre d'une telle installation 1, lequel procédé permet notamment de préparer une telle installation 1 d'extrusion pour réaliser un tel profilé 2.

De façon connue en soi, et tel que cela est notamment bien visible sur les figures 1, 2 et 21, l'installation 1 d'extrusion comprend un rouleau 3.

Ledit rouleau 3 présente une forme de révolution, de préférence une forme de cylindre droit, autour d'un axe central Y3.

La surface radialement externe dudit rouleau 3 sert de surface de réception 3A pour recevoir, refroidir et stabiliser dimensionnellement le profilé 2, au fur et à mesure de la production de ce dernier.

Pour une meilleure gestion thermique du profilé 2, et notamment pour une bonne gestion du refroidissement dudit profilé, le rouleau 3 peut être pourvu d'un système de régulation thermique, comprenant par exemple des canaux de circulation de fluide caloporteur, permettant notamment de refroidir ledit rouleau.

Le rouleau 3 est soutenu en rotation, autour de son axe central Y3, par au moins un premier palier 4.

De façon plus préférentielle, le rouleau 3 comprend, en saillie axiale par rapport à la surface de réception 3A, de part et d'autre axialement de ladite surface de réception 3A, une première extension axiale 6 et une seconde extension axiale 7 qui matérialisent l'axe central Y3 de rotation.

La première extension axiale 6 coopère en liaison pivot avec le premier palier 4.

De manière analogue, la seconde extension axiale 7 coopère en liaison pivot avec un second palier 5. La présence de deux paliers 4, 5 disposés axialement de part et d'autre du rouleau 3 confère audit rouleau 3 un guidage en rotation particulièrement robuste, équilibré et stable.

Dans ce qui suit, les considérations liées au premier palier 4, notamment les agencements, fonctions et mouvements décrits en lien avec le premier palier 4, pourront avantageusement trouver à s'appliquer *mutatis mutandis* au second palier 5.

A titre indicatif, le rouleau 3 pourra de préférence présenter un diamètre compris entre 0,5 m et 10 m, par exemple entre 0,90 m et 3 m.

Par convention, on considère comme plan frontal, noté PF, le plan qui est normal à l'axe Y3 du rouleau et qui coupe ledit rouleau 3 en son milieu, c'est-à-dire à mi-distance axialement entre la première extension axiale 6 et la seconde extension axiale 7.

De même, par convention, on considère comme plan sagittal, noté PS, le plan perpendiculaire au plan frontal PF et qui contient l'axe Y3 du rouleau 3.

De préférence, l'installation 1 est agencée de sorte que le plan frontal PF et le plan sagittal PS sont verticaux.

L'installation 1 comprend également un module d'outillage 10 qui comprend une filière 11 qui est destinée à venir coopérer avec le rouleau 3, et plus particulièrement qui est destinée à venir coopérer avec la surface de réception 3A dudit rouleau 3, pour former un entrefer 12 permettant de conformer le profilé 2.

La filière 11 présente de préférence à cet effet une face terminale 11A qui couvre partiellement le rouleau 3, sur un secteur angulaire déterminé autour de l'axe central Y3 dudit rouleau, et qui possède une forme incurvée concave par rapport à l'axe central Y3 du rouleau, laquelle forme est sensiblement conjuguée à la forme de la surface de réception 3A du rouleau. De préférence, ladite face terminale 11A présente une forme de cylindre droit, centrée sur ledit axe central Y3.

On désignera comme hauteur H12 de l'entrefer 12 la distance maximale, considérée radialement à l'axe central Y3 du rouleau, et donc perpendiculairement à la surface de réception 3A dudit rouleau, qui sépare la face terminale 11A de la filière de la surface de réception 3A du rouleau, dans la zone où la filière 11 et le rouleau 3 se chevauchent mutuellement afin de former des parois destinées à être au contact du matériau extrudé pour délimiter l'épaisseur H2 du profilé 2.

En pratique, par convention, on considérera que la hauteur H12 de l'entrefer 12 correspond à la hauteur maximale qui est observée, sur la largeur dudit entrefer 12, et donc sur la largeur W2 du profilé, au niveau de la sortie dudit entrefer 12, c'est-à-dire à l'emplacement où la filière 11 s'interrompt et cesse donc de recouvrir la surface de réception 3A du rouleau 3 en azimut autour de l'axe central Y3, tel que cela est notamment visible sur les figures 9, 10, 13, 14, 21 et 22.

La largeur utile W11 de la face terminale 11A de la filière, considérée axialement c'est-à-dire selon la direction de l'axe central Y3 du rouleau, tel que cela est visible sur les figures 3, 10, 14 et 22, c'est-à-dire la largeur de la face terminale 11A de la filière qui va délimiter, avec la surface de réception 3A du rouleau, l'entrefer 12 parcouru par le matériau extrudé constitutif du profilé, qui va donc être au contact du matériau extrudé pour délimiter la section transverse du profilé 2, et qui définit par conséquent la largeur W2 dudit profilé 2 tel que cela est notamment visible sur la figure 22, couvre de préférence au moins 50%, et par exemple entre 50% et 90% de la largeur axiale utile W3 dudit rouleau 3, c'est-à-dire de la largeur axiale de la surface de réception 3A du rouleau.

L'installation 1 comprend en outre au moins un premier module de tête 13 qui porte au moins une première extrudeuse 14 destinée à fournir un premier matériau constitutif du profilé 2.

Ladite première extrudeuse 14 comprend de préférence une vis 15 qui est entraînée en rotation autour de son axe longitudinal X15 dans un fourreau 16, lequel fourreau 16 est fixé audit premier module de tête 13.

Le fourreau 16 est de préférence pourvu, dans une portion amont, d'un orifice d'entrée 16_in, par exemple sous forme d'une trémie, permettant d'introduire le matériau à travailler, et, dans une portion aval, d'un orifice de sortie 16_out aval qui permet au matériau travaillé par la vis 15 de l'extrudeuse de sortir dudit fourreau 16.

Ledit orifice de sortie 16_out est agencé de sorte à pouvoir être placé, tel que cela est notamment illustré sur la figure 21, en communication étanche avec le bloc d'outillage 10 de manière à pouvoir délivrer à la filière 11, via un ou des canaux 17 ménagés à cet effet dans le bloc d'outillage 10, le matériau qui est extrudé par l'extrudeuse 14.

Le profilé 2 est de préférence réalisé à partir d'au moins un matériau (ou « mélange ») à base de caoutchouc.

Selon une possible application, le profilé 2 sera formé d'une seule nappe d'un seul matériau homogène, à base de caoutchouc.

Selon une autre possible application, le profilé 2 sera préférentiellement réalisé à partir de plusieurs matériaux de compositions différentes, à base de caoutchouc, lesdits plusieurs matériaux à base de caoutchouc étant travaillés chacun par au moins une extrudeuse 14, 24 dédiée, acheminés à travers le module d'outillage 10, puis réunis, ordonnés et conformés par la filière 11 et l'entrefer 12 en un profilé 2, selon un agencement souhaité.

Les compositions des différents matériaux qui se juxtaposent dans la section droite du profilé 2, ainsi que les positions et les dimensions des emplacements desdits matériaux dans la section droite du profilé seront bien entendu prédéfinis en fonction de la destination dudit profilé 2.

A ce titre, on notera que ledit profilé 2 est de préférence destiné à forme un constituant de bandage pneumatique, par exemple une bande de roulement, un flanc, ou même, notamment si ledit profilé est particulièrement fin, une nappe de gomme destinée à formée une interface entre deux nappes qui se superposent au sein du bandage pneumatique.

Le profilé 2 est avantageusement produit en continu dans le sens de sa longueur, qui définit une direction dite « direction longitudinale » L2.

De préférence, tant que le profilé 2 extrudé chemine sur le rouleau 3, ladite direction longitudinale L2 est parallèle au plan frontal PF, et préférentiellement contenue dans le plan frontal PF.

En section droite, perpendiculaire à la direction longitudinale L2, le profilé 2 présente, tel que cela est visible sur la figure 22, une première dimension W2, considérée selon une direction parallèle à l'axe central Y3 du rouleau 3 et correspondant à la largeur W2 dudit profilé, et une seconde dimension H2, considérée radialement par rapport à l'axe central Y3, et donc perpendiculairement à la surface de réception 3A du rouleau, et qui correspond à l'épaisseur H2 dudit profilé 2.

L'épaisseur H2 du profilé est définie par la hauteur H12 de l'entrefer, et, comptetenu notamment d'éventuels phénomènes de gonflement liés au relâchement des contraintes de pression en sortie d'entrefer, ladite épaisseur H2 du profilé, fini et stabilisé, peut représenter généralement entre 50%, notamment si la vitesse du rouleau 7 provoque un étirement du profilé 2 en sortie de filière, et 200% de la hauteur H12 de l'entrefer 12, considérée à la sortie dudit entrefer 12, c'est-à-dire à l'emplacement où la filière 11 cesse de recouvrir la surface de réception 3A du rouleau 3.

On notera que l'invention, grâce à la précision qu'elle permet d'obtenir dans la définition mécanique de l'entrefer 12, permet de réaliser des profilés 2, et notamment des profilés mono-matériau, qui sont particulièrement fins, et par exemple qui présentent une épaisseur H2 finale comprise entre 0,1 mm et 0,5 mm.

Plus globalement, on pourra toutefois générer des profilés 2 dans une large gamme d'épaisseurs, par exemple des profilés dont l'épaisseur H2 est comprise entre 0,1 mm, ce qui correspond le cas échéant à l'épaisseur la plus fine réalisable par l'installation, et 150 mm, ce qui correspond le cas échéant à l'épaisseur maximale réalisable par ladite installation 1.

A titre, indicatif, la largeur du profilé W2, strictement supérieure à son épaisseur H2, pourra être comprise entre 1 cm et 150 cm. Le cas échéant, si la largeur W2 unitaire du profilé 2 le permet, et notamment pour des profilés présentant une largeur comprise entre 1 cm et 10 cm voire 20 cm, on pourra extruder simultanément plusieurs profilés 2 distincts, en parallèle côte à côte, à travers le même module d'outillage 10 et sur le même rouleau 3.

Lorsque le profilé 2 présente une épaisseur H2 particulièrement fine comprise entre 0,1 mm et 0,5 mm comme indiqué plus haut, la largeur W2 du profilé pourra être comprise entre 1 cm et 150 cm. Dans le cas d'un profilé très fin, le rapport W2/H2 entre la largeur W2 et l'épaisseur H2 pourra ainsi être compris de préférence entre 100 fois et 3 000 fois.

Selon l'invention, le procédé comprend une étape (s1) d'engagement, qui constitue un « premier temps » de la séquence de fermeture, étape (s1) d'engagement au cours de laquelle on déplace le module d'outillage 10 par rapport au premier module de tête 13 et au premier palier 4 selon une première direction Z dite « direction d'engagement » Z, de sorte à amener ledit module d'outillage 10 en appui contre le premier palier 4 (figures 9, 10, 11), ici donc à placer le module d'outillage 10 en butée contre le palier 4 portant le rouleau 3, et à soumettre ledit module d'outillage 10 à un effort de précharge F_Z qui est orienté selon la direction d'engagement Z et à l'encontre du premier palier 4 (figures 12, 13, 14, 15), de manière à placer ledit module d'outillage 10 par rapport au rouleau 3, et plus particulièrement à placer la face terminale 11A de la filière 11 par rapport à la surface de réception 3A du rouleau 3, dans une configuration dite « configuration d'engagement » qui définit l'entrefer 12 souhaité pour réaliser le profilé 2.

Cette configuration d'engagement avec effort de précharge F_Z est atteinte sur les figures 13 à 15, puis maintenue sur la figure 16 qui correspond à une étape (s2) de serrage qui sera détaillée ci-après, ainsi que sur les figures 21 et 22 qui correspondent à la réalisation d'une opération d'extrusion d'un profilé 2.

Pour réaliser l'étape (s1) d'engagement, l'installation 1 comprend un dispositif d'engagement 19, qui permet de déplacer le module d'outillage 10 par rapport au premier palier 4 et par rapport au premier module de tête 13 selon une première direction (la première direction Z susmentionnée), dite « direction d'engagement » Z, de sorte à pouvoir alternativement :
- soit rapprocher le module d'outillage 10 du rouleau 3, ici selon un mouvement d'engagement noté MZ+, jusqu'à amener ledit module d'outillage 10 en appui contre une butée d'accostage 18 qui est solidaire du premier palier 4 (figures 9 et 10), et soumettre ledit module d'outillage 10 à un effort de précharge F_Z (figures 13 et 14) qui est orienté selon la direction d'engagement Z et à l'encontre de ladite butée d'accostage 18 et du premier palier 4, de manière à placer ledit module d'outillage 10 par rapport au rouleau 3, et plus particulièrement de manière à placer la face terminale 11A de la filière 11 par rapport à la surface de réception 3A du rouleau 3, dans une configuration dite « configuration d'engagement » (figures 13 à 15, puis également 16, 21 et 22) qui définit l'entrefer 12 souhaité pour réaliser le profilé 2,
- soit au contraire éloigner ledit module d'outillage 10 du rouleau 3 et de la butée d'accostage 18, ici selon un mouvement d'éloignement noté MZ-, afin de placer ledit module d'outillage dans une configuration de dégagement (figures 1 à 6, 24 et 25), distincte de la configuration d'engagement.

Avantageusement, la butée d'accostage 18 garantira la précision et la reproductibilité de la hauteur H12 de l'entrefer 12 choisi.

De préférence, l'entrefer 12 ainsi obtenu en configuration d'engagement présentera une hauteur H12, considérée radialement par rapport au rouleau 3, qui est comprise entre 0,1 mm et 150 mm, et par exemple entre 0,1 mm et 0,5 mm pour réaliser des profilés fins, notamment des profilés dont l'épaisseur finale, après refroidissement et stabilisation, sera comprise entre 0,2 mm et 0,3 mm. On rappellera à ce titre que l'épaisseur du profilé 2 pourra varier, et le cas échéant être ajustée de façon maîtrisée, selon d'une part l'éventuel degré d'étirement longitudinal que l'on exerce sur le profilé 2 avec le rouleau 3, étirement qui tend à réduire l'épaisseur du profilé, et selon d'autre part la tendance naturelle du matériau au « foisonnement », c'est-à-dire à l'augmentation de volume, qui tend à augmenter spontanément l'épaisseur du profilé une fois celui-ci sorti de l'entrefer 12.

Dans la configuration de dégagement, la distance DZ entre la surface de réception 3A du rouleau et la face terminale 11A de la filière, et, plus préférentiellement, la plus petite distance mesurée selon la direction d'engagement Z et séparant la surface de réception 3A de la face terminale 11A de la filière, sera, tel que cela est notamment visible sur la figure 24, strictement supérieure à celle observée en configuration d'engagement, et sera de préférence égale ou supérieure à 20 cm, voire égale ou supérieure à 50 cm, de sorte à offrir un recul suffisant du module d'outillage 10 par rapport au rouleau 3 pour permettre un accès facile à la surface de réception 3A du rouleau 3, et, au besoin, permettre un nettoyage du rouleau 3 et/ou un nettoyage ou un remplacement aisé du module d'outillage 10.

De préférence, la direction d'engagement Z est contenue dans le plan sagittal PS, et, plus préférentiellement, correspond à la ligne d'intersection du plan frontal PF avec le plan sagittal PS.

De préférence, la direction d'engagement Z est verticale, ou au moins sensiblement verticale, par exemple comprise dans une plage d'inclinaison allant de +10 degrés à -10 degrés par rapport à la verticale.

De la sorte, le mouvement d'engagement MZ+, respectivement le mouvement d'éloignement MZ-, correspondra préférentiellement à un déplacement majoritairement voire exclusivement vertical, typiquement en translation verticale.

De préférence, le mouvement d'engagement MZ+, respectivement le mouvement d'éloignement MZ-, s'effectuera en translation rectiligne, parallèlement à la direction d'engagement Z.

Le dispositif d'engagement 19 pourra comprendre tout mécanisme transporteur 20 qui permet de transporter le module d'outillage 10 selon la direction d'engagement Z, de préférence en translation rectiligne, depuis sa configuration de dégagement jusqu'à sa configuration d'engagement et réciproquement.

Préférentiellement le dispositif d'engagement 19 comprend un mécanisme transporteur 20 formé par un ascenseur 20 qui permet de transporter le module d'outillage 10 selon la direction d'engagement Z verticale, afin de, alternativement, exécuter un mouvement d'avance ascendant (mouvement d'engagement MZ+) en faisant monter ledit module d'outillage 10 pour le rapprocher du rouleau 3, ou au contraire exécuter un mouvement de recul descendant (mouvement d'éloignement MZ-) en faisant redescendre ledit module d'outillage 10 pour l'éloigner du rouleau 3 et de la butée d'accostage 18 du premier palier 4. Par simple commodité de description, le mécanisme transporteur 20 sera assimilé à un ascenseur 20 dans ce qui suit.

Par ailleurs, le dispositif d'engagement 19 comprendra de préférence au moins un, et de préférence deux, actionneurs de précharge 21, 22, agencés de manière à pouvoir, lorsque le module d'outillage 10 est au contact de la butée d'accostage 18 du premier palier 4, accentuer l'effort de compression exercé par le module d'outillage 10 à l'encontre de ladite butée d'accostage 18, et donc plus globalement à l'encontre du premier palier 4, et ainsi générer l'effort de précharge F_Z désiré, tel que cela est illustré sur les figures 13 et 14.

Comme illustré sur les figures 9, 13 et 16, ces actionneurs de précharge 21, 22 peuvent de préférence comporter des curseurs à pente, qui sont montés mobiles selon une direction transverse à la direction d'engagement Z, mûs par exemple par des vérins ou tout autre système de motorisation approprié, et qui viennent engager le module d'outillage 10, en accomplissant des mouvements d'avance ici notés FM_21 et FM_22 sur la figure 13.

De préférence, à des fins de compacité de l'installation et de stabilité, les actionneurs de précharge 21, 22 engagent le module d'outillage 10 par la base ou « culasse » dudit module d'outillage 10, qui est située à l'extrémité opposée à l'extrémité présentant la filière 11.

Par ailleurs, de façon préférentielle, l'ascenseur 20 d'une part, et les actionneurs de précharge 21, 22 d'autre part seront de préférence agencés de sorte à avoir une action différentielle et complémentaire, en ceci que l'ascenseur 20 sera apte à réaliser un déplacement du module d'outillage 10 selon la direction d'engagement Z dans la limite d'une course d'amplitude maximale prédéterminée, dite « grande amplitude », suffisante pour amener le module d'outillage 10 depuis sa configuration de dégagement jusqu'à la configuration dans laquelle ledit module d'outillage 10 entre en contact avec la butée d'accostage 18, tandis que les actionneurs de précharge 21, 22 prendront ensuite le relais pour poursuivre le mouvement d'engagement MZ+ selon cette même direction d'engagement Z, sur une course qui sera d'amplitude strictement inférieure à la grande amplitude de l'ascenseur 20, mais en revanche en étant capables de générer une forte contrainte à l'encontre du module d'outillage 10 et de la butée d'accostage 18, de sorte à pouvoir atteindre l'effort de précharge F_Z souhaité.

En d'autres termes, et tel que cela sera détaillé dans ce qui suit, l'ascenseur 20 opérera de préférence une première phase de l'étape (s1) d'engagement, correspondant à une phase d'approche (s1_1), en assurant l'essentiel de l'amplitude du déplacement nécessaire au mouvement d'engagement MZ+, mais en n'étant capable de générer qu'une contrainte de précharge relativement modérée, inférieure à l'effort de précharge F_Z visé, tandis que les actionneurs de précharge 21, 22 complèteront ensuite l'étape (s1) d'engagement en réalisant une seconde phase, dite « phase de précharge » (s1_2), en ne disposant que d'une faible capacité de déplacement du module d'outillage 10 selon la direction d'engagement Z, mais d'une forte capacité à générer une contrainte selon la direction d'engagement Z, permettant d'atteindre l'intensité souhaitée de l'effort de précharge F_Z.

De préférence, pour assurer l'indépendance de fonctionnement des actionneurs de précharge 21, 22 par rapport à l'ascenseur 20 (et réciproquement), lesdits actionneurs de précharge 21, 22 seront soutenus, à la différence de l'ascenseur 20, par le ou les modules de tête 13, 23.

A titre indicatif, l'effort de précharge F_Z est de préférence compris entre 300 kN et 1 500 kN, soit environ l'équivalent de 30 tonnes à 150 tonnes. Par exemple, l'effort de précharge pourra être de l'ordre de 600 kN, soient environ 60 tonnes

Avantageusement, une telle intensité de précharge permet de précontraindre suffisamment le module d'outillage 10 et sa filière 11 à l'encontre du premier palier 4, et donc à l'encontre du rouleau 3 porté par ledit premier palier 4, pour pouvoir ultérieurement compenser au moins partiellement, voire totalement, les effets qui seront produits par les contraintes de pression générées dans l'entrefer 12 par l'écoulement des matériaux extrudés lors de la production du profilé 2.

Selon l'invention, le procédé comprend ensuite, après l'étape (s1) d'engagement, une étape (s2) de serrage, qui constitue un « second temps » de la séquence de fermeture, et au cours de laquelle, tandis que ledit module d'outillage 10 se trouve dans sa configuration d'engagement, précontraint contre le premier palier 4 par l'effort de précharge F_Z, comme illustré sur les figures 12 à 15, on vient, tel que cela est illustré sur la figure 16, pincer ledit module d'outillage 10 entre le premier module de tête 13 pourvu de la première extrudeuse 14 et un second module de tête 23 distinct du premier module de tête 13, en rapprochant l'un de l'autre ledit premier module de tête 13 et le second module de tête 23, de part et d'autre du module d'outillage 10, selon une seconde direction X dite « direction d'accouplement » X qui est transverse à la direction d'engagement Z, de préférence perpendiculaire à ladite direction d'engagement Z, de sorte à mettre en communication la première extrudeuse 14 avec le module d'outillage 10, et en soumettant lesdits premier et second modules de tête 13, 23 à un effort de serrage F_X qui est orienté selon ladite direction d'accouplement X, de sorte à maintenir le module d'outillage 10 par compression entre le premier module de tête 13 et le second module de tête 23.

Avantageusement, le module d'outillage 10 se trouve ainsi pris fermement en étau entre, et par, le premier module de tête 13 et le second module de tête 23, qui appuient chacun sur le module d'outillage 10, en opposition l'un de l'autre selon la direction d'accouplement X. Le module d'outillage 10 se trouve donc fermement maintenu par les premier et second modules de tête 13, 23 en position fixe par rapport au premier palier 4 et à l'axe central Y3 du rouleau, ce qui permet de conserver l'agencement de l'entrefer 12 constant au cours de la production du profilé 2.

En effet, grâce au serrage robuste du bloc d'outillage 10 procuré par l'invention, les dimensions de l'entrefer 12, et en particulier la hauteur H12 dudit entrefer, sont quasiment insensibles à l'intensité de la pression selon laquelle le matériau est délivré par la filière 11 dans l'entrefer 12, et donc quasiment voire totalement invariantes au cours du processus d'extrusion permettant de générer le profilé 2. Ledit profilé 2 possède par conséquent une grande régularité, notamment quant à son épaisseur H2.

Comme cela sera détaillé plus bas, l'installation 1 comprend un dispositif d'accouplement 29 qui confère au premier module de tête 13 et/ou au second module de tête 23 une mobilité propre par rapport au premier palier 4 et par rapport au module d'outillage 10 selon la direction d'accouplement X, transverse à la direction d'engagement Z.

Par « transverse », ou « orientée transversalement », on indique, au sens général d'une telle expression, qu'une direction est disposée obliquement, de préférence perpendiculairement, par rapport à une direction de référence.

Ici, plus particulièrement, la direction d'engagement Z et la direction d'accouplement X seront concourantes et seront sensiblement perpendiculaires, c'est-à-dire qu'elles formeront entre elles un angle compris entre 70 degrés et 110 degrés, de préférence entre 80 degrés et 100 degrés, préférentiellement entre 85 degrés et 95 degrés, voire préférentiellement exactement perpendiculaires, c'est-à-dire qu'elles formeront entre elles un angle égal à 90 degrés.

Par ailleurs, la direction d'accouplement X est de préférence contenue dans le plan frontal PF. Encore plus préférentiellement, ledit plan frontal PF est le plan défini par la direction d'engagement Z et par la direction d'accouplement X.

Par convention, on notera Y la direction parallèle voire confondue avec l'axe du rouleau Y3 et qui forme avec la direction d'accouplement X et la direction d'engagement Z un trièdre rectangle.

On notera que, avantageusement, l'utilisation d'une direction d'accouplement X et d'une direction d' engagement Z qui sont croisées, de préférence perpendiculaires, permet de répartir des différents composants de l'installation 1, incluant notamment l'ascenseur 20 du dispositif d'engagement qui permet de déplacer le module d'outillage 10, les modules de têtes 13, 23, leurs extrudeuses 14, 24 respectives et leur dispositif d'accouplement 29, dans différentes directions de l'espace, par rapport au rouleau 3, à l'entrefer 12, autour de l'emplacement, dit « emplacement coeur » 60, qu'occupe le module d'outillage 10 en configuration d'engagement. On peut ainsi optimiser simultanément la compacité de l'installation 1 tout en garantissant une excellente accessibilité aux différents composants de ladite installation 1.

En outre, une telle disposition permet au dispositif d' engagement 19 et au dispositif d'accouplement 29 de contribuer chacun à maintenir le module d'outillage 10 dans sa configuration d'engagement. On peut ainsi renforcer le maintien du module d'outillage 10 en combinant les effets d'actionneurs qui sont répartis et qui agissent selon des directions distinctes, mais qui concourent ensemble à maintenir la configuration souhaitée de l'entrefer 12 à l'encontre de la pression des matériaux extrudés, et plus particulièrement qui concourent à procurer au module d'outillage 10 une capacité à ne pas reculer par rapport au rouleau 3.

Par ailleurs, la direction d'accouplement X sera de préférence sensiblement voire exactement horizontale, notamment lorsque la direction d'engagement Z est sensiblement voire exactement verticale. Ainsi, la direction d'accouplement X formera de préférence un angle inférieur à 20 degrés, de préférence inférieur à 10 degrés, plus préférentiellement inférieur à 5 degrés, voire égal à zéro degré par rapport à l'horizontale.

L'horizontalité de la direction d'accouplement X offrira avantageusement une grande stabilité, et permettra de limiter la dépense d'énergie, lors du déplacement du premier module de tête 13 et/ou du second module de tête 23, qui constituent des éléments particulièrement lourds.

Un tel agencement favorisera en outre l'accès à l'extrudeuse 14 pour des opérations de nettoyage ou d'approvisionnement en matériau, dans la mesure où, en particulier, lorsque le premier module de tête 13 et son extrudeuse 14 se déplacent selon la direction d'accouplement X, ils restent à tout moment à une altitude sensiblement constante, et donc à la hauteur de travail de l'opérateur.

Par ailleurs, le second module de tête 23 présente de préférence des caractéristiques similaires, voire identiques, à celles du premier module de tête 13.

Ainsi, de préférence, et tel que cela est visible sur les figures 1, 2, 5, 6, 9, 13, 16, 20, 21 et 23 à 25, le second module de tête 23 porte une seconde extrudeuse 24, destinée à délivrer dans l'entrefer 12, via le bloc d'outillage 10 et la filière 11, un second matériau, de préférence de composition distincte du premier matériau délivré par la première extrudeuse 14, et de préférence à base de caoutchouc.

Ladite seconde extrudeuse 24 comprend de préférence une vis 25 montée en rotation autour de son axe longitudinal X25 dans un second fourreau 26 qui est fixé au second module de tête 23 et qui présente un orifice d'entrée 26_in et un orifice de sortie 26_out.

L'axe longitudinal X25 de la seconde extrudeuse 25 est de préférence colinéaire (parallèle) à l'axe longitudinal X15 de la première extrudeuse 14, voire coaxial à l'axe longitudinal X15 de la première extrudeuse 14.

Tel que cela est notamment visible sur les figures 1, 2, 6, 13, 16 et 21, le premier module de tête 13 présente avantageusement une face terminale 13A, dite « première face de connexion » 13A (ou « première face aval »), sur laquelle débouche l'orifice de sortie 16_out du fourreau 16 de la première extrudeuse 14, et qui est agencée pour se retrouver, lorsque l'installation est en configuration de fermeture, au contact étanche d'une face 10A correspondante du module d'outillage 10, dite « première face réceptrice » 10A, qui présente une forme conjuguée à la forme de ladite première face de connexion 13A, et qui présente, en vis-à-vis de l'orifice de sortie 16_out du fourreau 16, un orifice d'admission qui forme l'entrée du canal 17 correspondant, lequel canal 17 se poursuit ensuite à travers le bloc d'outillage 10 jusqu'à la filière 11 par laquelle ledit canal 17 débouche dans l'entrefer 12.

De manière analogue, le second module de tête 23 présente une face terminale 23A, dite « seconde face de connexion » 23A (ou « seconde face aval »), sur laquelle débouche l'orifice de sortie 26_out du fourreau 26 de la seconde extrudeuse 24 et qui est agencée pour se retrouver, lorsque l'installation est en configuration de fermeture, au contact étanche d'une face 10B correspondante du module d'outillage 10, dite « seconde face réceptrice » 10B, qui se situe à l'opposé de la première face réceptrice 10A dans la direction d'accouplement X, par rapport au plan sagittal PS, qui présente une forme conjuguée à la forme de ladite seconde face de connexion 23A, et qui présente, en vis-à-vis de l'orifice de sortie 26_out du fourreau 26, un orifice d'admission qui forme l'entrée du canal 17 correspondant.

On notera que la première extrudeuse 14 et la seconde extrudeuse 24 alimentent de préférence chacune un canal 17 différent au sein du module d'outillage 10, de sorte que le premier matériau issu de la première extrudeuse 14 est acheminé jusqu'à la filière 11 séparément du second matériau issu de la seconde extrudeuse 24, sans que lesdits matériaux ne se rejoignent ou se mélangent avant de parvenir à la filière 11, et plus préférentiellement sans que lesdits matériaux ne se rejoignent ou se mélangent avant de parvenir à l'entrefer 12.

De préférence, la première face de connexion 13A et la première face réceptrice 10A sont planes. Préférentiellement, ces faces 13A, 10A forment un angle inférieur à 20 degrés, inférieur à 10 degrés, voire inférieur à 5 degrés par rapport au plan normal à la direction d'accouplement X (et donc, de préférence par rapport à la direction d'engagement Z), voire, encore plus préférentiellement, sont normales à ladite direction d'accouplement X (et donc, de préférence, parallèles à la direction d'engagement Z, et donc, de préférence, verticales).

De même, la seconde face de connexion 23A et la seconde face réceptrice 10B sont planes. Préférentiellement, ces faces 23A, 10B forment un angle inférieur à 20 degrés, inférieur à 10 degrés, voire inférieur à 5 degrés par rapport au plan normal à la direction d'accouplement X, voire, encore plus préférentiellement, sont normales à ladite direction d'accouplement X.

De préférence, pour simplifier l'agencement de l'installation 1, notamment l'agencement du dispositif d'engagement 19, et pour assurer une grande stabilité de la configuration de fermeture, les première et seconde faces réceptrices 10A, 10B qui délimitent le module d'outillage 10 dans la direction d'accouplement X, et entre lesquelles sont situés le ou les canaux 17 acheminant le ou les mélanges extrudés en provenance de la ou des extrudeuses 14, 24, sont parallèles entre elles, et préférentiellement, de surcroît, parallèles à la direction d'engagement Z.

De même, la première face de connexion 13A du premier module de tête 13 et la seconde face de connexion 23A du second module de tête 23 sont de préférence parallèles entre elles, et préférentiellement, de surcroît, parallèles à la direction d'engagement Z.

Selon une possibilité de combinaison préférentielle des caractéristiques susmentionnées, qui correspond aux variantes de réalisation illustrées sur les différentes figures, le module d'outillage 10 est délimité, selon la direction d'accouplement X, par une première face réceptrice 10A contre laquelle le premier module de tête 13 est destiné à venir en appui en configuration de fermeture pour mettre la première extrudeuse 14 en communication avec le module d'outillage 10 et appliquer un effort de serrage F_X et par une seconde face réceptrice 10B contre laquelle le second module de tête 23 est destiné à venir en appui en configuration de fermeture pour appliquer l'effort de serrage F_X, et lesdites première et seconde faces réceptrices 10A, 10B sont planes et présentent chacune une orientation, par rapport à la direction d'engagement Z, qui est telle que l'angle d'inclinaison entre la face réceptrice 10A, 10B concernée et la direction d'engagement Z est inférieur à 10 degrés, de préférence inférieur à 5 degrés, et de préférence nul, de sorte que lesdites première et seconde faces réceptrices 10A, 10B sont sensiblement voire de préférence exactement parallèles entre elles et sensiblement voire exactement parallèles à la direction d'engagement Z, et la direction d'accouplement X forme un angle compris entre 70 degrés et 110 degrés, de préférence entre 80 degrés et 100 degrés, et encore plus préférentiellement égal à 90 degrés, par rapport à la direction d'engagement Z, et plus préférentiellement par rapport auxdites première et seconde surfaces réceptrices 10A, 10B.

Avantageusement, les plans de joint selon lesquels les modules de tête 13, 23 appuient de manière étanche contre le module d'outillage 10 en configuration de fermeture sont ainsi de préférences des surfaces planes, parallèles entre elles et parallèles à la direction d'engagement Z, et normales à la direction d'accouplement X, ce qui simplifie les mouvements d'ouverture et de fermeture, et accroît la stabilité de la configuration de fermeture.

Par ailleurs, la première extrudeuse 14 comprenant au moins une vis 15 entraînée en rotation autour de son axe longitudinal X15 dans un fourreau 16, comme il a été dit plus haut, alors ledit axe longitudinal X15 est de préférence parallèle à la direction d'accouplement X à +/- 10 degrés, de préférence à +/- 5 degrés, et plus préférentiellement exactement parallèle à ladite direction d'accouplement X.

Avantageusement, un tel agencement permettra notamment d'optimiser l'encombrement de l'installation 1 ainsi que l'accessibilité à la première extrudeuse 14 pour les opérations de nettoyage. Ledit agencement permet en outre de simplifier et de sécuriser les déplacements de l'extrudeuse 14 et du module de tête 13 associé le long de la direction d'accouplement X, puisque ces mouvements FM_13, BM_13 opèrent par translation longitudinale de l'extrudeuse 14, en minimisant ainsi la surface au sol balayée par ladite extrudeuse lors desdits mouvements.

Avantageusement, les canaux 17 du module d'outillage 10 présenteront de préférence chacun au moins un renvoi d'angle (coude) comprenant un tronçon amont qui s'étend sensiblement voire exactement parallèlement à la direction d'accouplement X, et qui leur permet de capter, par leur orifice d'admission, le matériau extrudé en provenance du fourreau 16, directement dans le prolongement axial dudit fourreau 16 et de la vis 15, puis un tronçon aval, sensiblement parallèle à la direction d'engagement Z, qui forme un angle, ici de préférence un angle droit, avec le tronçon amont afin de diriger le flux de matériau extrudé vers l'entrefer 12 et le rouleau 3, selon une direction d'écoulement qui est sensiblement voire exactement parallèle à la direction d'engagement Z.

De préférence, le module d'outillage 10 comprend une pluralité de plaques qui sont empilées dans le sens de leur épaisseur selon la direction d'accouplement X, et dont les faces de plus grandes dimensions sont planes et parallèles à la première face réceptrice 10A et à la seconde face réceptrice 10B, et donc de préférence parallèles à la direction d'engagement Z. De préférence, la face apparente de la première plaque de l'empilement forme la première face réceptrice 10A, tandis que la face apparente de la dernière plaque de l'empilement forme la seconde face réceptrice 10B opposée.

Chaque canal 17 est ainsi creusé dans l'épaisseur d'une plaque, ou dans les épaisseurs respectives de deux plaques contiguës, en formant une rainure dont le fond est borgne et dont l'évidement s'ouvre à la surface de la plaque concernée, c'est-à-dire dont l'évidement s'ouvre dans le plan de joint avec la plaque voisine, de sorte que, une fois les plaques réunies au contact les unes des autres, la section droite dudit canal, destinée à être traversée par le flux du matériau extrudé, se trouve délimitée, selon un contour fermé, par les deux plaques superposées qui bordent ledit canal 17.

Bien entendu, chaque orifice d'entrée d'un canal 17 traversera autant d'épaisseurs de plaques que nécessaire, depuis la face réceptrice 10A, 10B concernée, pour atteindre la profondeur de la plaque dans laquelle est creusé ledit canal 17.

La filière 11 est avantageusement située sur une face de la pile de plaques, et plus globalement du module d'outillage 10, qui est sécante, voire perpendiculaire, aux faces réceptrices 10A, 10B. Ici, la filière 11 se situe, et débouche, sur le chant supérieur du module d'outillage 10. L'angle de coude des canaux 17 permet avantageusement de transférer chaque matériau extrudé de la face réceptrice 10A, 10B concernée jusqu'à la filière 11 et sa face terminale 11A.

Avantageusement, en configuration de fermeture, l'effort de serrage F_X presse les plaques les unes contre les autres, dans le sens de leur épaisseur.

Une telle prise en sandwich de l'empilement de plaques au moyen des faces de connexion 13A, 23A des premier et second modules de tête 13, 23, en particulier lorsque ladite prise en sandwich s'effectue sur une étendue du module d'outillage 10 qui couvre préférentiellement, selon la direction d'engagement Z, plus de la moitié de la longueur des canaux 17 considérée selon ladite direction d'engagement Z, de préférence plus de 75% de ladite longueur des canaux 17, voire la totalité de la longueur desdits canaux 17 considérée selon la direction d'engagement Z, permet avantageusement un maintien particulièrement stable du module d'outillage 10 et garantit une parfaite étanchéité du module d'outillage 10, en s'opposant notamment à tout écartement des plaques les unes des autres, au niveau des interfaces que forment les plans de joint entre les différentes plaques, sous l'effet de la pression des matériaux extrudés circulant dans les canaux 17.

Selon une possibilité d'agencement correspondant à la première variante d'installation illustrée sur les figures 1 à 25, le premier module de tête 13, et de préférence chacun des premier et second modules de tête 13, 23, pourra porter une et une seule extrudeuse 14, 24.

Toutefois, et tel que cela est le cas pour la seconde variante d'installation 1 illustrée sur les figures 26A, 26B, 26C, le premier module de tête 13, et/ou, de manière analogue, le second module de tête 23, pourra porter plusieurs extrudeuses, et ainsi de préférence alimenter autant de canaux 17 distincts au sein du module d'outillage 10.

Chaque extrudeuse 14, 24 débouchera de préférence sur la face de connexion 13A, 23A du module de tête 13, 23 qui porte l'extrudeuse concernée, en vis-à-vis d'un orifice d'admission qui forme l'entrée d'un canal 17 correspondant prévu dans le module d'outillage 10. A ce titre, chaque module de tête 13, 23 comportera de préférence, pour relier les fourreaux 16, 26 des extrudeuses à sa face de connexion 13A, 23A, autant de voies, de préférence séparées les unes des autres, que ledit module de tête 13, 23 peut accueillir d'extrudeuses 14, 24 distinctes.

Pour mettre en oeuvre la seconde étape (s2) de serrage, l'installation 1 comprend, outre un second module de tête 23 tel que décrit ci-dessus, un dispositif d'accouplement 29 qui confère au premier module de tête 13 et/ou au second module de tête 23 une mobilité propre par rapport au premier palier 4 et par rapport au module d'outillage 10 selon une seconde direction X, ici la seconde direction dite « direction d'accouplement » X susmentionnée, qui est orientée transversalement à la direction d'engagement Z, de préférence perpendiculairement à ladite direction d'engagement Z, si bien que ledit dispositif d'accouplement 29 permet alternativement :
- soit de rapprocher le premier module de tête 13 et le second module de tête 23 l'un de l'autre selon ladite direction d'accouplement X, de part et d'autre du module d'outillage 10, lorsque ledit module d'outillage 10 se trouve en configuration d'engagement, de sorte à mettre en communication la première extrudeuse 14, respectivement la seconde extrudeuse 24 le cas échéant, avec le module d'outillage 10 et à serrer ledit module d'outillage 10 entre le premier module de tête 13 et le second module de tête 23, dans une configuration dite « configuration de fermeture »,
- soit au contraire d'éloigner le premier module de tête 13 du second module de tête 23 selon la direction d'accouplement X, de sorte à dégager la première extrudeuse 14, respectivement la seconde extrudeuse 24, du module d'outillage 10 et à libérer le module d'outillage 10 pour autoriser un déplacement dudit module d'outillage 10 par rapport au premier palier 4, de préférence de même par rapport au second palier 5, et par rapport aux premier et second modules de tête 13, 23, selon la direction d'engagement Z.

Selon une variante de mise en oeuvre, on pourrait envisager que seul l'un des modules de tête 13, 23 soit mobile par rapport au premier palier 4 et par rapport au module d'outillage 10 selon la direction d'accouplement X, l'autre module de tête 23, 13 étant fixe selon ladite direction d'accouplement X, de sorte que le déplacement du seul module de tête 13 mobile à l'encontre du module d'outillage 10 et de l'autre module de tête 23 fixe suffirait à atteindre la configuration de fermeture et à générer l'effort de serrage F_X.

Toutefois, de façon préférentielle, le dispositif d'accouplement 29 confère à chacun des premier et second modules de tête 13, 23 une mobilité propre selon la direction d'accouplement X, par rapport au premier palier 4 (et, de même, par rapport au second palier 5) et par rapport au module d'outillage 10.

De la sorte, le premier module de tête 13, situé d'un premier côté du plan sagittal PS, est apte à se déplacer selon la direction d'accouplement X, de préférence en translation rectiligne selon ladite direction d'accouplement X, de sorte à pouvoir alternativement se rapprocher dudit plan sagittal PS, du module d'outillage 10, et du second module de tête 23, jusqu'à pouvoir engager ledit module d'outillage 10, selon un mouvement d'avance FM_13 (figure 6), ou s'éloigner dudit plan sagittal PS, du module d'outillage 10, et du second module de tête 23, notamment afin de se dégager du module d'outillage 10, selon un mouvement de recul BM_13 (figure 23), tandis que, de même, le second module de tête 23, qui est situé de l'autre côté du plan sagittal PS, est lui aussi apte à se déplacer selon la direction d'accouplement X, de préférence en translation rectiligne selon ladite direction d'accouplement X, et de préférence de manière indépendante des mouvements du premier module de tête 13, de sorte à pouvoir alternativement se rapprocher dudit plan sagittal PS, du module d'outillage 10, et du premier module de tête 13, jusqu'à pouvoir engager ledit module d'outillage 10, selon un mouvement d'avance FM_23 (figure 6) de signe opposé au mouvement d'avance FM_13 du premier module de tête 13, ou au contraire s'éloigner dudit plan sagittal PS, du module d'outillage 10 et du premier module de tête, notamment afin de se dégager du module d'outillage, selon un mouvement de recul BM_23 (figure 23) de signe opposé au mouvement de recul BM_13 du premier module de tête 13.

On notera que les mouvements d'avance FM_13, FM_23, respectivement les mouvements de recul BM_13, BM_23, des premier et second modules de tête 13, 23, bien qu'étant de préférence potentiellement pilotables indépendamment d'un module de tête 13 à l'autre module de tête 23, sont néanmoins de préférence synchronisés, notamment lors de la fermeture, de sorte que l'on déplace de préférence le premier module de tête 13 et le second module de tête 23 de façon simultanée, sensiblement en miroir l'un de l'autre par rapport au plan sagittal PS, selon des mouvements qui s'effectuent donc en opposition l'un de l'autre.

De préférence, et tel que cela est bien visible sur les figures 1, 2, 5, 6, 9, 12, 16 à 18, 20 et 23 à 25, le dispositif d'accouplement 29 comprend au moins un premier chariot 30 qui porte le premier module de tête 13, voire qui est formé d'un seul tenant avec ledit premier module de tête 13, et qui est monté mobile et guidé en translation le long d'un premier rail 31, préférentiellement rectiligne, et de préférence horizontal, qui matérialise ainsi la direction d'accouplement X.

Le premier rail 31 forme de préférence un élément fixe de l'installation 1, faisant partie d'un bâti 32 par rapport auquel s'exécutent d'une part les mouvements FM_13, FM_23, BM_13, BM_23, de préférence horizontaux, des modules de tête 13, 23, et ici plus particulièrement du premier chariot 30, selon la direction d'accouplement X, et d'autre part les mouvements MZ+, MZ-, de préférence verticaux, du module d'outillage 10, et plus particulièrement de l'ascenseur 20, selon la direction d'engagement Z.

Ledit bâti 32, et par conséquent le premier rail 31 qui est solidaire dudit bâti 32, est de préférence fixé sur le sol de l'atelier dans lequel l'installation 1 est implantée.

De préférence, pour plus de stabilité, le premier chariot 30 est guidé en translation sur une paire de premiers rails 31 parallèles entre eux.

Le premier chariot 30 peut être propulsé par tout moyen d'entraînement 33 approprié, tel que moteur électrique ou bien vérin 33, de préférence vérin hydraulique, par exemple un vérin 33 annulaire logé dans le bâti 32. Ledit moyen d'entraînement 33 sera avantageusement contrôlé par une unité de commande, de préférence électronique.

Ainsi, le premier module de tête 13 peut avantageusement aller et venir, ici d'un seul bloc avec le premier chariot 30, et le long du premier rail 31, selon la direction d'accouplement X, afin :
- tantôt de s'éloigner du module d'outillage 10, selon un mouvement de recul BM_13, et plus précisément de s'éloigner de l'emplacement dit « emplacement coeur » 60 qui est réservé au module d'outillage 10, et qui est occupé par le module d'outillage 10 lorsque l'installation 1 se trouve en configuration d'engagement et en configuration de fermeture, jusqu'à pouvoir gagner une première position, dite « position d'ouverture totale » P13_1, qui correspond à une configuration d'ouverture (figures 1 et 23 à 25), et qui permet notamment à l'opérateur d'accéder au premier module de tête 13, et en particulier à sa première face de connexion 13A, en vue d'un nettoyage,
- tantôt de se rapprocher de l'emplacement coeur 60 et donc du module d'outillage 10 (figures 5, 6 puis 16 et 20), selon un mouvement d'avance FM_13, jusqu'à pouvoir gagner tout d'abord une seconde position P13_2, dite « position intermédiaire » P13_2 (figures 6, 9 et 13), plus proche du module d'outillage 10 que la position d'ouverture totale P13_1, et qui permet de préférence, comme cela sera détaillé plus bas, au premier module de tête 13 d'interagir avec le premier palier 4 tout en ménageant un jeu de passage JX (non nul) autorisant un libre déplacement du module d'outillage 10 selon la direction d'engagement Z, puis enfin, en poursuivant le mouvement d'avance FM_13, une troisième position dite « position de contact » P13_3 (figure 16), encore plus proche du module d'outillage 10 et de l'emplacement coeur 60, et dans laquelle, comme c'est notamment le cas en configuration de fermeture (figures 16 et 21), la face terminale 13A du premier module de tête 13, dite « première face de connexion 13A », se trouve au contact étanche de la face correspondante du module d'outillage 10, dite « première face réceptrice 10A », pour assurer une jonction étanche qui permet la continuité d'écoulement du premier matériau entre la première extrudeuse 14 et le canal 17 correspondant du module d'outillage 10.

A titre indicatif, la course utile du premier chariot 30, et donc du premier module de tête 13, qui sépare la position de contact P13_3 de la position d'ouverture totale P13_1 le long de la direction d'accouplement X, et qui est ici notée DX13, sera égale ou supérieure à 50 cm, et par exemple comprise entre 1 m et 2 m, et ce notamment afin d'offrir un recul suffisant pour permettre à un opérateur d'accéder facilement à la première face de connexion 13A du premier module de tête 13, à la première extrudeuse 14, et le cas échéant à l'emplacement coeur 60 et à la surface de réception 3A du rouleau, lorsque l'installation se trouve en configuration d'ouverture. On notera cependant qu'il est également possible de prévoir, après un cycle de production, lorsque l'on souhaite simplement remplacer le module d'outillage 10 mais sans modifier le ou les matériaux utilisés, une position d'ouverture qui corresponde à un simple relâchement de l'effort de serrage F_X, et selon laquelle le premier module de tête 13 recule très légèrement par rapport au module d'outillage 10 selon la direction d'accouplement X, de sorte à s'écarter juste assez du module d'outillage pour permettre un déplacement et une évacuation, ici verticalement vers le bas, du module d'outillage 10, et un cisaillement des éventuels ponts de mélange de caoutchouc qui subsistent entre le module de tête 13 et le module d'outillage 10. Dans ce cas, la distance de recul peut être choisie comme étant simplement non nulle, par exemple égale ou supérieure à 0,5 mm, voire égale ou supérieure à 1 mm. On pourra ainsi choisir notamment une distance de recul comprise entre 0,5 mm et 5 cm voire comprise entre 0,5 mm et 10 cm. On notera que, en pratique, ces valeurs correspondent de préférence à celles du jeu dit «jeu de passage » JX que l'on observe lorsque les modules de tête 13, 23 se trouvent en configuration dite « de pré-positionnement », à proximité de l'emplacement coeur 60, tout en laissant le passage au module d'outillage 10, tel que cela sera décrit plus bas, et tel que cela est illustré sur les figures 5 et 6.

De manière analogue, le dispositif d'accouplement 29 comprend de préférence au moins un second chariot 40 qui porte le second module de tête 23, et qui est monté mobile et guidé en translation le long d'un second rail 41, de préférence une paire de seconds rails 41. Ledit second rail 41, ou chacun desdits seconds rails 41, est préférentiellement rectiligne, et préférentiellement horizontal, et est, tout comme le premier rail 31, monté sur le bâti 32 et matérialise également la direction d'accouplement X.

De façon préférentielle, et tel que cela est notamment visible sur les figures 1, 2, 5, 6 et 20, le second rail 41 est aligné avec le premier rail 31, dans le prolongement dudit premier rail 41, selon une direction commune qui correspond à la direction d'accouplement X.

La propulsion du second chariot 40 est de préférence assurée par un second vérin 43, avantageusement distinct du premier vérin 33, et potentiellement pilotable indépendamment.

Bien entendu, les caractéristiques liées aux mouvements FM_23, BM_23, positions possibles P23_1, P23_2, P23_3 et longueur de course utile applicables au second chariot 40 et au second module de tête 23 peuvent se déduire *mutatis mutandis* des caractéristiques décrites ci-dessus en référence au premier chariot 30 et au premier module de tête 13, par symétrie par rapport à la direction d'engagement Z, et plus particulièrement, le cas échéant, par symétrie plane par rapport au plan sagittal PS.

On notera à ce titre que, par commodité de description, les considérations concernant l'agencement géométrique de l'installation 1 ont été faites ici en référence au plan sagittal PS, dans une installation 1 où le module d'outillage 10 vient se placer, en configuration d'engagement et en configuration de fermeture, à la verticale de l'axe Y3 du rouleau, de préférence de façon sensiblement centrée sur le plan sagittal PS contenant l'axe Y3 central du rouleau, de sorte que la direction d'engagement Z est concourante avec l'axe central Y3 du rouleau et que le plan sagittal PS du rouleau contenant l'axe Y3 central du rouleau traverse, de préférence en son milieu, l'emplacement 60, dit « emplacement coeur 60 », qui est réservé pour ledit module d'outillage 10 entre le premier et le second module de tête 13, 23.

Bien entendu, dans l'éventualité où l'on prévoirait un agencement selon lequel le module d'outillage 10, et plus particulièrement la direction d'engagement Z, serait excentré par rapport au rouleau 3, et donc dans lequel la direction d'engagement Z, tout en restant parallèle au plan sagittal PS contenant l'axe central du rouleau Y3, serait décalée (selon la direction d'accouplement X) par rapport audit plan sagittal PS contenant l'axe central Y3 du rouleau 3, de telle sorte par exemple que, en configuration de fermeture, la filière 11 se verrait positionnée de façon quasiment tangente au rouleau 3, alors on pourrait conserver les considérations géométriques d'agencement, de mouvements, et de symétries décrites par rapport au plan sagittal PS dans ce qui précède, en faisant référence, en lieu et place du plan sagittal PS contenant l'axe central Y3 du rouleau, à un plan de jauge qui serait parallèle au plan sagittal du rouleau 3 mais qui serait décalé en conséquence selon la direction d'accouplement X, de sorte à passer par le milieu du segment virtuel qui est compris entre les première et seconde faces de connexion 13A et 23A en configuration de fermeture, c'est-à-dire qui formerait un plan sagittal « secondaire » attaché au module d'outillage 10 (et non plus au rouleau 3), contenant la direction d'engagement Z, et qui couperait l'emplacement coeur 60, et par conséquent ledit module d'outillage 10, sensiblement en deux moitiés égales.

Selon une possibilité de réalisation préférentielle, qui est applicable quel que soit le nombre d'extrudeuses 14, 24 portées respectivement par le premier module de tête 13 et le cas échéant par le second module de tête 23, le dispositif d' accouplement 29 comprend, tel que cela est visible sur les figures 26A, 26B, 26C et 27, un mécanisme de verrouillage 50 comportant un premier mors 51 et un second mors 52 qui sont montés mobiles selon une troisième direction Y qui est transverse, et de préférence perpendiculaire, à la première direction d'engagement Z et transverse, et de préférence perpendiculaire, à la seconde direction d'accouplement X.

Ledit premier mors 51 et ledit second mors 52 sont agencés de sorte à, lorsque le module d'outillage 10 se trouve en configuration d'engagement, pouvoir se rapprocher l'un de l'autre, de part et d'autre du module d'outillage 10, selon ladite troisième direction Y, de manière à venir en prise chacun avec d'une part le premier module de tête 13 et d'autre part le second module de tête 23 de sorte à forcer le rapprochement mutuel et le serrage, selon la direction d'accouplement X, desdits premier et second modules de tête 13, 23 à l'encontre du module d'outillage 10, afin de placer l'installation 1 en configuration de fermeture.

Chaque mors 51, 52 est de préférence auto-tracté, en ceci que d'une part ledit mors 51, 52 embarque au moins un moteur 53, préférentiellement formé par un vérin 53, et de préférence une série de moteurs 53, préférentiellement formés par des vérins 53, lesdits moteurs 53 étant répartis préférentiellement en deux rangées, à raison d'une rangée en vis-à-vis de chaque module de tête 13, 23, et que d'autre part chaque moteur 53 agit sur un tirant 54, de préférence orienté parallèlement à la troisième direction Y, ledit tirant 54 venant en prise dans un point d'ancrage 55, de type encoche, prévu dans le module de tête 13, 23 correspondant, de manière à pouvoir forcer le rapprochement en traction FM_51, FM_52 du verrou 51, 52 à l'encontre du premier et du second module de tête 13, 23. Le tirant 54 peut avantageusement être formé par la tige du vérin 53, pour une meilleure compacité.

La multiplication des moteurs 53 permet avantageusement d'exercer un effort de traction d'intensité élevée tout en conservant des moteurs 53 compacts et relativementlégers.

De surcroît, la répartition des moteurs 53 en rangées, de préférence selon des alignements parallèles à la direction d'engagement Z, tel que cela est visible sur les figures 26A, 26B et 26C, permet d'appliquer un effort de traction réparti, et de préférence homogène, sur toute la hauteur des mors 51, 52, et par conséquent d'obtenir un effort de serrage F_X réparti, et de préférence homogène, sur toute la hauteur des faces réceptrices 10A, 10B du module d'outillage 10, et donc sensiblement sur toute la longueur des canaux 17 d'acheminement des matériaux extrudés, et plus particulièrement sur toute la hauteur des plans de joints entre plaques constitutives du module d'outillage 10, ce qui garantit un serrage stable, une parfaite étanchéité du module d'outillage 10 lorsque celui-ci est formé de plaques superposées, et une parfaite étanchéité des jonctions entre ledit module d'outillage 10 et chacun des premier et second modules de tête 13, 23.

Un système de rampes 56 présentant un angle d'inclinaison A56 non nul par rapport à la troisième direction Y permet de convertir l'effort de traction, généré par les moteurs 53 des mors 51, 52 et porté par la troisième direction Y, en l'effort de serrage F_X porté par la première direction d'accouplement X, qui tend à rapprocher le premier module de tête 13 du second module de tête 23 et qui permet ainsi de pincer le module d'outillage 10 par compression entre lesdits premier et second modules de tête 23, tel que cela est visible sur la figure 27.

Avantageusement, ledit angle d'inclinaison A56 des rampes 56 permet d'obtenir un effet amplificateur, et ainsi de générer un effort de serrage F_X d'intensité supérieure à l'intensité des efforts de traction développés par les moteurs 53 des mors 51, 52, ce qui, encore une fois, favorise la compacité de l'installation 1.

Selon une application préférentielle de l'invention, l'intensité de l'effort de serrage F_X qui est mis en oeuvre selon la direction d'accouplement X est strictement supérieure, de préférence au moins trois fois supérieure, préférentiellement au moins cinq fois supérieure, voire au moins huit fois supérieure, à l'intensité de l'effort de précharge F_Z qui est mis en oeuvre pour contraindre le module d'outillage 10 contre le premier palier 4 selon la direction d'engagement Z. A titre indicatif, l'intensité de l'effort de serrage F_X pourra notamment être 5 fois à 10 fois, et préférentiellement 8 fois à 8,5 fois supérieure à l'intensité de l'effort de précharge F_Z.

Avantageusement, une telle intensité de l'effort de serrage F_X permet aux modules de tête 13, 23 d'assurer un pincement suffisant du module d'outillage 10 pour que, dans la direction d'engagement Z, c'est-à-dire ici selon une composante verticale, l'intensité (ici verticale ascendante) de la limite de frottement sans glissement qui caractérise l'effort de frottement résistant que peuvent exercer sur les faces réceptrices 10A, 10B dudit module d'outillage les faces de connexion 13A, 23A correspondantes desdits premier et second modules de tête 13, 23, qui se trouvent pressées au contact desdites faces réceptrices 10A, 10B, soit strictement supérieure à l'intensité maximale prévisible de la composante verticale (ici verticale descendante) de la résultante de la pression du matériau extrudé sur le module d'outillage 10 selon cette même direction d'engagement Z.

En d'autre termes, l'effort de serrage F_X est choisi suffisamment élevé pour que le pincement transverse du module d'outillage 10 par les premier et second modules de tête 13, 23 permette auxdits modules de tête 13, 23 d'exercer sur ledit module d'outillage 10, par friction, et donc par réaction passive aux effets de la pression de service qui règne dans l'entrefer 12 au cours de la production d'un profilé 2 et qui tend à repousser la filière 11 à distance du rouleau 3, un effort de retenue qui est dirigé selon la direction d'engagement Z, qui est de signe opposé à l'effort résultant de la pression de service qui s'exerce sur le bloc d'outillage 10, et qui est suffisamment élevé pour s'opposer et équilibrer à tout moment ledit effort résultant de la pression de service, et donc pour empêcher le module d'outillage 10 de glisser et de reculer selon la direction d'engagement Z sous l'effet de ladite pression de service.

A titre indicatif, l'effort de serrage F_X appliqué sera de préférence compris entre 2 400 kN et 12 000 kN, soit environ l'équivalent de 240 tonnes à 1 200 tonnes.

On notera que, avantageusement, et selon une caractéristique préférentielle qui peut constituer une invention en tant que telle, l'agencement spatial de l'installation 1 est en définitive optimisé en matière d'accessibilité aux organes de l'installation 1 et de compacité globale de ladite installation, en ceci que ledit agencement exploite les six directions de l'espace tridimensionnel qui sont disponibles tout autour de l'emplacement coeur 60 de l'installation 1, c'est-à-dire tout autour de l'emplacement 60 qu'occupe le module d'outillage 10 en configuration de fermeture, et lors de la production d'un profilé 2. Par convention, on peut en effet définir six directions X+, Y+, Z+, X-, Y-, Z- en se basant sur les trois directions principales X, Y, Z qui présentent chacune une orientation propre, et en considérant que chacune desdites directions principales X, Y, Z peut être parcourue soit dans un sens positif (+), soit dans un sens négatif (-).

Ici, si l'on considère l'emplacement coeur 60 comme origine d'un référentiel, dont la base orthonormée est définie par les trois directions principales que constituent la première direction d'engagement Z, la seconde direction d'accouplement X, et la troisième direction de verrouillage Y, directions principales X, Y, Z qui sont croisées deux à deux, et plus préférentiellement perpendiculaires deux à deux de sorte à former un trièdre rectangle, et si l'on assimile, par simple commodité de description, ledit emplacement coeur 60 au volume dans lequel s'inscrit le module d'outillage 10 en configuration de fermeture et qui est délimité virtuellement par les six faces virtuelles d'un parallélépipède rectangle, faces virtuelles qui sont chacune normale à l'une des première, seconde et troisième directions principales X, Y, Z, et qui correspondent ainsi en pratique sensiblement voire exactement aux six faces extérieures du module d'outillage 10 lorsque ledit module d'outillage 10 se trouve au sein dudit emplacement coeur 60 conformément à la configuration d'engagement ou à la configuration de fermeture, alors on peut constater que, préférentiellement :
- le rouleau 3 est disposé en vis-à-vis d'une première face virtuelle de l'emplacement coeur 60 qui est normale à la première direction principale Z, à savoir la direction d'engagement Z, et qui correspond ici à la face supérieure du module d'outillage 10, de sorte que ledit rouleau couvre a direction Z+, tandis que l'ascenseur 20 qui permet alternativement d'engager le module d'outillage 10 dans l'emplacement coeur 60, à l'encontre du premier palier 4, ou d'évacuer le module d'outillage 10 de l'emplacement coeur 60, est disposé et monté mobile selon cette même première direction principale d'engagement Z, mais en vis-à-vis d'une seconde face virtuelle de l'emplacement coeur 60 qui est parallèle à la première face virtuelle et opposée à ladite première face virtuelle le long de la première direction principale d'engagement Z, et qui correspond ici à la face inférieure du module d'outillage 10, c'est-à-dire que ledit ascenseur 20 couvre la direction Z-,
- que les premier et second modules de têtes 13, 23, et par conséquent les extrudeuses 14, 24, de préférence toutes les extrudeuses de l'installation 1, sont disposés et montés mobiles par rapport à l'emplacement coeur 60 selon la seconde direction principale X, à savoir la direction d'accouplement X, en vis-à-vis respectivement, pour le premier module de tête 13, d'une troisième face virtuelle de l'emplacement coeur 60 qui est normale à ladite seconde direction principale d'accouplement X et qui correspond à la première face réceptrice 10A du module d'outillage, de sorte à couvrir la direction X-, et, pour le second module de tête 23, d'une quatrième face virtuelle de l'emplacement coeur, qui est parallèle à la troisième face virtuelle et opposée à ladite troisième face virtuelle le long de la seconde direction principale d'accouplement X, et qui correspond à la seconde face réceptrice 10B du module d'outillage, de sorte à couvrir la direction X+,
- et que les premier et second mors 51, 52 du mécanisme de verrouillage 50 sont disposés et montés mobiles par rapport à l'emplacement coeur 60 selon la troisième direction principale Y, à savoir la direction de verrouillage Y, en vis-à-vis respectivement, pour le premier mors 51, d'une cinquième face virtuelle de l'emplacement coeur 60 qui est normale à ladite troisième direction principale de verrouillage Y et qui correspond ici à la première face latérale du module d'outillage 10, de sorte à couvrir la direction Y-, et, pour le second mors 52, d'une sixième face virtuelle de l'emplacement coeur qui est parallèle à la cinquième face virtuelle et opposée à ladite cinquième face virtuelle le long de la troisième direction principale de verrouillage Y, et qui correspond ici à la seconde face latérale du module d'outillage 10, de sorte à couvrir la direction Y+.

Ainsi, tous les organes de l'installation 1 sont avantageusement répartis de façon homogène autour de l'emplacement coeur 60, et le cas échéant montés mobiles dans des directions X-, X+, Y-, Y+, Z-, Z+ réparties de façon homogène autour de l'emplacement coeur 60, chacune des six faces virtuelles délimitant ledit emplacement coeur 60 étant en effet occupée par et/ou agencée pour coopérer avec l'un desdits organes de l'installation, à savoir respectivement : le premier module de tête 13, le second module de tête 23, le premier mors de verrouillage 51, le second mors de verrouillage 52, le rouleau 3 (et son ou ses paliers 4, 5), et l'ascenseur 20 porteur du module d'outillage 10.

Selon une caractéristique préférentielle qui peut constituer une invention à part entière, l'étape (s1) d'engagement comprend une phase (s1_1) d'approche, au cours de laquelle on déplace le module d'outillage 10 selon la direction d'engagement Z, ici selon le mouvement ascendant noté MZ+, jusqu'à ce que ledit module d'outillage 10 entre au contact d'une butée d'accostage 18 qui est solidaire du premier palier 4 et qui permet de stopper le module d'outillage 10 par rapport au rouleau 3 à une distance adaptée à l'entrefer 12 souhaité, tel que cela est illustré sur les figures 9 et 10, puis une phase (s1_2) de précharge, au cours de laquelle on poursuit le mouvement, ici le mouvement ascendant MZ+, du module d'outillage 10 afin d'entraîner le premier palier 4 solidairement avec le module d'outillage 10 selon cette même direction d'engagement Z, jusqu'à ce que ledit premier palier 4 vienne buter en appui contre un premier organe de retenue 61, contre lequel le premier palier 4 se retrouve bloqué et contraint dans la direction d'engagement Z par l'effort de précharge F_Z qui est exercé par le module d'outillage 10 à l'encontre dudit premier palier 4 et du premier organe de retenue 61, tel que cela est illustré sur les figures 13 et 14.

De préférence, c'est l'ascenseur 20 qui exécute la phase (s1_1) d'approche, en effectuant ainsi en pratique la première et plus grande partie de la course totale qu'accomplit le module d'outillage 10 lors du mouvement global d'engagement qui amène finalement ledit module d'outillage 10 en configuration d'engagement contre le premier palier 4, tandis que ce sont les actionneurs de précharge 21, 22, distincts de l'ascenseur 20, qui prennent le relais pour exécuter la phase (s1_2) de précharge.

Lesdits actionneurs de précharge 21, 22 exécutent ladite phase (s1_2) de précharge tout d'abord en faisant accomplir au module d'outillage 10, et au premier palier 4, la seconde, dernière et plus petite partie de la course totale d'engagement, c'est-à-dire la course résiduelle qui sépare encore le premier palier 4 du premier organe de retenue 61 au moment où le module d'outillage 10 entre au contact de la butée d'accostage 18 dudit premier palier 4, puis ensuite en provoquant une augmentation rapide de l'intensité de la compression du module d'outillage 10 contre la butée d'accostage 18 et donc contre le premier palier 4 sitôt que ledit premier palier 4 est stoppé par son entrée au contact du premier organe de retenue 61.

En effet, dès lors que le premier palier 4, et donc le module d'outillage qui lui est accolé via la butée d'accostage 18, se trouve bloqué par le premier organe de retenue 61 qui s'oppose à la poursuite du mouvement ascendant MZ+ dudit premier palier 4 selon la direction d'engagement Z, tandis que par ailleurs les actionneurs de précharge 21, 22 continuent de pousser le module d'outillage 10 à l'encontre dudit premier palier 4, et donc, par l'intermédiaire dudit palier 4, à l'encontre du premier organe de retenue 61, alors on observe quasi-instantanément une augmentation de la compression du module d'outillage 10 contre le premier palier 4, ce qui permet d'atteindre rapidement l'intensité souhaitée de l'effort de précharge F_Z.

Avantageusement une telle approche différentielle permet de combiner précision, reproductibilité, et robustesse de l'entrefer.

En effet, la hauteur H12 dudit entrefer 12 est essentiellement déterminée par la position de la butée d'accostage 18, qui est fixe par rapport au premier palier 4 et donc par rapport à l'axe central Y3 du rouleau, et qui stoppe donc le déplacement relatif du module d'outillage 10 par rapport audit premier palier 4 et par rapport à l'axe central Y3 du rouleau, et par conséquent qui stoppe la face terminale 11A de la filière 11 portée par le module d'outillage 10, à une distance radiale voulue de l'axe central Y3 du rouleau, et donc à une distance radiale souhaitée de la surface de réception du rouleau 3A (qui se trouve quant à elle à distance radiale fixe dudit axe central Y3).

A ce titre, on notera toutefois que l'entrée du module d'outillage 10 au contact de la butée d'accostage 18 ne bloque pas, dans un premier temps, le mouvement d'engagement ascendant MZ+ du module d'outillage 10 par rapport au bâti 32, puisque le premier palier 4 dispose lui-même d'un certain degré de liberté selon la direction d'engagement Z, par rapport au bâti 32, de sorte que l'équipage mobile qui se forme à l'issue de la phase (s1_1) d'approche, en réunissant le module d'outillage 10, le premier palier 4 et le rouleau 3 porté par ledit premier palier 4, peut poursuivre le mouvement d'engagement ascendant MZ+, en un même sous-ensemble, sous l'action des actionneurs de précharge 21, 22, jusqu'à être finalement effectivement stoppé et immobilisé par rapport au bâti 32, dans un second temps, par le premier organe de retenue 61 qui bloque la progression dudit équipage mobile dans la direction d'engagement Z, dans le sens du mouvement ascendant MZ+.

Avantageusement, cet engagement en deux phases permet notamment de rattraper tous les jeux de construction qui existent ou pourraient exister initialement le long de la direction d'engagement Z, à travers les liaisons successives entre le dispositif d'engagement 19 (ascenseur 20 et actionneurs de précharge 21, 22), le module d'outillage 10, et le premier palier 4 portant le rouleau 3. En effet, l'installation 1 permet ainsi de réaliser, selon la direction d'engagement Z, un empilement serré, qui se trouve contraint et donc verrouillé sans jeu, par l'application de l'effort de précharge F_Z.

On notera que la précontrainte exercé par l'effort de précharge F_Z permet non seulement de rattraper les éventuels jeux initiaux, c'est-à-dire les éventuels intervalles vides qui subsistaient initialement entre les différents organes concernés, mais également de créer une certaine déformation élastique des différents organes ainsi placés sous contrainte, ce qui évite tout relâchement desdits organes, et donc toute réapparition ultérieure de jeux. En particulier, grâce à la précharge, que l'on choisira supérieure à la contrainte prévisible qui est générée, en cours de production, par la pression de service exercée par le matériau à l'encontre du rouleau 3 depuis le module d'outillage 10, on s'assurera que ladite contrainte générée par la pression du matériau en cours de production ne provoquera pas de déformation élastique, et donc de déplacement non contrôlé, de l'organe de retenue 61 qui retient le palier 4 porteur du rouleau 3.

De préférence, la butée d'accostage 18 pourra être réglable, par exemple au moyen d'un jeu de cales interchangeables, telles que des entretoises, de sorte à ce que l'opérateur puisse choisir, avant d'engager la fermeture de l'installation 1, la distance de l'axe du rouleau Y3 à laquelle ladite butée d'accostage 18 doit intercepter et stopper le module d'outillage 10, et donc de sorte que l'opérateur puisse choisir et ajuster selon les besoins de production la hauteur H12 de l'entrefer 12.

De préférence, le second palier 5 comprend lui aussi, de manière analogue, une butée d'accostage 18.

De préférence, ladite butée d'accostage 18 associée au second palier se trouve, selon la direction d'engagement Z, à la même distance de l'axe central Y3 du rouleau, c'est-à-dire ici plus particulièrement à la même altitude, que la butée d'accostage 18 associée au premier palier 4.

De la sorte, le module d'outillage 10 vient, de préférence simultanément, et plus préférentiellement à une même altitude selon la direction d'engagement Z, en appui contre chacune des deux butées d'accostage 18, qui sont solidaires respectivement pour la première du premier palier 4, et pour la seconde du second palier 5, et qui sont donc réparties axialement de part et d'autre du rouleau 3, et plus particulièrement de part et d'autre du plan frontal PF, tel que cela est notamment visible sur les figures 3, 7, 10 et 14.

Ainsi, le premier palier 4 et le second palier 5 sont déplacés simultanément selon la direction d'engagement Z par le module d'outillage 10, lors de la phase (s1_2) de précharge, de façon bien équilibrée de part et d'autre du plan frontal PF, ce qui permet de maintenir constante l'orientation, et plus particulièrement ici l'assiette horizontale, de l'axe central Y3 du rouleau pendant ladite phase de précharge (s1_2).

Le premier organe de retenue 61 est de préférence doublé, c'est-à-dire agencé de sorte à pouvoir intercepter et bloquer simultanément le premier palier 4 d'une part, et le second palier 5 d'autre part, de part et d'autre du rouleau 3 et du plan frontal PF.

Pour permettre la génération d'un effort de précharge F_Z efficace, qui vienne comprimer les uns contre les autres, dans cet ordre, le module d'outillage 10, les premier et second palier 4, 5 via leurs butées d'accostage 18 respectives, et le premier organe de retenue 61, les butées d'accostage 18 se situent, le long de la direction d'engagement Z, ici verticale, à une distance intermédiaire (ici une altitude intermédiaire) qui est strictement comprise entre l'axe central Y3 du rouleau et la partie du module d'outillage 10 la plus éloignée dudit axe central Y3.

Pour conférer au premier palier 4 et au second palier 5 la mobilité nécessaire à l'exécution de la phase (s1_2) de précharge, lesdits premier et second paliers 4, 5 seront de préférence pourvus respectivement d'une première coulisse 62 et d'une seconde coulisse 63, guidées chacune en translation selon la direction d'engagement Z, respectivement dans un premier poteau 64 et un second poteau 65 qui sont tous les deux solidaires du bâti 32, tel que cela est notamment visible sur les figures 1, 3, 10, 12 et 14.

Par ailleurs, on notera que, de préférence, contrairement à l'ascenseur 20 qui est guidé sur et part le bâti 32, de préférence via les poteaux 64, 65, les actionneurs de précharge 21, 22 sont portés respectivement par les premier et second modules de tête 13, 23, sur lesquels lesdits actionneurs de précharge 21, 22 s'appuient pour pouvoir générer l'effort de précharge F_Z. Il est ainsi possible de générer un effort de précharge F_Z particulièrement élevé en prenant un appui solide, dans la direction d'engagement Z, au niveau des modules de tête 13, 23, et par conséquent en prenant, par l'intermédiaire des chariots 30 et 40 et des rails 31, 41 correspondants, un appui solide sur le bâti 32 dans la direction d'engagement Z, et ce sans qu'il soit nécessaire de faire supporter tout cet effort de précharge F_Z par l'ascenseur 20 lui-même.

Selon un possible agencement, les premier et second actionneurs de précharge 21, 22 pourront être formés par des curseurs, qui sont montés mobiles et guidés en translation selon la direction d'accouplement X, au sein du premier module de tête 13 et respectivement du second module de tête 23.

Lesdits actionneurs de précharge 21, 22 pourront être pourvus chacun d'une rampe 21A, 22A.

Lesdites rampes 21A, 22A seront de préférence inclinées d'un angle compris entre 10 degrés et 30 degrés par rapport à la direction d'accouplement X, et plus globalement par rapport au plan normal à la direction d'engagement Z, ici donc par rapport au plan horizontal, et/ou, de façon équivalente, inclinées d'un angle compris entre 60 degrés (=90-30) et 80 degrés (=90-10) par rapport à la direction d'engagement Z.

De la sorte, les actionneurs de précharge 21, 22 formeront des coins qui pourront alternativement soit être rétractés dans une position de repos (figures 2, 6, 9) au sein de leur module de tête 13, 23 respectif, en retrait de la face de connexion 13A, 23A correspondante par rapport à l'emplacement coeur 60, par rapport au module d'outillage 10, et par rapport au plan sagittal PS, soit au contraire être poussés en saillie de la face de connexion 13A, 23A de leur module de tête 13, 23 (figure 13), par un mouvement d'avance FM_21, FM_22 différentiel par rapport au chariots 30, 40 portant les modules de tête 13, 23, de sorte à engager leur rampe 21A, 22A à l'encontre du module d'outillage 10, et ainsi tendre à forcer le rapprochement puis causer la compression en précharge F_Z du module d'outillage 10 à l'encontre du premier palier 4, et du premier organe de retenue 61.

Lesdits actionneurs de précharge 21, 22 pourront être entraînés par tout moyen d'entraînement approprié, de type moteur, ou vérin, électrique ou hydraulique, de préférence embarqué sur le module de tête 13, 23 concerné.

De préférence les premier et second actionneurs de précharge 21, 22 agiront en opposition l'un de l'autre, en miroir de part et d'autre du module d'outillage 10 et du plan sagittal PS contenant la direction d'engagement Z, en émergeant respectivement du premier module de tête 13 et du second module de tête 23, de sorte à exercer une action équilibrée sur le module d'outillage 10, et ainsi conserver l'assiette dudit module d'outillage 10 par rapport à la direction d'engagement Z.

En outre, le mouvement de translation différentielle de chacun des actionneurs de précharge 21, 22 selon la direction d'accouplement X, généré par le moyen d'entraînement de l'actionneur de précharge considéré, s'effectue par rapport à son module de tête 13, 23 respectif, tandis que ledit module de tête 13, 23 est maintenu en position selon ladite direction d'accouplement X par un puissant vérin 33, 43. Il est donc possible aux actionneurs de précharge 21, 22 d'exercer à l'encontre du module d'outillage 10 un effort de pénétration élevé selon la direction d'accouplement X, sans provoquer de recul des modules de tête 13, 23, ce qui permet donc de créer, via la conversion opérée par les rampes 21A, 22A, un effort de précharge F_Z très élevé.

De préférence, la distance JZ dite « jeu pour précharge » JZ qui sépare initialement, avant l'exécution de la phase (s1_2) de précharge, le premier palier 4 du premier organe de retenue 61 selon la direction d'engagement Z, tel que cela est visible sur les figures 5, 6, 8 et 11, et qui forme donc la distance qui est parcourue par le premier palier 4 dans ladite direction d'engagement Z lors de ladite phase (s1_2) de précharge, est comprise entre 0,1 mm et 1 mm.

Avantageusement, ce léger jeu pour précharge JZ offre à l'équipage mobile formé par le module d'outillage 10 et les premier et second paliers 4, 5 une course qui est à la fois suffisamment longue pour permettre aux actionneurs de précharge 21, 22 d'exécuter convenablement leur mouvement d'avance FM_21, FM_22 selon la direction d'accouplement X et d'engendrer un mouvement ascendant MZ+ d'ensemble permettant de rattraper les éventuels jeux présents au sein de l'équipage mobile, et néanmoins suffisamment courte pour être rapidement compensée par un glissement du module d'outillage 10 sur les rampes 21A, 22A de faible pente.

Le jeu pour précharge JZ devient avantageusement nul (JZ = 0) au moment où le premier et le second palier 4, 5, entraînés avec et par le module d'outillage 10 dans un mouvement ascendant MZ+, rencontrent le premier organe de retenue 61, comme c'est illustré sur les figures 12 à 15, et que l'on commence véritablement à faire naître l'effort de précharge F_Z souhaité, c'est-à-dire à précharger et à déformer élastiquement l'empilement formé par le module d'outillage 10, les paliers 4, 5 et l'organe de retenue 61, sous la poussée exercée par les organes de précharge 21, 22 selon la direction d'engagement Z, et ledit jeu pour précharge JZ reste nul aussi longtemps que les actionneurs de précharge 21, 22 agissent pour plaquer le module d'outillage 10 et les paliers 4, 5 contre le premier organe de retenue 61, c'est-à-dire aussi longtemps que l'on entretient l'effort de précharge F_Z souhaité, notamment pendant l'opération d'extrusion (figure 21).

De préférence, le premier organe de retenue 61 est solidaire du premier module de tête 13.

Ainsi, le module de tête 13 pourra servir d'ancrage au premier organe de retenue 61, et retenir ledit premier organe de retenue 61 (au moins) dans la direction d'engagement Z, afin d'empêcher ledit organe de retenue 61 de se déplacer dans ladite direction d'engagement Z sous la poussée des actionneurs de précharge 21, 22.

En outre, ledit premier organe de retenue 61 est ainsi de préférence embarqué sur le premier chariot 30 qui sert à déplacer le premier module de tête 13 selon la direction d'accouplement X, de sorte que ledit premier chariot 30 entraîne le premier organe de retenue 61 solidairement avec le premier module de tête 13 dans les mouvements d'avance FM_13 et de recul BM_13 dudit premier module de tête 13 selon ladite direction d'accouplement X.

De façon plus préférentielle, le premier organe de retenue 61 occupe, sur le premier module de tête 13, une position qui est fixe, au moins selon la direction d'engagement Z, plus préférentiellement qui est fixe aussi bien selon la direction d'engagement Z que dans la direction d'accouplement X, voire encore plus préférentiellement qui est fixe dans l'ensemble des trois directions principales X, Y, Z de l'espace, par rapport à la première face de connexion 13A dudit premier module de tête 13.

Le fonctionnement du premier organe de retenue 61 lors de la séquence de fermeture de l'installation 1 sera ainsi particulièrement prévisible, précis, et reproductible.

Eventuellement, le premier organe de retenue 61 pourra être formé d'un seul tenant avec la portion du premier module de tête 13 qui forme la première face de connexion 13A, afin de garantir la rigidité et la robustesse dudit organe de retenue 61.

En variante, l'organe de retenue 61 pourra être formé par une pièce rapportée et fixée, par exemple vissée, sur le premier module de tête 13, de sorte à être immobilisée par rapport à la première face de connexion 13A.

Avantageusement, puisque le premier organe de retenue 61 est lui-même retenu par le premier module de tête 13 à l'encontre de tout déplacement selon la direction d'engagement Z, en position invariante selon la direction d'engagement Z par rapport au premier chariot 30, et plus particulièrement en position invariante par rapport à la position occupée par les actionneurs de précharge 21, 22 selon ladite direction d'engagement Z, alors l'action de génération de l'effort de précharge F_Z par l'engagement des actionneurs de précharge 21, 22 à l'encontre du module d'outillage 10 revient donc à pincer, selon la direction d'engagement Z, ledit module d'outillage 10 et les premier et second paliers 4, 5 en étau entre deux mâchoires qui sont soutenues par le même module de tête 13, et plus particulièrement par le même chariot 30, à savoir une première mâchoire, formant ici mâchoire fixe dans la direction d'engagement Z, et qui est ici formée par le premier organe de retenue 61, et une seconde mâchoire, formant ici mâchoire mobile, et qui est formée par la rampe 21A, 22A de l'actionneur de précharge 21, 22 qui est situé sensiblement à l'aplomb de l'organe de retenue 61.

Ainsi, on pourra solidariser, provisoirement, le temps de la fermeture et de l'opération d'extrusion, le module d'outillage 10 aux paliers 4, 5, par l'intermédiaire du premier module de tête 13 (et plus préférentiellement par l'intermédiaire des premier et second modules de tête 13, 23), au moins selon la direction d'engagement Z.

Le premier organe de retenue 61 pourra présenter toute forme appropriée, du genre épaulement, lui permettant de venir se placer sur la trajectoire qu'emprunte le premier palier 4 selon la direction d'engagement Z lors de l'étape (s1) d'engagement.

De préférence, ledit premier organe de retenue 61 forme un crochet, préférentiellement en forme de C.

De préférence, l'ouverture concave dudit crochet est dirigée vers le plan sagittal PS, pour faire face aux paliers 4, 5 dans la direction d'accouplement X.

De façon particulièrement préférentielle, le premier organe de retenue 61 est agencé de sorte à venir se placer sur la trajectoire du premier palier 4 (c'est-à-dire sur la trajectoire que va emprunter ledit palier en effectuant le mouvement ascendant MZ+) lorsque le premier module de tête 13 passe, en suivant la direction d'accouplement X, de sa position d'ouverture totale P13_1 (figures 1 et 2) à sa position intermédiaire P13_2 (figures 5, 6 et 9), puis pour rester sur la trajectoire du premier palier 4 lorsque le premier module de tête 13 passe de sa position intermédiaire P13_2 à sa position de contact P13_3 (figure 16) et aussi longtemps que ledit premier module de tête 13 reste dans ladite position de contact P13_3, notamment pendant l'opération d'extrusion (figure 21).

Inversement, le premier organe de retenue 61 est de préférence agencé pour se dégager de la trajectoire du premier palier 4 lorsque le premier module de tête 13 s'éloigne du plan sagittal PS pour se placer en retrait de sa position intermédiaire P13_2, et notamment lorsque le premier module de tête 13 se trouve ou retourne en position d'ouverture totale P13_1 (figures 1, 2, 23).

Ainsi, avantageusement, en faisant porter le premier organe de retenue 61 par le premier module de tête 13, et plus particulièrement par le premier chariot 30, on peut commander simultanément le positionnement de l'organe de retenue 61 et le positionnement du premier module de tête 13, comme fonction des déplacements du premier module de tête 13 selon la direction d'accouplement X.

De la sorte, on peut positionner ledit organe de retenue 61 sur la trajectoire du premier palier 4, et, de même, positionner ledit organe de retenue 61 sur la trajectoire du second palier 5, en position bloquante pour lesdits paliers 4, 5, uniquement lorsque cela est utile, et au contraire dégager totalement l'accès aux paliers 4, 5 et au rouleau 3 lorsque l'installation se trouve en configuration d'ouverture.

Bien entendu, dans l'absolu, le premier organe de retenue 61 pourrait être porté par le second module de tête 23 plutôt que par le premier module de tête 23.

Toutefois, de préférence, le premier organe de retenue 61 sera solidaire du premier module de tête 13, tandis que le second module de tête 23 sera quant à lui pourvu d'un second organe de retenue 66, solidaire dudit second module de tête 23.

De manière analogue à ce qui a été décrit pour le premier organe de retenue 61, le second organe de retenue 66 est fixé sur le second chariot 40, et plus particulièrement se trouve en position fixe par rapport à la seconde surface de connexion 23A du second module de tête 23, au moins selon la direction d'engagement Z, de préférence à la fois selon la direction d'engagement Z et selon la direction d'accouplement X, voire dans l'ensemble des trois direction principales X, Y, 7.

De même, le second organe de retenue 66 se présente de préférence sous forme d'un crochet en C qui vient engager le premier palier 4, et plus particulièrement d'un crochet double capable de venir engager à la fois le premier palier 4 et le second palier 5, de part et d'autre du plan frontal PF. De même que pour le premier organe de retenue 61, un jeu pour précharge JZ sera prévu et utilisé entre le second organe de retenue 66 et le ou les paliers 4, 5 correspondants, de façon analogue à ce qui a été décrit plus haut.

Ainsi, avantageusement, le premier organe de retenue 61 et le second organe de retenue 66 coopèrent pour retenir le premier palier 4 chacun d'un côté du plan sagittal PS contenant la direction d'engagement Z, et de même pour le second palier 5. Un tel maintien symétrique des paliers 4, 5, réparti et sensiblement équilibré de part et d'autre du plan sagittal PS, est particulièrement robuste et stable.

Plus particulièrement, on retrouve ainsi un organe de retenue 61, 62, et une portion de palier 4, 5 correspondante, dans chacun des quatre quadrants que délimitent le plan frontal PF et le plan sagittal PS, en projection dans un plan de base, ici horizontal, normal à la direction d'engagement Z. On obtient donc une excellente assise des paliers 4, 5 et du rouleau 3 contre le module d'outillage 10 (et réciproquement).

Bien entendu, les organes de retenue 61, 66, de même que les modules de tête 13, 23, seront réalisés dans des matériaux suffisamment rigides, par exemple en alliage métallique, et plus préférentiellement en acier.

De préférence, le premier palier 4 comprend une semelle 67.

Ladite semelle 67 peut de préférence former deux branches qui s'étendent sensiblement perpendiculairement à la direction d'engagement Z, chacune d'un côté distinct par rapport au plan sagittal PS.

Lorsque le premier palier 4 comprend une semelle 67, et que le premier module de tête 13 comprend un premier organe de retenue 61, de préférence en forme de crochet, tandis que le second module de tête 23 comprend un second organe de retenue 66, de préférence en forme de crochet, alors lesdits premier et second organes de retenue 61, 66 sont de préférence agencés pour venir se placer en vis-à-vis de la semelle 67 du premier palier 4 afin de retenir et bloquer ledit premier palier selon la direction d'engagement Z, à l'encontre de l'effort de précharge F_Z exercé par le module d'outillage 10 sur ledit premier palier 4, tel que cela est notamment visible sur les figures 6 et 8.

De manière analogue, le second palier 5 comprendra de préférence une semelle 68.

Ainsi, de préférence, les crochets formant les organes de retenue 61, 66 sont dégagés de chaque palier 4, 5 considéré, et plus particulièrement de la semelle 67, 68 dudit palier 4, 5, lorsque les premier et second modules de tête 13, 23 se trouvent écartés de l'emplacement coeur 60, en position d'ouverture totale P13_1, et viennent se refermer sur lesdites semelles 67, 68 pour capturer celles-ci lorsque lesdits modules de tête 13, 23 se rapprochent de l'emplacement coeur 60 selon la direction d'accouplement X et gagnent leur position intermédiaire P13_2.

Le jeu pour précharge JZ correspond alors à la distance qui sépare, selon la direction d'engagement Z, et avant que les actionneurs de précharge 21, 22 n'entrent en action, la branche (ici la branche supérieure) de chaque crochet formant l'organe de retenue 61, 66 de la face correspondante (ici la face supérieure) de la semelle 67, 68 captive desdits crochets.

De façon préférentielle, et en particulier lorsque la direction d'engagement Z est verticale, ou sensiblement verticale, la phase (s 1 _2) de précharge s'effectue en soulevant le premier palier 4 au moyen du module d'outillage 10, et en maintenant le premier palier plaqué contre le premier organe de retenue 61 à l'encontre de la gravité.

Ainsi, lors de la phase (s1_2) de précharge, le premier palier 4 est soulevé par les actionneurs de précharge qui décollent ledit premier palier 4, et plus particulièrement sa semelle 67, du support sur lequel il repose en configuration d'ouverture, jusqu'à ce que ledit palier 4, et plus particulièrement la face supérieure de la semelle 67, vienne buter contre le premier organe de retenue 61, et contre le second organe de retenue 66, ici contre les faces inférieures respectives des branches supérieures des crochets formant lesdits premier et second organes de retenue 61, 66.

Avantageusement, un tel fonctionnement vertical permet d'exploiter le poids propre du rouleau 3 et des paliers 4, 5 pour assurer une assise stable de l'équipage mobile lors du mouvement ascendant MZ+, qui évite notamment tout basculement du rouleau 3 ou tout phénomène de coincement ou d'à-coup, ainsi que pour faciliter le rattrapage des jeux entre le module d'outillage 10 et les paliers 4, 5, du fait que le poids du rouleau 3 et des paliers 4, 5 se répartit sur les semelles 67, 68, à l'encontre de la poussée qui est exercée par les actionneurs de précharge 21, 22 et transmise à travers le module d'outillage 10.

Bien entendu, la poussée verticale créée par les actionneurs de précharge 21, 22 devra être suffisante non seulement pour compenser le poids cumulé du rouleau 3, des paliers 4, 5 et du module d'outillage 10, mais également, au-delà, pour atteindre l'effort de précharge F_Z, qui sera en pratique bien supérieur au seul poids du rouleau 3 et des paliers 4, 5 qui s'exerce à l'encontre du module d'outillage 10. A titre indicatif, le poids de l'ensemble formé par le rouleau 3 et les paliers 4, 5 pourra être de l'ordre de 5 tonnes, tandis que la précharge F_Z prévue pourra de préférence être de l'ordre de 60 tonnes.

Par ailleurs, un tel fonctionnement vertical simplifie le retour, ici la redescente, du rouleau 3 et des palier 4, 5, de manière automatique sous le simple effet de la gravité, lors du retour de l'installation 1 en configuration d'ouverture. Ce retour passif permet notamment d'économiser de l'énergie.

Ici encore, il en va également de même pour le second palier 5, qui est de préférence soulevé et plaqué contre les organes de retenue 61, 66, à l'encontre de la gravité.

Lors de l'étape (s1) d'engagement, l'effort de précharge F_Z qui contraint le module d'outillage 10 à l'encontre du premier palier 4, selon la direction d'engagement Z, est de préférence généré au moyen d'au moins un actionneur de précharge 21, 22, comme il a été dit plus haut, lequel au moins actionneur de précharge 21, 22 vient à cet effet en prise contre ledit module d'outillage 10 au niveau d'au moins une zone dite « zone d'accroche » 70 prévue dans ledit module d'outillage 10.

De préférence, notamment pour une meilleure compacité et une meilleure robustesse de l'installation 1, ladite zone d'accroche 70 est formée par la culasse du module d'outillage 10, c'est-à-dire par la face du module d'outillage 10, ici la face inférieure, qui se situe à l'opposé du rouleau 3 et de la face terminale 11A de la filière 11 selon la direction d'engagement Z, et plus particulièrement contre des portions inclinées de ladite culasse, qui présentent des formes conjuguées aux rampes 21A, 22A des actionneurs de précharge 21, 22.

Lors de l'étape (s2) de serrage, les premier et second modules de tête 13, 23 viennent quant à eux en appui contre le module d'outillage 10, pour exercer l'effort de serrage F_X, sur des portions dudit module d'outillage 10 dites « faces réceptrices » 10A, 10B, telles que décrites plus haut.

Selon une caractéristique préférentielle de l'invention qui peut constituer une invention à part entière, et tel que cela est visible sur la figure 16, les portions dudit module d'outillage 10 dites « faces réceptrices » 10A, 10B sur lesquelles viennent en appui les premier et second modules de tête 13, 23 se situent dans une zone intermédiaire 71 qui est comprise entre ladite au moins une zone d'accroche 70 et le rouleau 23, et qui sont donc plus proches de l'entrefer 12 que ne l'est ladite au moins une zone d'accroche 70 sollicitée par ledit au moins un actionneur de précharge 21, 22.

Ainsi, les premier et second modules de tête 13, 23 exercent leur effort de serrage F_X au plus près de l'entrefer 12, ce qui optimise la stabilité et la rigidité du maintien du module d'outillage 10 dans sa configuration d'engagement, et plus globalement dans la configuration de fermeture, et pendant toute l'opération d'extrusion.

Grâce à un tel agencement, on raccourcit en effet le plus possible la chaîne de transmission des efforts qui s'oppose au recul du module d'outillage, ou à tout autre déplacement non désiré dudit module d'outillage 10, sous l'effet de la pression du matériau extrudé qui règne dans l'entrefer 12.

De préférence, lorsque ledit module d'outillage 10 se trouve à l'emplacement coeur 60, au contact des butée d'accostage 18 des premier et second paliers 5, plus de 50% de la superficie de chaque face réceptrice 10A, 10B du module d'outillage 10, et plus préférentiellement la totalité de ladite superficie de chaque face réceptrice 10A, 10B, se situe dans la zone intermédiaire 71, c'est-à-dire plus proche de l'entrefer 12 et du rouleau 3, selon la direction d'engagement Z, que ne se trouve la zone d'accroche 70 la plus lointaine du rouleau 3, voire le cas échéant la zone d'accroche 70 la plus proche du rouleau, parmi la ou des zones d'accroche 70 qui coopèrent avec les actionneurs de précharge 21, 22.

Ainsi, la majorité, voire la totalité des surfaces de joint par lesquelles les modules de tête 13, 23 transmettent l'effort de serrage F_X au module d'outillage, selon la direction d'accouplement X, se trouvent plus proches du rouleau 3 et de l'entrefer 12, selon la direction d'engagement Z, et donc ici à une altitude plus élevée (mais néanmoins inférieure à l'altitude de l'axe central Y3), que la zone d'accroche 70, qui se trouve donc plus loin du rouleau et de l'entrefer que lesdites surfaces de joint, et donc ici à une altitude inférieure à celle des faces réceptrices 10A, 10B et des faces de connexion 13A, 23A correspondantes.

On notera par ailleurs que les faces de connexion 13A, 23A respectives des premier et second modules de tête 13, 23, de même que, de préférence, les faces réceptrices 10A, 10B correspondantes du module d'outillage, occupent préférentiellement une étendue selon la direction d'engagement Z, ici une plage d'altitudes, qui est sensiblement voire exactement identique, de manière à ce que, lors du serrage, les première et seconde faces de connexion 13A, 23A se chevauchent selon ladite direction d'engagement Z, et sollicitent donc le module d'outillage 10 selon un effort de serrage F_X qui constitue principalement, et de préférence exclusivement, une contrainte de compression.

On évite ainsi avantageusement de générer sur le module d'outillage 10, lorsque l'on applique l'effort de serrage F_X, des efforts tranchants qui créeraient des contraintes de cisaillement néfastes.

De même, les premier et second modules de tête 13, 23 sont de préférence agencés pour se chevaucher selon la troisième direction principale Y, et plus globalement de manière à se superposer exactement en projection dans un plan qui serait normal à leur direction d'accouplement X commune, par exemple ici, donc, en projection orthogonale dans le plan sagittal PS, de telle sorte que lesdits premier et second modules de tête 13, 23 sollicitent le module d'outillage 10 en compression, et non en cisaillement, lorsqu'ils appliquent l'effort de serrage F_X.

Un exemple préférentiel de séquence de fermeture selon l'invention va maintenant être décrit, en référence à l'installation 1 présentée sur les figures.

Initialement, l'installation 1 se trouve en configuration d'ouverture, les premier et second modules de tête 13, 23 se trouvant éloignés de l'emplacement coeur 60 selon la direction d'accouplement X, dans leurs positions d'ouverture totale P13_1, P23_1 de part et d'autre du pan sagittal PS, et le module d'outillage 10 se trouve en configuration de dégagement, hors de l'emplacement coeur 60, à distance du rouleau 3 et des butées d'accostage 18, tel que cela est illustré sur les figures 1 et 2.

Tout d'abord, le dispositif d'accouplement 29 permet, de préférence au moyen d'un premier chariot 30 guidé par un premier rail 31 selon la direction d'accouplement X et portant le premier module de tête 13 et d'un second chariot 40 guidé par un second rail 41 selon la direction d'accouplement X et portant le second module de tête 23, de rapprocher l'un de l'autre le premier module de tête 13, portant son premier organe de retenue 61, et le second module de tête 23, portant son second organe de retenue 66, jusqu'à une configuration dite « configuration de pré-positionnement », tel que cela est illustré sur les figures 5 et 6.

Pour ce faire, les chariots 30, 40, et donc les premier et second modules de tête 13, 23 se rapprochent, sensiblement en miroir, du plan sagittal PS, par des mouvements d'avance FM_13, FM_23 qui convergent vers l'emplacement coeur 60, jusqu'à atteindre leurs positions intermédiaires P13_2, P23_2 qui correspondent à ladite configuration de pré-positionnement, comme illustré sur les figures 5 et 6.

Dans cette configuration de pré-positionnement, lesdits premiers et second modules de tête 13, 23 délimitent entre eux un passage pour le module d'outillage 10.

Ledit passage est agencé pour permettre au module d'outillage 10 de rejoindre l'emplacement coeur 60 et de venir au contact des paliers 4, 5 en passant entre les premier et second modules de tête 13, 23, et plus particulièrement en passant entre les faces de connexion 13A, 23A de ceux-ci. A ce titre, et tel que cela est visible sur les figures 6 et 13, lorsqu'ils se trouvent dans leur position intermédiaire P13_2, P23_2, les premier et second modules de tête 13, 23 ménagent une distance minimale selon la direction d'accouplement X, dite «jeu de passage » JX, entre leurs faces de connexion 13A, 23A et les trajectoires prévues (selon la direction d'engagement Z) pour les faces réceptrices 10A, 10B correspondantes du module d'outillage.

Géométriquement, le jeu de passage JX correspond de préférence à la distance, mesurée selon la direction d'accouplement X, qui sépare alors la face de connexion 13A, 23A appartenant à un module de tête 13, 23 de la face fictive correspondante de l'emplacement coeur 60 qui est parallèle à, et la plus proche de, ladite face de connexion 13A, 23A.

De préférence, le jeu de passage JX est compris entre 0,5 mm et 50 mm.

En outre, dans cette configuration de pré-positionnement, les premier et second organes de retenue 61, 66 viennent se placer en vis-à-vis de la semelle 67 du premier palier 4 selon la direction d'engagement Z, à une distance non nulle de ladite semelle 67 selon ladite direction d'engagement Z, dite «jeu pour précharge » JZ, lequel jeu pour précharge est de préférence compris entre 0,1 et 1 mm, comme cela a été dit plus haut. Ainsi, les premier et second organes de retenue 61, 66 forment des obstacles sur la trajectoire, ici ascendante, du premier palier 4 selon la direction d'engagement Z.

De même, les premier et second organes de retenue 61, 66 viennent se positionner sur la trajectoire destinée à être empruntée par la semelle 68 du second palier 5 selon la direction d'engagement Z.

Ici, plus particulièrement, les branches supérieures des crochets formant les organes de retenue 61, 66 sont rapprochées du plan sagittal PS, dans le même mouvement d'avance FM_13, FM_23 que les modules de tête 13, 23 dont lesdits organes de retenue 61, 66 sont solidaires respectivement, de sorte à venir se placer au-dessus, c'est-à-dire à l'aplomb vertical, des branches de chaque semelle 67, 68, pour recouvrir au moins partiellement lesdites semelles 67, 68.

Le dispositif d'engagement 19 est quant à lui conçu pour déplacer ensuite, de préférence au moyen d'un ascenseur 20, ici selon un mouvement vertical ascendant MZ+ en translation, le module d'outillage 10 selon la direction d'engagement Z, à travers le passage délimité par les premier et second modules de tête 13, 23, jusqu'à ce que ledit module d'outillage 10 entre en contact avec la butée d'accostage 18 solidaire du premier palier 4 (et, respectivement, jusqu'à ce que le module d'outillage entre, simultanément, au contact de la butée d'accostage 18 solidaire du second palier 5).

Cette phase (s1_1) d'approche est notamment illustrée sur les figures 9 et 10.

Le dispositif d'engagement 19 est également conçu pour, ensuite, poursuivre, de préférence au moyen d'au moins un actionneur de précharge 21, 22 pourvu d'une rampe 21A, 22A venant s'engager en appui contre le module d'outillage 10 transversalement à la direction d'engagement Z, le déplacement dudit module d'outillage 10 en entraînant solidairement le premier palier 4 avec ledit module d'outillage 10 selon cette même direction d'engagement Z jusqu'à ce que la semelle 67 dudit premier palier 4 vienne buter contre le premier et le second organe de retenue 61, 66, rattrapant ainsi le jeu pour précharge (JZ=0) et plaçant ainsi le module d'outillage 10 en configuration d'engagement, soumis à l'effort de précharge F_Z, tel que cela est illustré sur la figure 13.

On notera que la distance qui sépare, selon la direction d'engagement, les actionneurs de précharge 21, 22 des organes de retenue 61, 66 est avantageusement courte, et en particulier strictement inférieure à la hauteur des poteaux 64, 65. De la sorte, la création de l'effort de précharge F_Z générera une déformation élastique des éléments concernés, et notamment un déplacement du rouleau 3 sous l'effet de la précharge, qui est bien moindre que ce que ladite déformation, et donc le déplacement du rouleau 3, auraient été si la boucle d'effort de précharge était passée par les poteaux 64, 65, sur toute la hauteur desdits poteaux. Ainsi, on peut appliquer, sans perturber l'agencement et donc la fonctionnalité de l'installation 1, un effort de précharge F_Z d'intensité très élevée, supérieure en valeur absolue à l'intensité de l'effort qui résultera de la pression exercée dans l'entrefer 12 par le matériau extrudé.

Durant cette phase (s1_2) de précharge, le jeu de guidage JX, c'est-à-dire ici le jeu latéral entre le module d'outillage 10 et les modules de tête 13, 23, subsiste, et les première et seconde faces de connexion 13A, 23A des premier et second module de tête 13, 23 contribuent avantageusement au guidage en translation du module d'outillage 10 selon la direction d'engagement Z, entre lesdits modules de tête 13, 23, parallèlement auxdites faces de connexion 13A, 23A.

Le dispositif d'accouplement 29 est quant à lui également agencé pour pouvoir ensuite rapprocher davantage les premier et second modules de tête 13, 23 l'un de l'autre selon la direction d'accouplement X, à l'encontre du module d'outillage 10, pour placer lesdits premier et second modules de tête 13, 23 dans la configuration de fermeture, tel que cela est illustré sur la figure 16.

Au cours de cette étape (s2) de serrage, on reprend et on achève donc les mouvements d'avance FM_13, FM_23 des modules de tête 13, 23 selon la direction d'accouplement X et vers le plan sagittal PS, afin tout d'abord de rattraper les jeux de passage (JX = 0) pour placer les faces de connexion 13A, 23A des modules de tête 13, 23 au contact des faces réceptrices 10A, 10B du module d'outillage, c'est-à-dire à placer les modules de tête 13, 23 dans leurs positions de contact P13_3, P23_3 respectives, puis ensuite afin de générer, par compression des modules de tête 13, 23 contre le module d'outillage 10, l'effort de serrage F_X souhaité.

Le module d'outillage 10 se retrouve ainsi verrouillé fermement au sein de l'emplacement coeur 60, en restant précontraint en compression à l'encontre des paliers 4, 5 par l'effort de précharge F_Z qui est porté par la direction d'engagement Z et dirigé vers l'axe central Y3 du rouleau et vers l'entrefer 12. Avantageusement, l'application de l'effort de serrage F_X porté par la direction d'accouplement X transverse empêche le module d'outillage de reculer spontanément selon la direction d'engagement Z, et donc empêche ledit effort de précharge F_Z de se relâcher.

Avantageusement, le verrouillage du module d'outillage 10 par les modules de tête 13, 23 débute au plus près de l'entrefer 12, quasiment à l'altitude dudit entrefer, et se répartit au plus sur la hauteur du module d'outillage 10, et donc sur une hauteur relativement courte. Ainsi, la boucle d'effort qui relie le module d'outillage 10 à la surface de réception 3A du rouleau, en passant par les modules de tête 13, 23, les organes de retenue 61, 66, puis les paliers 4, 5 et le rouleau 3, et qui se referme à travers l'entrefer 8 qui sépare la surface réceptrice 3A du rouleau du module d'outillage 10 est particulièrement courte. L'entrefer 12 est donc particulièrement stable et peu sensible, en particulier peu déformable, vis-à-vis des contraintes générées par la pression du ou des matériaux extrudés.

De préférence, le déplacement et le serrage des modules de tête 13, 23 à l'encontre l'un de l'autre est réalisé au moyen des premier et second mors 51, 52 auto-tractés, dont les tirants 54 viennent crocheter les points d'ancrage 55 prévus dans les modules de tête 13, 23 afin de permettre à chacun desdits mors 51, 52 d'exercer une traction, portée par la direction de verrouillage Y, simultanément sur un flan latéral du premier module de tête 13 et sur un flanc latéral du second module de tête 23, de sorte à forcer le rapprochement des mors 51, 52 l'un de l'autre selon la direction de verrouillage Y transverse à la direction d'accouplement X, et par conséquent, grâce aux rampes 56, de générer sur les modules de tête 13, 23 un effort de compression porté par la direction d'accouplement X, tel que cela est illustré sur les figures 26A, 26B et 26C.

Plus préférentiellement, ce sont les chariots 30, 40 qui placent d'abord les modules de tête 13, 23 au contact du module d'outillage 10, de sorte qu'il n'y ait plus de jeu de passage JX, pour que, ensuite, les mors 51, 52 n'aient plus qu'à agir sur les modules de tête 13, 23 déjà placés au contact du module d'outillage 10 pour générer la contrainte de serrage F_X, par compression élastique des modules de tête 13, 23 contre le module d'outillage 10.

On notera que, lors du passage des premier et second modules de tête 13, 23 de leur position intermédiaire P13_2, P23_2 à leur position de contact 13_3, P23_3, les organes de retenue 61, 66 appartenant respectivement au premier module de tête 13 et au second module de tête 23 se déplacent avantageusement avec lesdits modules de tête 13, 23 selon la direction d'accouplement X tout en restant au contact respectivement du premier palier 4 et du second palier 5, ici en glissant sur la face supérieure de la semelle 67, de sorte à ne provoquer aucun relâchement de l'effort de précharge F_Z.

A cet effet, la face inférieure de la branche supérieure de chaque crochet formant l'organe de retenue 61, 66 concerné, de même que la face supérieure de la semelle 67 sur laquelle ledit crochet vient en prise, sera de préférence parallèle à la direction d'accouplement X, et de préférence plane et, ici, horizontale.

De préférence, les étapes de la séquence de fermeture, et notamment la succession des étapes de pré-positionnement, (s1) d'engagement (avec ses phases d'approche (s1_1) puis de précharge (s1_2)), puis (s2) de serrage, seront exécutées et enchaînées de manière automatique au moyen d'une unité de commande appropriée, de préférence une unité de commande électronique.

Par ailleurs, l'installation 1 comprend de préférence au moins un organe stabilisateur latéral 72, distinct des premier et second modules de tête 13, 23, par exemple un coin 72 monté mobile selon une troisième direction qui est transverse à la première direction d'engagement Z et à la seconde direction d'accouplement X, et qui correspond de préférence ici à la troisième direction principale Y, parallèle à l'axe central Y3 du rouleau.

Ledit organe stabilisateur latéral 72 est agencé pour, en configuration de fermeture, être engagé en force entre la semelle 67 du premier palier 4 et au moins l'un des premier et second modules de tête 13, 23, de préférence au creux de l'un au moins des premier et second organes de retenue 61, 66, tel que cela est illustré sur les figures 17, 18 et 19, de sorte à bloquer et contraindre le premier palier 4 selon la direction d'accouplement X, transverse à la direction d'engagement 7, à l'encontre des premier et second modules de tête 13, 23 qui enserrent par ailleurs le module d'outillage 10.

Avantageusement, un tel organe stabilisateur latéral 72 permettra de renforcer le maintien en position du premier palier 4, et donc de l'axe central Y3 du rouleau, par rapport au bâti 32, maintien en position qui est déjà du reste en grande partie, voire en pratique en totalité, assuré par la friction du palier 4 contre l'organe de retenue 61 sous l'effet de l'effort de précharge F_Z.

En effet, l'organe stabilisateur latéral 72 permet de créer - temporairement, le temps de la fermeture et de l'opération d'extrusion - une liaison fixe, qui ne présente aucun risque de glissement selon la direction d'accouplement X, entre le premier palier 4 et le bâti 32, liaison qui passe par ledit organe stabilisateur latéral 72 puis, par le module de tête 13 concerné et le chariot 30 correspondant pour rejoindre le bâti 32, via le rail 31 d'une part et le vérin 33 qui fixe la position du chariot 30 le long dudit rail 31 d'autre part. Le premier palier 4 se trouve ainsi fermement immobilisé, et même précontraint, selon la direction d'accouplement X.

Avantageusement, la liaison formée par l'organe stabilisateur latéral 72 est de surcroît distincte de la liaison formée par ailleurs par le premier poteau 64 et la première coulisse 62, de sorte que l'organe stabilisateur latéral 72 procure un appui déporté par rapport au premier poteau 64 et à la première coulisse 62, appui déporté qui renforce donc la tenue de l'ensemble, et empêche en particulier toute flexion du premier poteau 64, et tout basculement dans le plan frontal PF, qui tendrait à dévier ledit poteau 64 de la direction d'engagement Z, en le courbant ou en le faisant pencher vers la direction d'accouplement X.

De préférence, l'installation 1 comprendra au moins un premier organe stabilisateur latéral 72 destiné à être inséré entre le premier organe de retenue 61 et la branche de la semelle du premier palier 4 située du côté du premier module de tête 13 par rapport au plan sagittal PS, et un second organe stabilisateur latéral 73 destiné à être inséré entre le second organe de retenue 66 et l'autre branche de la semelle 67 du premier palier 4, située de l'autre côté du plan sagittal PS, c'est-à-dire du côté du second module de tête 23.

Bien entendu, on pourra de manière analogue prévoir un troisième organe stabilisateur latéral 74 et un quatrième organe stabilisateur latéral 75 pour agir sur, et stabiliser, le second palier 5, vis-à-vis respectivement du premier organe de retenue 61 et du second organe de retenue 66, tel que cela est visible sur les figures 18, 19 et 20.

La mise en oeuvre du ou des organes stabilisateurs latéraux 72, 73, 74, 75 constitue de préférence la dernière étape de la séquence de fermeture.

Un fois ladite séquence de fermeture achevée, le module d'outillage 10 se trouve bloqué et contraint par rapport au rouleau 3 de sorte à former, depuis les extrudeuses 14, 24 jusqu'à l'entrefer 12, via les canaux 17, un circuit d'extrusion étanche et aux dimensions fixes parfaitement maîtrisées.

On peut alors procéder à l'opération d'extrusion, telle qu'illustrée sur les figures 21 et 22.

Le ou les matériaux constitutifs du profilé, de préférence des mélanges à base de caoutchouc, sont ainsi malaxés et chauffés par les extrudeuses 14, 24, et forcés sous pression à travers les canaux 17 jusqu'à la filière 11 et l'entrefer 12 qui les ordonnent et les conforment en un profilé 2, lequel est entraîné par la rotation du rouleau 3 au fur et à mesure qu'il est généré et sort de l'entrefer 12.

Une fois l'opération d'extrusion terminée, et notamment si l'on souhaite remplacer le module d'outillage 10 en place par un autre module d'outillage, alors on procède à l'ouverture de l'installation 1 selon la séquence d'ouverture qui suit.

On commence tout d'abord par rappeler les chariots 30, 40 selon la direction d'accouplement X, en suivant un mouvement de recul BM_13, BM_23, afin d'écarter l'un de l'autre les premier et second modules de tête 13, 23, de préférence en faisant passer lesdits modules de tête 13, 23 de leur position de contact P13_3, P23_3 à leur position d'ouverture totale P13_1, P13_3, et ainsi de déconnecter leurs faces de connexion 13A, 23A des faces réceptrices 10A, 10B du module d'outillage 10 (figure 23). Ce faisant, on libère également les semelles 67, 68 des paliers 4, 5 de l'emprise des organes de retenue 61, 66. De préférence, on utilise également ce mouvement de recul des chariots 30, 40 pour dégager les actionneurs de précharge 21, 22 du module d'outillage 10, et ainsi libérer la trajectoire de l'ascenseur 20.

On évacue ensuite le module d'outillage 10 du rouleau 3 en faisant exécuter à l'ascenseur 20 un mouvement d'éloignement MZ-, ici un mouvement vertical descendant MZ-, le long de la direction d'engagement Z (figure 24).

On rétracte enfin les actionneurs de précharge 21, 22 en les escamotant dans leur module de tête 13, 23 respectif (figure 25), ici selon un mouvement de recul différentiel BM_21, BM_22 porté par la direction d'accouplement X.

On notera à ce titre que l'on pourrait, en variante, rétracter les actionneurs de précharge 21, 22 à l'intérieur des modules de tête 13, 23 avant de desserrer l'étreinte desdits modules de tête sur le module d'outillage 10, en procédant ainsi exactement dans l'ordre inverse des opérations de précharge et de serrage qui ont été mises en oeuvre lors de la séquence de fermeture.

Ceci étant, dans la mesure où la manoeuvre de dégagement des actionneurs de précharge 21, 22 oppose peu de résistance, contrairement à la manoeuvre d'engagement qui avait nécessité un effort important pour faire pénétrer lesdits actionneurs de précharge 21, 22 sous le module d'outillage 10 afin de soulever et contraindre ledit module d'outillage 10 selon la direction d'engagement Z, il est ici possible de dégager solidairement, d'un même mouvement de recul BM_13, BM_23, et donc simultanément, à la fois les modules de tête 13, 23 et les actionneurs de précharge 21, 22 pour les écarter du module d'outillage 10.

## Revendications

1. Procédé de mise en oeuvre d'une installation (1) d'extrusion destinée à réaliser un profilé (2), ladite installation d'extrusion comprenant un rouleau (3) qui est soutenu en rotation par au moins un premier palier (4), un module d'outillage (10) qui comprend une filière (11) destinée à venir coopérer avec le rouleau (3) pour former un entrefer (12) permettant de conformer le profilé (2), et au moins un premier module de tête (13) pourvu d'une première extrudeuse (14) qui est destinée à fournir au module d'outillage (10) un premier matériau constitutif du profilé, ledit procédé étant **caractérisé en ce qu'**il comporte :
- une étape (s1) d'engagement, au cours de laquelle on déplace le module d'outillage (10) par rapport au premier module de tête (13) et au premier palier (4) selon une première direction dite « direction d'engagement » (Z), de sorte à amener ledit module d'outillage (10) en appui contre le premier palier (4) et à soumettre ledit module d'outillage (10) à un effort de précharge (F_Z) qui est orienté selon la direction d'engagement (Z) et à l'encontre du premier palier (4), de manière à placer ledit module d'outillage (10) par rapport au rouleau (3) dans une configuration dite « configuration d'engagement » qui définit l'entrefer (12) souhaité pour réaliser le profilé (2),
- puis une étape (s2) de serrage, au cours de laquelle, tandis que ledit module d'outillage (10) se trouve dans sa configuration d'engagement, précontraint contre le premier palier (4) par l'effort de précharge (F_Z), on vient pincer ledit module d'outillage (10) entre le premier module de tête (13) pourvu de la première extrudeuse (14) et un second module de tête (23) distinct du premier module de tête (13), en rapprochant l'un de l'autre ledit premier module de tête (13) et le second module de tête (23), de part et d'autre du module d'outillage (10), selon une seconde direction (X) dite « direction d'accouplement » (X) qui est transverse à la direction d'engagement (Z), de préférence perpendiculaire à ladite direction d'engagement (Z), de sorte à mettre en communication la première extrudeuse (14) avec le module d'outillage (10), et en soumettant lesdits premier et second modules de tête (13, 23) à un effort de serrage (F_X) qui est orienté selon ladite direction d'accouplement (X), de sorte à maintenir le module d'outillage (10) par compression entre le premier et le second module de tête (13, 23).

2. Procédé selon la revendication 1 **caractérisé en ce que** l'étape (s1) d'engagement comprend une phase (s1_1) d'approche, au cours de laquelle on déplace le module d'outillage (10) selon la direction d'engagement (Z) jusqu'à ce que ledit module d'outillage (10) entre au contact d'une butée d'accostage (18) qui est solidaire du premier palier (4) et qui permet de stopper le module d'outillage (10) par rapport au rouleau (3) à une distance adaptée à l'entrefer (12) souhaité, puis une phase (s1_2) de précharge, au cours de laquelle on poursuit le mouvement (MZ+) du module d'outillage (10) afin d'entraîner le premier palier (4) solidairement avec le module d'outillage (10) selon cette même direction d'engagement (Z), jusqu'à ce que ledit premier palier (4) vienne buter en appui contre un premier organe de retenue (61), contre lequel le premier palier (4) se retrouve bloqué et contraint dans la direction d'engagement (Z) par l'effort de précharge (F_Z) qui est exercé par le module d'outillage (10) à l'encontre dudit premier palier (4) et du premier organe de retenue (61).

3. Procédé selon la revendication 2 **caractérisé en ce que** la distance (JZ) dite «jeu pour précharge » qui sépare initialement, avant l'exécution de la phase (s1_2) de précharge, le premier palier (4) du premier organe de retenue (61) selon la direction d'engagement (Z), et qui est parcourue par le premier palier (4) lors de ladite phase (s1_2) de précharge, est comprise entre 0,1 mm et 1 mm.

4. Procédé selon la revendication 2 ou 3 **caractérisé en ce que** le premier organe de retenue (61) est solidaire du premier module de tête (13).

5. Procédé selon l'une des revendications 2 à 4 **caractérisé en ce que** la phase (s1_2) de précharge s'effectue en soulevant le premier palier (4) au moyen du module d'outillage (10), et en maintenant le premier palier (4) plaqué contre le premier organe de retenue (61) à l'encontre de la gravité.

6. Procédé selon l'une des revendications précédentes, **caractérisé en ce que**, lors de l'étape (s1) d'engagement, l'effort de précharge (F_Z) qui contraint le module d'outillage (10) à l'encontre du premier palier (4), selon la direction d'engagement (Z), est généré au moyen d'au moins un actionneur de précharge (21, 22) qui vient à cet effet en prise contre ledit module d'outillage (10) au niveau d'au moins une zone d'accroche (70) prévue dans ledit module d'outillage, et **en ce que**, lors de l'étape (s2) de serrage, les premier et second modules de tête (13, 23) viennent en appui contre le module d'outillage (10), pour exercer l'effort de serrage (F_X), sur des portions dudit module d'outillage dites « faces réceptrices » (10A, 10B) qui se situent dans une zone intermédiaire (71) comprise entre ladite au moins une zone d'accroche (70) et le rouleau (3), et qui sont donc plus proches de l'entrefer (12) que ne l'est ladite au moins une zone d'accroche (70) sollicitée par ledit au moins un actionneur de précharge (21, 22).

7. Procédé selon l'une des revendications précédentes **caractérisé en ce que** l'effort de précharge (F_Z) est compris entre 300 kN et 1 500 kN.

8. Procédé selon l'une des revendications précédentes **caractérisé en ce que** l'intensité de l'effort de serrage (F_X) qui est mis en oeuvre selon la direction d'accouplement (X) est strictement supérieure, de préférence au moins trois fois supérieure, préférentiellement au moins cinq fois supérieure, voire au moins huit fois supérieure, à l'intensité de l'effort de précharge (F_Z) qui est mis en oeuvre pour contraindre le module d'outillage (10) contre le premier palier (4) selon la direction d'engagement (Z).

9. Installation (1) d'extrusion destinée à réaliser un profilé (2), ladite installation comprenant :
- un rouleau (3) qui est soutenu en rotation par au moins un premier palier (4),
- un module d'outillage (10) qui comprend une filière (11) destinée à venir coopérer avec le rouleau (3) pour former un entrefer (12) permettant de conformer le profilé,
- un premier module de tête (13) qui porte au moins une première extrudeuse (14) destinée à fournir un premier matériau constitutif du profilé (2), ladite installation (1) étant **caractérisée en ce qu'**elle comprend :
- un dispositif d'engagement (19), qui permet de déplacer le module d'outillage (10) par rapport au premier palier (4) et par rapport au premier module de tête (13) selon une première direction (Z), de préférence verticale, dite « direction d'engagement » (Z), de sorte à pouvoir alternativement soit rapprocher le module d'outillage (10) du rouleau (3) jusqu'à amener ledit module d'outillage (10) en appui contre une butée d'accostage (18) qui est solidaire du premier palier (4), et soumettre ledit module d'outillage (10) à un effort de précharge (F_Z) qui est orienté selon la direction d'engagement (Z) et à l'encontre de ladite butée d'accostage (18) et du premier palier (4), de manière à placer ledit module d'outillage (10) par rapport au rouleau (3) dans une configuration dite « configuration d'engagement » qui définit l'entrefer (12) souhaité pour réaliser le profilé, de préférence un entrefer (12) dont la hauteur (H12) considérée radialement par rapport au rouleau (3) est comprise entre 0,1 mm et 150 mm, soit au contraire éloigner ledit module d'outillage (10) du rouleau (3) et de la butée d'accostage (18) afin de placer ledit module d'outillage (10) dans une configuration de dégagement, distincte de la configuration d'engagement,
- un second module de tête (23),
- un dispositif d'accouplement (29) qui confère au premier module de tête (13) et/ou au second module de tête (23) une mobilité propre par rapport au premier palier (4) et par rapport au module d'outillage (10) selon une seconde direction (X) dite « direction d'accouplement » (X) qui est orientée transversalement à la direction d'engagement (Z), de préférence perpendiculairement à ladite direction d'engagement (Z), si bien que ledit dispositif d'accouplement (29) permet alternativement soit de rapprocher le premier module de tête (13) et le second module de tête (23) l'un de l'autre selon ladite direction d'accouplement (X), de part et d'autre du module d'outillage (10), lorsque ledit module d'outillage se trouve en configuration d'engagement, de sorte à mettre en communication la première extrudeuse (14) avec le module d'outillage (10) et à serrer ledit module d'outillage (10) entre le premier module de tête (13) et le second module de tête (23), dans une configuration dite « configuration de fermeture », soit au contraire d'éloigner le premier module de tête (13) du second module de tête (23) selon la direction d'accouplement (X), de sorte à dégager la première extrudeuse (14) du module d'outillage (10) et à libérer le module d'outillage (10) pour autoriser un déplacement dudit module d'outillage par rapport au premier palier (4) et par rapport aux premier et second modules de tête (13, 23) selon la direction d'engagement (Z).

10. Installation selon la revendication 9 **caractérisée en ce que** le premier palier (4) comprend une semelle (67), et **en ce que** le premier module de tête (13) comprend un premier organe de retenue (61), de préférence en forme de crochet, tandis que le second module de tête (23) comprend un second organe de retenue (66), de préférence en forme de crochet, lesdits premier et second organes de retenue (61, 66) étant agencés pour venir se placer en vis-à-vis de la semelle (67) du premier palier (4) afin de retenir et bloquer ledit premier palier (4) selon la direction d'engagement (Z), à l'encontre de l'effort de précharge (F_Z) exercé par le module d'outillage (10) sur ledit premier palier (4).

11. Installation selon la revendication 10 **caractérisée en ce que** le dispositif d'accouplement (29) permet, de préférence au moyen d'un premier chariot (30) guidé par un premier rail (31) selon la direction d'accouplement (X) et portant le premier module de tête (13) et d'un second chariot (40) guidé par un second rail (41) selon la direction d'accouplement (X) et portant le second module de tête (23), de rapprocher l'un de l'autre le premier module de tête (13), portant son premier organe de retenue (61), et le second module de tête (23), portant son second organe de retenue (66), jusqu'à une configuration dite « configuration de pré-positionnement », dans laquelle lesdits premiers et second modules de tête (13, 23) délimitent entre eux un passage pour le module d'outillage (10) et dans laquelle les premier et second organes de retenue (61, 66) viennent se placer en vis-à-vis de la semelle (67) du premier palier (4) selon la direction d'engagement (Z), à une distance non nulle de ladite semelle (67) selon ladite direction d'engagement, dite « jeu pour précharge » (JZ), lequel jeu pour précharge (JZ) est de préférence compris entre 0,1 et 1 mm, **en ce que** le dispositif d'engagement (19) est conçu pour déplacer, de préférence au moyen d'un ascenseur (20), le module d'outillage (10) selon la direction d'engagement (Z) à travers le passage délimité par les premier et second modules de tête (13, 23) jusqu'à ce que ledit module d'outillage (10) entre en contact avec la butée d'accostage (18) solidaire du premier palier (4), puis pour poursuivre, de préférence au moyen d'au moins un actionneur de précharge (21, 22) pourvu d'une rampe (21A, 22A) venant s'engager en appui contre le module d'outillage (10) transversalement à la direction d'engagement (Z), le déplacement dudit module d'outillage (10) en entraînant solidairement le premier palier (4) avec ledit module d'outillage (10) selon cette même direction d'engagement (Z) jusqu'à ce que la semelle (67) dudit premier palier (4) vienne buter contre le premier et le second organe de retenue (61, 66), rattrapant ainsi le jeu pour précharge (JZ) et plaçant ainsi le module d'outillage (10) en configuration d'engagement, et **en ce que** le dispositif d'accouplement (29) est également agencé pour pouvoir ensuite rapprocher davantage les premier et second modules de tête (13, 23) l'un de l'autre selon la direction d'accouplement, à l'encontre du module d'outillage (10), pour placer lesdits premier et second modules de tête (13, 23) dans la configuration de fermeture.

12. Installation selon la revendication 10 ou 11 **caractérisée en ce qu'**elle comprend au moins un organe stabilisateur latéral (72), distinct des premier et second modules de tête, par exemple un coin monté mobile selon une troisième direction (Y) qui est transverse à la première direction d'engagement (Z) et à la seconde direction d'accouplement (X), ledit organe stabilisateur latéral (72) étant agencé pour, en configuration de fermeture, être engagé en force entre la semelle (67) du premier palier (4) et au moins l'un des premier et second modules de tête (13, 23), de préférence au creux de l'un au moins des premier et second organes de retenue (61, 66), de sorte à bloquer et contraindre le premier palier (4) selon la direction d'accouplement (X), transverse à la direction d'engagement (Z), à l'encontre des premier et second modules de tête (13, 23) qui enserrent le module d'outillage (10).

13. Installation selon l'une des revendications 9 à 12 **caractérisée en ce que** le module d'outillage (10) est délimité, selon la direction d'accouplement (X), par une première face réceptrice (10A) contre laquelle le premier module de tête (13) est destiné à venir en appui en configuration de fermeture pour mettre la première extrudeuse (14) en communication avec le module d'outillage (10) et appliquer un effort de serrage (F_Z) et par une seconde face réceptrice (10B) contre laquelle le second module de tête (23) est destiné à venir en appui en configuration de fermeture pour appliquer l'effort de serrage (F_Z), et **en ce que** lesdites première et seconde faces réceptrices (10A, 10B) sont planes et présentent chacune une orientation, par rapport à la direction d'engagement (Z), qui est telle que l'angle d'inclinaison entre la face réceptrice (10A, 10B) concernée et la direction d'engagement (Z) est inférieur à 10 degrés, de préférence inférieur à 5 degrés, et de préférence nul, de sorte que lesdites première et seconde faces réceptrices (10A, 10B) sont sensiblement voire de préférence exactement parallèles entre elles et sensiblement voire exactement parallèles à la direction d'engagement (Z), et **en ce que** la direction d'accouplement (X) forme un angle compris entre 70 degrés et 110 degrés, de préférence entre 80 degrés et 100 degrés, et encore plus préférentiellement égal à 90 degrés, par rapport à la direction d'engagement (Z), et plus préférentiellement par rapport auxdites première et seconde surfaces réceptrices (10A, 10B).

14. Installation selon l'une des revendications 9 à 13 **caractérisée en ce que** la première extrudeuse (14) comprend au moins une vis (15) entraînée en rotation autour de son axe longitudinal (X15) dans un fourreau (16), et **en ce que** ledit axe longitudinal (X15) est parallèle à la direction d'accouplement (X) à +/- 10 degrés, de préférence à +/- 5 degrés, et plus préférentiellement exactement parallèle à ladite direction d'accouplement (X).

15. Installation selon l'une des revendications 9 à 14 **caractérisée en ce que** le dispositif d'accouplement (29) comprend un mécanisme de verrouillage (50) comportant un premier mors (51) et un second mors (52) qui sont montés mobiles selon une troisième direction (Y) qui est transverse, et de préférence perpendiculaire, à la première direction d'engagement (Z) et transverse, et de préférence perpendiculaire, à la seconde direction d'accouplement (X), et qui sont agencés de sorte à, lorsque le module d'outillage (10) se trouve en configuration d'engagement, pouvoir se rapprocher l'un de l'autre, de part et d'autre du module d'outillage (10), selon ladite troisième direction, de manière à venir en prise chacun avec d'une part le premier module de tête (13) et d'autre part le second module de tête (23) de sorte à forcer le rapprochement mutuel et le serrage, selon la direction d'accouplement (X), desdits premier et second modules de tête (13, 23) à l'encontre du module d'outillage (10), afin de placer l'installation (1) en configuration de fermeture.

## Patentansprüche

1. Verfahren zum Betrieb einer Extrusionsanlage (1), die dazu bestimmt ist, ein Profil (2) herzustellen, wobei die Extrusionsanlage eine Walze (3), die durch mindestens ein erstes Lager (4) drehbar gehalten wird, ein Werkzeugmodul (10), das eine Düse (11) umfasst, die dazu bestimmt ist, mit der Walze (3) zusammenzuwirken, um einen Spalt (12) zu bilden, der es ermöglicht, das Profil (2) zu verformen, und mindestens ein erstes Kopfmodul (13), das mit einem ersten Extruder (14) versehen ist, der dazu bestimmt ist, dem Werkzeugmodul (10) einen ersten Materialbestandteil des Profils zu liefern, umfasst, wobei das Verfahren **dadurch gekennzeichnet ist, dass** es umfasst:
- einen Schritt (s1) des Ineingriffbringens, in dem das Werkzeugmodul (10) bezüglich des ersten Kopfmoduls (13) und des ersten Lagers (4) in eine erste Richtung bewegt wird, "Eingriffsrichtung" (Z) genannt, um das Werkzeugmodul (10) zur Anlage am ersten Lager (4) zu bringen und auf das Werkzeugmodul (10) eine Vorbelastungskraft (F_Z) auszuüben, die in die Eingriffsrichtung (Z) und gegen das erste Lager (4) gerichtet ist, um so das Werkzeugmodul (10) bezüglich der Walze (3) in einer "Eingriffskonfiguration" genannten Konfiguration anzuordnen, die den gewünschten Spalt (12) definiert, um das Profil (2) herzustellen,
- danach einen Schritt (s2) des Festspannens, in dem, während sich das Werkzeugmodul (10) in seiner Eingriffskonfiguration befindet und durch die Vorbelastungskraft (F_Z) gegen das erste Lager (4) vorbeaufschlagt ist, das Werkzeugmodul (10) zwischen dem ersten Kopfmodul (13), das mit dem ersten Extruder (14) versehen ist, und einem von dem ersten Kopfmodul (13) verschiedenen zweiten Kopfmodul (23) festgeklemmt wird, indem das erste Kopfmodul (13) und das zweite Kopfmodul (23) beiderseits des Werkzeugmoduls (10) in einer zweiten Richtung (X), "Kopplungsrichtung" (X) genannt, einander genähert werden, welche quer zur Eingriffsrichtung (Z) und vorzugsweise senkrecht zur Eingriffsrichtung (Z) verläuft, um den ersten Extruder (14) mit dem Werkzeugmodul (10) in Verbindung zu bringen, und indem auf das erste und das zweite Kopfmodul (13, 23) eine Spannkraft (F_X) ausgeübt wird, die in die Kopplungsrichtung (X) gerichtet ist, um das Werkzeugmodul (10) durch Zusammendrücken zwischen dem ersten und dem zweiten Kopfmodul (13, 23) zu halten.

2. Verfahren nach Anspruch 1, **dadurch gekennzeichnet, dass** der Schritt (s1) des Ineingriffbringens eine Phase (s1_1) der Annäherung umfasst, in der das Werkzeugmodul (10) in die Eingriffsrichtung (Z) bewegt wird, bis das Werkzeugmodul (10) mit einem Anlegeanschlag (18) in Kontakt kommt, der mit dem ersten Lager (4) fest verbunden ist und der es ermöglicht, das Werkzeugmodul (10) bezüglich der Walze (3) in einem an den gewünschten Spalt (12) angepassten Abstand zu stoppen, und danach eine Phase (s1_2) der Vorbelastung, in der die Bewegung (MZ+) des Werkzeugmoduls (10), um das mit dem Werkzeugmodul (10) fest verbundene erste Lager (4) mitzunehmen, in dieser gleichen Eingriffsrichtung (Z) fortgesetzt wird, bis das erste Lager (4) an einem ersten Halteorgan (61) zur Anlage kommt, an dem das erste Lager (4) dann blockiert ist und gegen das es in der Eingriffsrichtung (Z) durch die Vorbelastungskraft (F_Z) beaufschlagt wird, die von dem Werkzeugmodul (10) auf das erste Lager (4) und das erste Halteorgan (61) ausgeübt wird.

3. Verfahren nach Anspruch 2, **dadurch gekennzeichnet, dass** die "Vorbelastungsspiel" genannte Entfernung (JZ), die ursprünglich, vor der Ausführung der Phase (s1_2) der Vorbelastung, das erste Lager (4) von dem Halteorgan (61) in der Eingriffsrichtung (Z) trennt und die von dem ersten Lager (4) während der Phase (s1_2) der Vorbelastung zurückgelegt wird, zwischen 0,1 mm und 1 mm liegt.

4. Verfahren nach Anspruch 2 oder 3, **dadurch gekennzeichnet, dass** das erste Halteorgan (61) mit dem ersten Kopfmodul (13) fest verbunden ist.

5. Verfahren nach einem der Ansprüche 2 bis 4, **dadurch gekennzeichnet, dass** die Phase (s1_2) der Vorbelastung durchgeführt wird, indem das erste Lager (4) mittels des Werkzeugmoduls (10) angehoben wird und indem das erste Lager (4) entgegen der Schwerkraft an das erste Halteorgan (61) angedrückt wird.

6. Verfahren nach einem der vorhergehenden Ansprüche, **dadurch gekennzeichnet, dass** im Schritt (s1) des Ineingriffbringens die Vorbelastungskraft (F_Z), die das Werkzeugmodul (10) gegen das erste Lager (4) in der Eingriffsrichtung (Z) beaufschlagt, mittels mindestens eines Vorbelastungsaktuators (21, 22) erzeugt wird, der zu diesem Zweck mit dem Werkzeugmodul (10) an mindestens einem in dem Werkzeugmodul vorgesehenen Kupplungsbereich (70) in Eingriff gelangt, und dadurch, dass im Schritt (s2) des Festspannens das erste und das zweite Kopfmodul (13, 23) an dem Werkzeugmodul (10) zur Anlage kommen, um die Spannkraft (F_X) auf "Aufnahmeflächen" genannte Abschnitte (10A, 10B) des Werkzeugmoduls auszuüben, die sich in einem Zwischenbereich (71) zwischen dem mindestens einen Kupplungsbereich (70) und der Walze (3) befinden und die daher dem Spalt (12) näher sind, als es der mindestens eine Kupplungsbereich (70) ist, der von dem mindestens einen Vorbelastungsaktuator (21, 22) beaufschlagt wird.

7. Verfahren nach einem der vorhergehenden Ansprüche, **dadurch gekennzeichnet, dass** die Vorbelastungskraft (F_Z) zwischen 300 kN und 1500 kN liegt.

8. Verfahren nach einem der vorhergehenden Ansprüche, **dadurch gekennzeichnet, dass** die Stärke der Spannkraft (F_X), die in der Kopplungsrichtung (X) ausgeübt wird, streng größer, vorzugsweise mindestens dreimal so groß, bevorzugt mindestens fünfmal so groß oder sogar mindestens achtmal so groß wie die Stärke der Vorbelastungskraft (F_Z) ist, die ausgeübt wird, um das Werkzeugmodul (10) gegen das erste Lager (4) in der Eingriffsrichtung (Z) zu beaufschlagen.

9. Extrusionsanlage (1), welche dazu bestimmt ist, ein Profil (2) herzustellen, wobei die Anlage umfasst:
- eine Walze (3), die durch mindestens ein erstes Lager (4) drehbar gehalten wird,
- ein Werkzeugmodul (10), das eine Düse (11) umfasst, die dazu bestimmt ist, mit der Walze (3) zusammenzuwirken, um einen Spalt (12) zu bilden, der es ermöglicht, das Profil zu verformen,
- ein erstes Kopfmodul (13), das mindestens einen ersten Extruder (14) trägt, der dazu bestimmt ist, einen ersten Materialbestandteil des Profils (2) zu liefern, wobei die Anlage (1) **dadurch gekennzeichnet ist, dass** sie umfasst:
- eine Eingriffsvorrichtung (19), die es ermöglicht, das Werkzeugmodul (10) bezüglich des ersten Lagers (4) und bezüglich des ersten Kopfmoduls (13) in eine erste, vorzugsweise vertikale Richtung (Z) zu bewegen, "Eingriffsrichtung" (Z) genannt, um alternativ entweder das Werkzeugmodul (10) der Walze (3) nähern zu können, bis das Werkzeugmodul (10) an einem Anlegeanschlag (18) zur Anlage gebracht wird, der mit dem ersten Lager (4) fest verbunden ist, und auf das Werkzeugmodul (10) eine Vorbelastungskraft (F_Z) auszuüben, die in die Eingriffsrichtung (Z) und gegen den Anlegeanschlag (18) und das erste Lager (4) gerichtet ist, um so das Werkzeugmodul (10) bezüglich der Walze (3) in einer "Eingriffskonfiguration" genannten Konfiguration anzuordnen, die den gewünschten Spalt (12) definiert, um das Profil herzustellen, vorzugsweise einen Spalt (12), dessen radial bezüglich der Walze (3) betrachtete Höhe (H12) zwischen 0,1 mm und 150 mm liegt, oder im Gegenteil das Werkzeugmodul (10) von der Walze (3) und dem Anlegeanschlag (18) zu entfernen, um das Werkzeugmodul (10) in einer Nichteingriffskonfiguration anzuordnen, die von der Eingriffskonfiguration verschieden ist,
- ein zweites Kopfmodul (23),
- eine Kopplungsvorrichtung (29), die dem ersten Kopfmodul (13) und/oder dem zweiten Kopfmodul (23) eine eigene Beweglichkeit bezüglich des ersten Lagers (4) und bezüglich des Werkzeugmoduls (10) in einer zweiten Richtung (X), "Kopplungsrichtung" (X) genannt, verleiht, die quer zur Eingriffsrichtung (Z) und vorzugsweise senkrecht zu dieser Eingriffsrichtung (Z) verläuft, so dass die Kopplungsvorrichtung (29) ermöglicht, alternativ entweder das erste Kopfmodul (13) und das zweite Kopfmodul (23) beiderseits des Werkzeugmoduls (10) in der Kopplungsrichtung (X) einander zu nähern, wenn sich das Werkzeugmodul in der Eingriffskonfiguration befindet, um den ersten Extruder (14) mit dem Werkzeugmodul (10) in Verbindung zu bringen und das Werkzeugmodul (10) zwischen dem ersten Kopfmodul (13) und dem zweiten Kopfmodul (23) in einer "Schließkonfiguration" genannten Konfiguration festzuspannen, oder im Gegenteil das erste Kopfmodul (13) vom zweiten Kopfmodul (23) in der Kopplungsrichtung (X) zu entfernen, um den ersten Extruder (14) von dem Werkzeugmodul (10) zu lösen und um das Werkzeugmodul (10) freizugeben, um eine Bewegung des Werkzeugmoduls bezüglich des ersten Lagers (4) und bezüglich des ersten und des zweiten Kopfmoduls (13, 23) in der Eingriffsrichtung (Z) zu ermöglichen.

10. Anlage nach Anspruch 9, **dadurch gekennzeichnet, dass** das erste Lager (4) eine Sohle (67) umfasst, und dadurch, dass das erste Kopfmodul (13) ein erstes Halteorgan (61) umfasst, vorzugsweise in Hakenform, während das zweite Kopfmodul (23) ein zweites Halteorgan (66) umfasst, vorzugsweise in Hakenform, wobei das erste und das zweite Halteorgan (61, 66) dazu eingerichtet sind, sich gegenüber der Sohle (67) des ersten Lagers (4) zu positionieren, um das erste Lager (4) in der Eingriffsrichtung (Z) entgegen der Vorbelastungskraft (F_Z), die von dem Werkzeugmodul (10) auf das erste Lager (4) ausgeübt wird, zu halten und zu blockieren.

11. Anlage nach Anspruch 10, **dadurch gekennzeichnet, dass** die Kopplungsvorrichtung (29) ermöglicht, vorzugsweise mittels eines ersten Schlittens (30), der von einer ersten Schiene (31) in der Kopplungsrichtung (X) geführt wird und das erste Kopfmodul (13) trägt, und eines zweiten Schlittens (40), der von einer zweiten Schiene (41) in der Kopplungsrichtung (X) geführt wird und das zweite Kopfmodul (23) trägt, das erste Kopfmodul (13), das sein erstes Halteorgan (61) trägt, und das zweite Kopfmodul (23), das sein zweites Halteorgan (66) trägt, einander bis zu einer "Vorpositionierungskonfiguration" genannten Konfiguration zu nähern, in der das erste und das zweite Kopfmodul (13, 23) zwischen sich einen Durchgang für das Werkzeugmodul (10) begrenzen und in der das erste und das zweite Halteorgan (61, 66) sich gegenüber der Sohle (67) des ersten Lagers (4) in der Eingriffsrichtung (Z) positionieren, in einer von null verschiedenen Entfernung von der Sohle (67) in der Eingriffsrichtung, "Vorbelastungsspiel" (JZ) genannt, wobei dieses Vorbelastungsspiel (JZ) vorzugsweise zwischen 0,1 mm und 1 mm liegt, dadurch, dass die Eingriffsvorrichtung (19) dazu ausgebildet ist, das Werkzeugmodul (10), vorzugsweise mittels eines Aufzugs (20), in der Eingriffsrichtung (Z) durch den von dem ersten und dem zweiten Kopfmodul (13, 23) begrenzten Durchgang hindurch zu bewegen, bis das Werkzeugmodul (10) mit dem Anlegeanschlag (18) in Kontakt kommt, der mit dem ersten Lager (4) fest verbunden ist, und danach, vorzugsweise mittels eines Vorbelastungsaktuators (21, 22), der mit einer Rampe (21A, 22A) versehen ist, die am Werkzeugmodul (10) quer zur Eingriffsrichtung (Z) zur Anlage kommt, die Bewegung des Werkzeugmoduls (10) fortzusetzen und dabei in fester Verbindung das erste Lager (4) mit dem Werkzeugmodul (10) in derselben Eingriffsrichtung (Z) mitzunehmen, bis die Sohle (67) des ersten Lagers (4) an das erste und das zweite Halteorgan (61, 66) anstößt, wodurch das Vorbelastungsspiel (JZ) beseitigt wird und wodurch das Werkzeugmodul (10) in der Eingriffskonfiguration angeordnet wird, und dadurch, dass die Kopplungsvorrichtung (29) außerdem dazu eingerichtet ist, anschließend das erste und das zweite Kopfmodul (13, 23) in der Kopplungsrichtung einander weiter nähern zu können, gegen das Werkzeugmodul (10), um das erste und das zweite Kopfmodul (13, 23) in der Schließkonfiguration anzuordnen.

12. Anlage nach Anspruch 10 oder 11, **dadurch gekennzeichnet, dass** sie mindestens ein seitliches Stabilisierungsorgan (72) umfasst, das vom ersten und zweiten Kopfmodul verschieden ist, zum Beispiel einen Keil, der in einer dritten Richtung (Y) beweglich angebracht ist, die quer zur ersten Eingriffsrichtung (Z) und zur zweiten Kopplungsrichtung (X) verläuft, wobei das seitliche Stabilisierungsorgan (72) dazu eingerichtet ist, in der Schließkonfiguration zwischen der Sohle (67) des ersten Lagers (4) und dem ersten und/oder zweiten Kopfmodul (13, 23) mit Kraft in Eingriff gebracht zu werden, vorzugsweise an der Ausnehmung des ersten und/oder zweiten Halteorgans (61, 66), um das erste Lager (4) in der Kopplungsrichtung (X), quer zur Eingriffsrichtung (Z), gegen das erste und das zweite Kopfmodul (13, 23), die das Werkzeugmodul (10) umschließen, zu blockieren und zu beaufschlagen.

13. Anlage nach einem der Ansprüche 9 bis 12, **dadurch gekennzeichnet, dass** das Werkzeugmodul (10) in der Kopplungsrichtung (X) von einer ersten Aufnahmefläche (10A) begrenzt wird, an der das erste Kopfmodul (13) in der Schließkonfiguration zur Anlage zu kommen bestimmt ist, um den ersten Extruder (14) mit dem Werkzeugmodul (10) in Verbindung zu bringen und eine Spannkraft (F_Z) auszuüben, und von einer zweiten Aufnahmefläche (10B), an der das zweite Kopfmodul (23) in der Schließkonfiguration zur Anlage zu kommen bestimmt ist, um die Spannkraft (F_Z) auszuüben, und dadurch, dass die erste und die zweite Aufnahmefläche (10A, 10B) eben sind und jeweils eine Ausrichtung bezüglich der Eingriffsrichtung (Z) aufweisen, die so beschaffen ist, dass der Neigungswinkel zwischen der betreffenden Aufnahmefläche (10A, 10B) und der Eingriffsrichtung (Z) kleiner als 10 Grad, vorzugsweise kleiner als 5 Grad und vorzugsweise gleich null ist, so dass die erste und die zweite Aufnahmefläche (10A, 10B) im Wesentlichen oder vorzugsweise sogar exakt parallel zueinander sind und im Wesentlichen oder sogar exakt parallel zur Eingriffsrichtung (Z) sind, und dadurch, dass die Kopplungsrichtung (X) einen Winkel zwischen 70 Grad und 110 Grad, vorzugsweise zwischen 80 Grad und 100 Grad und noch stärker bevorzugt von 90 Grad bezüglich der Eingriffsrichtung (Z) und stärker bevorzugt bezüglich der ersten und zweiten Aufnahmefläche (10A, 10B) bildet.

14. Anlage nach einem der Ansprüche 9 bis 13, **dadurch gekennzeichnet, dass** der erste Extruder (14) mindestens eine Schnecke (15) umfasst, die in einer Hülse (16) um ihre Längsachse (X15) drehend angetrieben wird, und dadurch, dass die Längsachse (X15) zur Kopplungsrichtung (X) auf +/- 10 Grad genau, vorzugsweise auf +/- 5 Grad genau parallel ist und stärker bevorzugt exakt parallel zur Kopplungsrichtung (X) ist.

15. Anlage nach einem der Ansprüche 9 bis 14, **dadurch gekennzeichnet, dass** die Kopplungsvorrichtung (29) einen Verriegelungsmechanismus (50) umfasst, der eine erste Spannbacke (51) und eine zweite Spannbacke (52) aufweist, die in einer dritten Richtung (Y) beweglich angebracht sind, die quer und vorzugsweise senkrecht zur ersten Eingriffsrichtung (Z) verläuft und quer und vorzugsweise senkrecht zur zweiten Kopplungsrichtung (X) verläuft, und die so angeordnet sind, dass sie, wenn sich das Werkzeugmodul (10) in der Eingriffskonfiguration befindet, sich beiderseits des Werkzeugmoduls (10) in der dritten Richtung einander näher können, so dass sie jeweils mit einerseits dem ersten Kopfmodul (13) und andererseits dem zweiten Kopfmodul (23) in Eingriff kommen, um die gegenseitige Annäherung und das Anpressen, in der Kopplungsrichtung (X), des ersten und des zweiten Kopfmoduls (13, 23) an das Werkzeugmodul (10) zu erzwingen, um die Anlage (1) in der Schließkonfiguration anzuordnen.

## Claims

1. Method for implementing an extrusion facility (1) intended for the production of a profiled element (2), said extrusion facility comprising a roller (3) which is supported rotatably by at least a first bearing (4), a tool module (10) which comprises a die (11) intended to interact with the roller (3) so as to form an air gap (12) allowing the profiled element (2) to be shaped, and at least a first head module (13) having a first extruder (14) which is intended to supply the tool module (10) with a first constituent material of the profiled element, said method being **characterized in that** it comprises:
- an engagement step (s1), during which the tool module (10) is moved relative to the first head module (13) and to the first bearing (4) in a first direction referred to as the "engagement direction" (Z), in such a way as to bring said tool module (10) into abutment against the first bearing (4) and to subject said tool module (10) to a preload force (F_Z) which is oriented in the engagement direction (Z) and counter to the first bearing (4), in such a way as to place said tool module (10) relative to the roller (3) in a configuration referred to as the "engagement configuration" which defines the desired air gap (12) for producing the profiled element (2),
- then a clamping step (s2), during which, while said tool module (10) is in its engagement configuration, prestressed against the first bearing (4) by the preload force (F_Z), said tool module (10) is clamped between the first head module (13) having the first extruder (14) and a second head module (23) distinct from the first head module (13), by moving said first head module (13) and the second head module (23) towards one another, on either side of the tool module (10), in a second direction (X) referred to as the "coupling direction" (X) which is transverse to the engagement direction (Z), preferably perpendicular to said engagement direction (Z), in such a way as to place the first extruder (14) in communication with the tool module (10), and by subjecting said first and second head modules (13, 23) to a clamping force (F_X) which is oriented in said coupling direction (X), in such a way as to hold the tool module (10) by compression between the first and second head modules (13, 23).

2. Method according to Claim 1, **characterized in that** the engagement step (s1) comprises an approach phase (s1_1), during which the tool module (10) is moved in the engagement direction (Z), until said tool module (10) comes into contact with a docking stop (18) which is rigidly secured to the first bearing (4) and which makes it possible to stop the tool module (10) relative to the roller (3) at a distance adapted to the desired air gap (12), then a preloading phase (s1_2), during which the movement (MZ+) of the tool module (10) is continued in order to drive the first bearing (4) together with the tool module (10) in this same engagement direction (Z), until said first bearing (4) comes into abutment against a first retaining member (61), against which the first bearing (4) is blocked and urged in the engagement direction (Z) by the preload force (F_Z) which is exerted by the tool module (10) against said first bearing (4) and the first retaining member (61).

3. Method according to Claim 2, **characterized in that** the distance (JZ) referred to as the "preload clearance", which initially separates the first bearing (4) from the first retaining member (61) in the engagement direction (Z), before the execution of the preloading phase (s1_2), and which is travelled by the first bearing (4) during said preloading phase (s1_2), is between 0.1 mm and 1 mm.

4. Method according to Claim 2 or 3, **characterized in that** the first retaining member (61) is rigidly secured to the first head module (13).

5. Method according to one of Claims 2 to 4, **characterized in that** the preloading phase (s1_2) is carried out by raising the first bearing (4) by means of the tool module (10), and keeping the first bearing (4) pressed against the first retaining member (61), in opposition to gravity.

6. Method according to one of the preceding claims, **characterized in that**, during the engagement step (s1), the preload force (F_Z) which urges the tool module (10) against the first bearing (4), in the engagement direction (Z), is generated by means of at least one preloading actuator (21, 22) which engages for this purpose against said tool module (10) in at least one gripping region (70) provided on said tool module (10), and **in that**, during the clamping step (s2), the first and second head modules (13, 23) come into abutment against the tool module (10), so as to exert the clamping force (F_X), on portions of said tool module referred to as "receiving faces" (10A, 10B) which are located in an intermediate region (71) which is between said at least one gripping region (70) and the roller (3), and which are therefore closer to the air gap (12) than said at least one gripping region (70) urged by said at least one preloading actuator (21, 22).

7. Method according to one of the preceding claims, **characterized in that** the preload force (F_Z) is between 300 kN and 1,500 kN.

8. Method according to one of the preceding claims, **characterized in that** the intensity of the clamping force (F_X) which is implemented in the coupling direction (X) is strictly greater, preferably at least three times greater, preferably at least five times greater, or even at least eight times greater, than the intensity of the preload force (F_Z) which is implemented to urge the tool module (10) against the first bearing (4) in the engagement direction (Z).

9. Extrusion facility (1) intended for the production of a profiled element (2), said facility comprising:
- a roller (3) which is supported rotatably by at least a first bearing (4),
- a tool module (10) which comprises a die (11) intended to interact with the roller (3) so as to form an air gap (12) allowing the profiled element to be shaped,
- a first head module (13) which carries at least a first extruder (14) intended to supply a first constituent material of the profiled element (2),
said facility (1) being **characterized in that** it comprises:
- an engagement device (19), which makes it possible to move the tool module (10) relative to the first bearing (4) and relative to the first head module (13) in a first direction (Z), preferably vertical, referred to as the "engagement direction" (Z), in such a way as to be able alternatively to either bring the tool module (10) towards the roller (3) until said tool module (10) is in abutment against a docking stop (18) which is rigidly secured to the first bearing (4), and subject said tool module (10) to a preload force (F_Z) which is oriented in the engagement direction (Z) and counter to said docking stop (18) and the first bearing (4), in such a way as to place said tool module (10) relative to the roller (3) in a configuration referred to as the "engagement configuration" which defines the desired air gap (12) for producing the profiled element, preferably an air gap (12) of which the height (H12) considered radially relative to the roller (3) is between 0.1 mm and 150 mm, or conversely move said tool module (10) away from the roller (3) and from the docking stop (18) in order to place said tool module (10) in a disengagement configuration, distinct from the engagement configuration,
- a second head module (23),
- a coupling device (29) which gives the first head module (13) and/or the second head module (23) its own mobility relative to the first bearing (4) and relative to the tool module (10) in a second direction (X) referred to as the "coupling direction" (X) which is oriented transversely to the engagement direction (Z), preferably perpendicularly to said engagement direction (Z), so that said coupling device (29) makes it possible alternatively either to bring the first head module (13) and the second head module (23) towards one another in said coupling direction (X), on either side of the tool module (10), when said tool module is in the engagement configuration, in such a way as to place the first extruder (14) in communication with the tool module (10) and to clamp said tool module (10) between the first head module (13) and the second head module (23), in a configuration referred to as the "closed configuration", or conversely to move the first head module (13) away from the second head module (23) in the coupling direction (X), in such a way as to disengage the first extruder (14) from the tool module (10) and to release the tool module (10) to allow a movement of said tool module relative to the bearing (4) and relative to the first and second head modules (13, 23) in the engagement direction (Z).

10. Facility according to Claim 9, **characterized in that** the first bearing (4) comprises a base (67), and **in that** the first head module (13) comprises a first retaining member (61), preferably in the form of a hook, while the second head module (23) comprises a second retaining member (66), preferably in the form of a hook, said first and second retaining members (61, 66) being arranged to take up a position opposite the base (67) of the first bearing (4) in order to retain and block said first bearing (4) in the engagement direction (Z), against the preload force (F_Z) exerted by the tool module (10) on said first bearing (4).

11. Facility according to Claim 10, **characterized in that** the coupling device (29) allows, preferably by means of a first carriage (30) guided by a first rail (31) in the coupling direction (X) and carrying the first head module (13) and a second carriage (40) guided by a second rail (41) in the coupling direction (X) and carrying the second head module (23), the first head module (13), carrying its first retaining member (61), and the second head module (23), carrying its second retaining member (66), to move towards one another into a configuration referred to as the "pre-positioning configuration", in which said first and second head modules (13, 23) delimit between them a passage for the tool module (10) and in which the first and second retaining members (61, 66) take up a position opposite the base (67) of the first bearing (4) in the engagement direction (Z), at a non-zero distance from said base (67) in said engagement direction, referred to as the "preload clearance" (JZ), which preload clearance (JZ) is preferably between 0.1 mm and 1 mm, **in that** the engagement device (19) is designed to move the tool module (10) in the engagement direction (Z), preferably by means of a lift (20), through the passage delimited by the first and second head modules (13, 23), until said tool module (10) comes into contact with the docking stop (18) rigidly secured to the first bearing (4), then continue the movement of said tool module (10), preferably by means of at least one preloading actuator (21, 22) having a ramp (21A, 22A) which engages in abutment against the tool module (10) transversely to the engagement direction (Z), by driving the first bearing (4) together with said tool module (10) in this same engagement direction (Z) until the base (67) of said first bearing (4) comes into abutment against the first and second retaining members (61, 66), thus eliminating the preload clearance (JZ) and thus placing the tool module (10) in the engagement configuration, and **in that** the coupling device (29) is also designed to be able to then bring the first and second head modules (13, 23) closer to one another in the coupling direction, against the tool module (10), so as to place said first and second head modules (13, 23) in the closed configuration.

12. Facility according to Claim 10 or 11, **characterized in that** it comprises at least one lateral stabilizing member (72), distinct from the first and second head modules, for example a wedge mounted movably in a third direction (Y) which is transverse to the first engagement direction (Z) and to the second coupling direction (X), said lateral stabilizing member (72) being arranged so as to be, in the closed configuration, engaged by force between the base (67) of the first bearing (4) and at least one of the first and second head modules (13, 23), preferably in the cavity of at least one of the first and second retaining members (61, 66), in such a way as to block and urge the first bearing (4) in the coupling direction (X), transverse to the engagement direction (Z), against the first and second head modules (13, 23) which clamp the tool module (10).

13. Facility according to one of Claims 9 to 12, **characterized in that** the tool module (10) is delimited, in the coupling direction (X), by a first receiving face (10A) against which the first head module (13) is intended to come into abutment in the closed configuration so as to place the first extruder (14) in communication with the tool module (10) and apply a clamping force (F_X), and by a second receiving face (10B) against which the second head module (23) is intended to come into abutment in the closed configuration so as to apply the clamping force (F_X), and **in that** said first and second receiving faces (10A, 10B) are flat and each has an orientation, with respect to the engagement direction (Z), which is such that the angle of inclination between the receiving face (10A, 10B) concerned and the engagement direction (Z) is less than 10 degrees, preferably less than 5 degrees, and preferably zero, such that said first and second receiving faces (10A, 10B) are substantially or even preferably exactly parallel to one another and substantially or even exactly parallel to the engagement direction (Z), and **in that** the coupling direction (X) forms an angle of between 70 degrees and 110 degrees, preferably between 80 degrees and 100 degrees, and even more preferably equal to 90 degrees, with respect to the engagement direction (Z), and more preferably with respect to said first and second receiving surfaces (10A, 10B).

14. Facility according to one of Claims 9 to 13, **characterized in that** the first extruder (14) comprises at least one screw (15) rotated about its longitudinal axis (X15) in a sleeve (16), and **in that** said longitudinal axis (X15) is parallel to the coupling direction (X) to within +/- 10 degrees, preferably +/- 5 degrees, and more preferably exactly parallel to said coupling direction (X).

15. Facility according to one of Claims 9 to 14, **characterized in that** the coupling device (29) comprises a locking mechanism (50) comprising a first jaw (51) and a second jaw (52) which are mounted movably in a third direction (Y) which is transverse, and preferably perpendicular, to the first engagement direction (Z) and transverse, and preferably perpendicular, to the second coupling direction (X), and which are arranged such that, when the tool module (10) is in the engagement configuration, they may move towards one another, on either side of the tool module (10), in said third direction, in such a way as to each come into engagement with the first head module (13) on the one hand and the second head module (23) on the other hand, in such a way as to force said first and second head modules (13, 23) to move towards one another and clamp, in the coupling direction (X), against the tool module (10), in order to place the facility (1) in the closed configuration.
